(19) 

Europäisches
Patentamt
European
Patent Office
Office européen
des brevets

(11) **EP 4 699 991 A1**

(12) **EUROPEAN PATENT APPLICATION**
published in accordance with Art. 153(4) EPC

(43) Date of publication:
**25.02.2026  Bulletin 2026/09**

(21) Application number: 24936496.9

(22) Date of filing: **07.06.2024**

(51) International Patent Classification (IPC):
**C03C 4/04** (2006.01)     **C03C 10/04** (2006.01)
**C03C 3/083** (2006.01)     **C03B 27/03** (2006.01)

(52) Cooperative Patent Classification (CPC):
**C03B 32/02; C03C 3/083; C03C 4/04; C03C 10/00;**
C03B 27/03

(86) International application number:
**PCT/CN2024/097994**

(87) International publication number:
**WO 2025/222596 (30.10.2025 Gazette 2025/44)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **22.04.2024  CN 202410483551**

(71) Applicant: **CDGM Glass Co. Ltd.**
**Chengdu, Sichuan 610100 (CN)**

(72) Inventors:
• **HU, Bin**
  **Chengdu, Sichuan 610100 (CN)**
• **YUAN, Baoping**
  **Chengdu, Sichuan 610100 (CN)**
• **YU, Tianlai**
  **Chengdu, Sichuan 610100 (CN)**
• **JIANG, Tao**
  **Chengdu, Sichuan 610100 (CN)**
• **WU, Wenxu**
  **Chengdu, Sichuan 610100 (CN)**

(74) Representative: **Bandpay & Greuter**
**11, rue Christophe Colomb**
**75008 Paris (FR)**

(54) **MICROCRYSTALLINE GLASS, MICROCRYSTALLINE GLASS PRODUCT AND MANUFACTURING METHOD THEREFOR**

(57)   The present invention provides a microcrystalline glass product, wherein components of the microcrystalline glass product are represented by weight percentage, comprising: 65-78% of $SiO_2$; 2-12% of $R_2O$; 5-15% of $Li_2O$; 3-12% of $Al_2O_3$; 1.5-10% of $ZrO_2$; 0.01-0.6% of $CeO_2$; and 0.01-0.8% of $Ag_2O$; and the $R_2O$ is one or more of $Na_2O$ and $K_2O$. Through rational component design, the matrix glass of the present invention can be crystallized to obtain microcrystalline glass with a blackened portion and a transparent portion. The microcrystalline glass obtained by the present invention is suitable for chemical strengthening, and the microcrystalline glass and the microcrystalline glass product made therefrom exhibit excellent mechanical properties.

EP 4 699 991 A1

**Description**

Technical Field

The present invention relates to a microcrystalline glass, and in particular, to a microcrystalline glass suitable for chemical strengthening.

Background

In recent years, with the emerging and development of consumer electronic products, the glass has been extensively applied in electronic devices due to its transparency and excellent performance. Electronic devices, due to the presence of numerous precision electronic components therein, require cover plates or housings to protect their internal electronic components. As market demands diversify, the application scenarios for protective cover glass are becoming increasingly complex. The role of the protective cover glass is no longer merely to protect internal electronic components, but sometimes it also needs to incorporate other functions. For example, for vital signs monitoring of smart watches, the glass material needs to be partially transparent, but other regions must block light to avoid the interference from stray light. Therefore, the glass material needs to have both blackened and transparent portions, which poses new challenges for the glass manufacturing process technology. In the prior art, the aforementioned cover plate material can be manufactured using an embedded design with two different materials, i.e., a transparent material and a black material. However, due to different strengths of the two materials, significant disparities in the coefficients of thermal expansion, and the necessity of processing through-holes, micro-cracks form in the inner walls of the glass, leading to a reduction in the strength of the cover plate material. Small holes or irregular shapes are difficult to process, and the production cost is high.

Photosensitive microcrystalline glass is a type of microcrystalline glass in which the matrix glass undergoes structural changes upon ultraviolet light irradiation, generating crystal nuclei, and a large number of specific crystals are formed in the irradiated regions after the subsequent heat treatment at a specific temperature. The exposed portions exhibit high crystallinity, resulting in darkened glass color and reduced light transmittance. The unexposed portions remain non-crystallized and retain their transparency. Therefore, mask exposure can be used to achieve the simultaneous presence of black and transparent portions within the glass material. In another aspect, the glass material used to manufacture protective cover plates also needs to possess excellent mechanical properties to withstand routine "tactile" contact during use for a long time, as well as potential accidental bending, scratching, and impact damage. To improve the capability to resist damage caused by accidental external forces, the strength of the glass material can be enhanced through chemical strengthening. However, in the prior art, the photosensitive microcrystalline glass cannot be chemically strengthened, or inherent "non-uniformity" of the photosensitive microcrystalline glass (structural difference between the crystallized and non-crystallized portions) easily leads to poor chemical strengthening effects, making it difficult to meet the requirements for use in high-performance electronic devices and the like.

Summary

For the reasons mentioned above, the technical problem to be solved by the present invention is to provide a matrix glass that can be used to manufacture microcrystalline glass with a blackened portion and a transparent portion.

The present invention further provides a microcrystalline glass suitable for chemical strengthening, and the microcrystalline glass and the microcrystalline glass product made therefrom exhibit excellent mechanical properties.

To solve the technical problem, the solution of the present invention provides the following:

(1) A microcrystalline glass product, wherein components thereof are represented by weight percentage, comprising: 65-78% of $SiO_2$; 2-12% of $R_2O$; 5-15% of $Li_2O$; 3-12% of $Al_2O_3$; 1.5-10% of $ZrO_2$; 0.01-0.6% of $CeO_2$; and 0.01-0.8% of $Ag_2O$; and the $R_2O$ is one or both of $Na_2O$ and $K_2O$.

(2) The microcrystalline glass product according to (1), wherein components thereof are represented by weight percentage, further comprising: 0-1% of $Sb_2O_3$; and/or 0-0.5% of $SnO_2$; and/or 0-5% of $MO$; and/or 0-5% of $Ln_2O_3$; and/or 0-1% of $Fe_2O_3$; the $MO$ is one or more of $MgO$, $CaO$, $SrO$, $BaO$ and $ZnO$; and the $Ln_2O_3$ is one or more of $La_2O_3$, $Gd_2O_3$ and $Y_2O_3$.

(3) A microcrystalline glass product, wherein components thereof are represented by weight percentage, consisting of: 65-78% of $SiO_2$; 2-12% of $R_2O$; 5-15% of $Li_2O$; 3-12% of $Al_2O_3$; 1.5-10% of $ZrO_2$; 0.01-0.6% of $CeO_2$; 0.01-0.8% of $Ag_2O$; 0-1% of $Sb_2O_3$; 0-0.5% of $SnO_2$; 0-5% of $MO$; 0-5% of $Ln_2O_3$; and 0-1% of $Fe_2O_3$; the $R_2O$ is one or both of $Na_2O$ and $K_2O$; the $MO$ is one or more of $MgO$, $CaO$, $SrO$, $BaO$ and $ZnO$; and the $Ln_2O_3$ is one or more of $La_2O_3$, $Gd_2O_3$ and $Y_2O_3$.

(4) A microcrystalline glass product, wherein components thereof comprise $SiO_2$, $R_2O$, $Li_2O$, $Al_2O_3$, $ZrO_2$, $CeO_2$ and $Ag_2O$, the $R_2O$ is one or both of $Na_2O$ and $K_2O$, and drop ball test height II of the microcrystalline glass product is 800mm or more.

(5) A microcrystalline glass product, containing one or more blackened portions and one or more transparent portions, wherein the microcrystalline glass product comprises a lithium metasilicate crystalline phase, and in the blackened portion of the microcrystalline glass product, a weight percentage of the lithium metasilicate crystalline phase is 5-50%.

(6) A microcrystalline glass product, wherein components thereof comprise $SiO_2$, $R_2O$, $Li_2O$, $Al_2O_3$, $ZrO_2$, $CeO_2$ and $Ag_2O$, the $R_2O$ is one or both of $Na_2O$ and $K_2O$, and the microcrystalline glass product contains one or more blackened portions and one or more transparent portions.

(7) A microcrystalline glass product, wherein components thereof comprise $SiO_2$, $Li_2O$, $Al_2O_3$ and $ZrO_2$; wherein components thereof are represented by weight percentage, in which: $SiO_2/Li_2O$ is 5.5-10.0.

(8) A microcrystalline glass product, wherein components thereof comprise $SiO_2$, $R_2O$, $Li_2O$, $Al_2O_3$ and $ZrO_2$; the $R_2O$ is one or both of $Na_2O$ and $K_2O$; wherein components thereof are represented by weight percentage, in which: $(K_2O+Na_2O)/ZrO_2$ is 0.5-7.1.

(9) A microcrystalline glass product, wherein components thereof comprise $SiO_2$, $Li_2O$, $Al_2O_3$ and $ZrO_2$, wherein components thereof are represented by weight percentage, in which: $(SiO_2+Li_2O)/ZrO_2$ is 8.0-55.0.

(10) A microcrystalline glass product, wherein components thereof comprise $SiO_2$, $R_2O$, $Li_2O$, $Al_2O_3$ and $ZrO_2$, the $R_2O$ is one or both of $Na_2O$ and $K_2O$, the microcrystalline glass product comprises a lithium metasilicate crystalline phase, and the lithium silicate crystalline phase has a higher weight percentage than other crystalline phases.

(11) A microcrystalline glass product, containing one or more blackened portions and one or more transparent portions, and transmittance at 870nm $T_{870nm}$ of the blackened portion of the microcrystalline glass product with a thickness of 0.2-1.5mm is 15.0% or less.

(12) A microcrystalline glass product, containing one or more blackened portions and one or more transparent portions, and transmittance at 940nm $T_{940nm}$ of the blackened portion of the microcrystalline glass product with a thickness of 0.2-1.5mm is 50.0% or less.

(13) The microcrystalline glass product according to any of (4) - (12), wherein components thereof are represented by weight percentage, in which: $SiO_2$ is 65-78%; and/or $R_2O$ is 2-12%; and/or $Li_2O$ is 5-15%; and/or $Al_2O_3$ is 3-12%; and/or $ZrO_2$ is 1.5-10%; and/or $CeO_2$ is 0.01-0.6%; and/or $Ag_2O$ is 0.01-0.8%; and/or $Sb_2O_3$ is 0-1%; and/or $SnO_2$ is 0-0.5%; and/or MO is 0-5%; and/or $Ln_2O_3$ is 0-5%; and/or $Fe_2O_3$ is 0-1%; the $R_2O$ is one or both of $Na_2O$ and $K_2O$; the MO is one or more of MgO, CaO, SrO, BaO and ZnO; and the $Ln_2O_3$ is one or more of $La_2O_3$, $Gd_2O_3$ and $Y_2O_3$.

(14) The microcrystalline glass product according to any of (1) - (13), wherein components thereof are represented by weight percentage, in which: $SiO_2/Li_2O$ is 5.5-10.0, $SiO_2/Li_2O$ is preferably 6.0-9.0, and $SiO_2/Li_2O$ is more preferably 7.0-8.5.

(15) The microcrystalline glass product according to any of (1) - (14), wherein components thereof are represented by weight percentage, in which: $(Sb_2O_3+SnO_2)/Ag_2O$ is 0.1-5.0, $(Sb_2O_3+SnO_2)/Ag_2O$ is preferably 0.5-3.5, and $(Sb_2O_3+SnO_2)/Ag_2O$ is more preferably 1.0-2.6.

(16) The microcrystalline glass product according to any of (1) - (15), wherein components thereof are represented by weight percentage, in which: $(K_2O+Na_2O)/ZrO_2$ is 0.5-7.1, $(K_2O+Na_2O)/ZrO_2$ is preferably 0.7-4.5, and $(K_2O+Na_2O)/ZrO_2$ is more preferably 0.8-2.5.

(17) The microcrystalline glass product according to any of (1) - (16), wherein components thereof are represented by weight percentage, in which: $Ag_2O/CeO_2$ is 1.0-10.0, $Ag_2O/CeO_2$ is preferably 1.5-6.5, and $Ag_2O/CeO_2$ is more preferably 2.0-4.5.

(18) The microcrystalline glass product according to any of (1) - (17), wherein components thereof are represented by weight percentage, in which: $Li_2O/ZrO_2$ is 1.0-7.5, $Li_2O/ZrO_2$ is preferably 1.2-5.0, $Li_2O/ZrO_2$ is more preferably 1.4-4.3, and $Li_2O/ZrO_2$ is further preferably 1.6-3.0.

(19) The microcrystalline glass product according to any of (1) - (18), wherein components thereof are represented by weight percentage, in which: $(SiO_2+Li_2O)/ZrO_2$ is 8.0-55.0, $(SiO_2+Li_2O)/ZrO_2$ is preferably 10.0-37.0, $(SiO_2+Li_2O)/ZrO_2$ is more preferably 12.0-25.0, and $(SiO_2+Li_2O)/ZrO_2$ is further preferably 13.0-20.0.

(20) The microcrystalline glass product according to any of (1) - (19), wherein components thereof are represented by weight percentage, in which: $ZrO_2/(Ag_2O+CeO_2)$ is 2.3-50.0, $ZrO_2/(Ag_2O+CeO_2)$ is preferably 6.5-35.0, $ZrO_2/(Ag_2O+CeO_2)$ is more preferably 8.5-20.0, and $ZrO_2/(Ag_2O+CeO_2)$ is further preferably 11.0-18.0.

(21) The microcrystalline glass product according to any of (1) - (20), wherein components thereof are represented by weight percentage, in which: $(Ag_2O+SnO_2+Sb_2O_3)/CeO_2$ is 1.0-30.0, $(Ag_2O+SnO_2+Sb_2O_3)/CeO_2$ is preferably 3.0-20.0, $(Ag_2O+SnO_2+Sb_2O_3)/CeO_2$ is more preferably 5.0-12.5, and $(Ag_2O+SnO_2+Sb_2O_3)/CeO_2$ is further preferably 7.5-10.0.

(22) The microcrystalline glass product according to any of (1) - (21), wherein components thereof are represented by weight percentage, in which: $(Sb_2O_3+SnO_2+CeO_2)/Ag_2O$ is 0.1-10.0, $(Sb_2O_3+SnO_2+CeO_2)/Ag_2O$ is preferably 0.4-5.0, $(Sb_2O_3+SnO_2+CeO_2)/Ag_2O$ is more preferably 0.7-3.7, and $(Sb_2O_3+SnO_2+CeO_2)/Ag_2O$ is further preferably 1.5-3.2.

(23) The microcrystalline glass product according to any of (1) - (22), wherein components thereof are represented by weight percentage, in which: $SnO_2/(CeO_2+SnO_2)$ is 0-0.9, $SnO_2/(CeO_2+SnO_2)$ is preferably 0-0.6, and $SnO_2/(CeO_2+SnO_2)$ is more preferably 0-0.5.

(24) The microcrystalline glass product according to any of (1) - (23), wherein components thereof are represented by weight percentage, in which: $R_2O+Li_2O+Al_2O_3$ is 15-30%, $R_2O+Li_2O+Al_2O_3$ is preferably 17.5-29.5%, $R_2O+Li_2O+Al_2O_3$ is more preferably 18.5-26%, $R_2O+Li_2O+Al_2O_3$ is further preferably 20-25%, and the $R_2O$ is one or both of $Na_2O$ and $K_2O$.

(25) The microcrystalline glass product according to any of (1) - (24), wherein components thereof are represented by weight percentage, in which: $(SiO_2+Al_2O_3)/(Li_2O+Na_2O+K_2O)$ is 3.0-7.5, $(SiO_2+Al_2O_3)/(Li_2O+Na_2O+K_2O)$ is preferably 3.7-6.5, $(SiO_2+Al_2O_3)/(Li_2O+Na_2O+K_2O)$ is more preferably 4.3-6.0, and $(SiO_2+Al_2O_3)/(Li_2O+Na_2O+K_2O)$ is further preferably 4.8-5.8.

(26) The microcrystalline glass product according to any of (1) - (25), wherein components thereof are represented by weight percentage, in which: $MO/ZrO_2$ is 2.5 or less, $MO/ZrO_2$ is preferably 1.5 or less, $MO/ZrO_2$ is more preferably 0.5 or less, and the MO is one or more of MgO, CaO, SrO, BaO and ZnO.

(27) The microcrystalline glass product according to any of (1) - (26), wherein components thereof are represented by weight percentage, in which: $Sb_2O_3+SnO_2$ is 0.05-1.2%, $Sb_2O_3+SnO_2$ is preferably 0.1-1%, and $Sb_2O_3+SnO_2$ is more preferably 0.2-0.7%.

(28) The microcrystalline glass product according to any of (1) - (27), wherein components thereof are represented by weight percentage, in which: $SiO_2$ is 68-77%, and $SiO_2$ is preferably 69.5-75.5%; and/or $R_2O$ is 3-10%, and $R_2O$ is preferably 4-8%; and/or $Li_2O$ is 7-13%, and $Li_2O$ is preferably 8.5-12%; and/or $Al_2O_3$ is 4-10%, and $Al_2O_3$ is preferably 5-9%; and/or $ZrO_2$ is 2-8%, and $ZrO_2$ is preferably 3-6.5%; and/or $CeO_2$ is 0.07-0.4%, and $CeO_2$ is preferably 0.08-0.3%; and/or $Ag_2O$ is 0.1-0.6%, and $Ag_2O$ is preferably 0.2-0.5%; and/or $Sb_2O_3$ is 0.01-0.7%, and $Sb_2O_3$ is preferably 0.07-0.5%; and/or $SnO_2$ is 0-0.3%, and $SnO_2$ is preferably 0-0.2%; and/or MO is 0-3%, and MO is preferably 0-1%, more preferably not contained; and/or $Ln_2O_3$ is 0-3%, and $Ln_2O_3$ is preferably 0-1%, more preferably not contained; and/or $Fe_2O_3$ is 0-0.5%, and $Fe_2O_3$ is preferably 0-0.2%, more preferably not contained; and the $R_2O$ is one or both of $Na_2O$ and $K_2O$, MO is one or more of MgO, CaO, SrO, BaO and ZnO, and $Ln_2O_3$ is one or more of $La_2O_3$, $Gd_2O_3$ and $Y_2O_3$.

(29) The microcrystalline glass product according to any of (1)-(28), wherein the microcrystalline glass product contains one or more blackened portions and one or more transparent portions; or the microcrystalline glass product is a blackened portion as a whole.

(30) The microcrystalline glass product according to any of (1)-(29), wherein the microcrystalline glass product comprises a lithium silicate crystalline phase, preferably a lithium metasilicate crystalline phase; more preferably, the lithium metasilicate crystalline phase accounts for 5-50% by weight percentage in the blackened portion of the microcrystalline glass; further preferably, the lithium metasilicate crystalline phase accounts for 5-40% by weight percentage in the blackened portion of the microcrystalline glass; and more further preferably, the lithium metasilicate crystalline phase accounts for 10-30% by weight percentage in the blackened portion of the microcrystalline glass product.

(31) The microcrystalline glass product according to any of (1)-(30), wherein an average transmittance $T_{400-800nm}$ of the transparent portion of the microcrystalline glass product with a thickness of 0.2-1.5mm within a band range of 400-800nm is 85.0% or more, preferably 88.0% or more, more preferably 90.0% or more, further preferably 91.0% or more, more further preferably 91.5-95.0%; and/or an average transmittance $T_{400-800am}$ of the blackened portion of the microcrystalline glass product with a thickness of 0.2-1.5mm within a band range of 400-800nm is 5.0% or less, preferably 3.0% or less, more preferably 1.5% or less, further preferably 1.2% or less, more further preferably 0.5% or less; and/or a transmittance at 870nm $T_{870nm}$ of the blackened portion of the microcrystalline glass product with a thickness of 0.2-1.5mm is 15.0% or less, preferably 0.1-12.5%, more preferably 0.1-10%, further preferably 0.1-8.0%, more further preferably 0.1-5.0%; and/or a transmittance at 940nm $T_{940nm}$ of the blackened portion of the microcrystalline glass product with a thickness of 0.2-1.5mm is 50.0% or less, preferably 0.1-35.0%, more preferably 0.3-20.0%, further preferably 0.3-15.0%, more further preferably 0.3-10.0%.

(32) The microcrystalline glass product according to any one of (1)-(31), wherein the thickness of the microcrystalline glass product is 0.5-1.5mm, preferably 0.8-1.2mm, more preferably 0.5mm, 0.7mm, 0.8mm, 0.9mm, 1.0mm, 1.1mm, or 1.2mm.

(33) The microcrystalline glass product according to any of (1)-(32), wherein the microcrystalline glass product has a drop ball test height II of 800mm or more, preferably 900mm or more, more preferably 1000mm or more, further preferably 1100mm or more.

(34) A microcrystalline glass, wherein components thereof are represented by weight percentage, comprising: 65-78% of $SiO_2$; 2-12% of $R_2O$; 5-15% of $Li_2O$; 3-12% of $Al_2O_3$; 1.5-10% of $ZrO_2$; 0.01-0.6% of $CeO_2$; and 0.01-0.8% of $Ag_2O$; and the $R_2O$ is one or both of $Na_2O$ and $K_2O$.

(35) The microcrystalline glass according to (34), wherein components thereof are represented by weight percentage, further comprising: 0-1% of $Sb_2O_3$; and/or 0-0.5% of $SnO_2$; and/or 0-5% of MO; and/or 0-5% of $Ln_2O_3$; and/or 0-1% of $Fe_2O_3$; the MO is one or more of MgO, CaO, SrO, BaO and ZnO; and the $Ln_2O_3$ is one or more of $La_2O_3$, $Gd_2O_3$ and $Y_2O_3$.

(36) A microcrystalline glass, wherein components thereof are represented by weight percentage, consisting of: 65-78% of $SiO_2$; 2-12% of $R_2O$; 5-15% of $Li_2O$; 3-12% of $Al_2O_3$; 1.5-10% of $ZrO_2$; 0.01-0.6% of $CeO_2$; 0.01-0.8% of $Ag_2O$; 0-1% of $Sb_2O_3$; 0-0.5% of $SnO_2$; 0-5% of MO; 0-5% of $Ln_2O_3$; and 0-1% of $Fe_2O_3$; the $R_2O$ is one or both of $Na_2O$ and $K_2O$; the MO is one or more of MgO, CaO, SrO, BaO and ZnO; and the $Ln_2O_3$ is one or more of $La_2O_3$, $Gd_2O_3$ and $Y_2O_3$.

(37) A microcrystalline glass, containing one or more blackened portions and one or more transparent portions, wherein the microcrystalline glass comprises a lithium metasilicate crystalline phase, and in the blackened portion of the microcrystalline glass, a weight percentage of the lithium metasilicate crystalline phase is 5-50%.

(38) A microcrystalline glass, wherein components thereof comprise $SiO_2$, $R_2O$, $Li_2O$, $Al_2O_3$, $ZrO_2$, $CeO_2$ and $Ag_2O$, the $R_2O$ is one or both of $Na_2O$ and $K_2O$, and the microcrystalline glass contains one or more blackened portions and one or more transparent portions.

(39) A microcrystalline glass, wherein components thereof comprise $SiO_2$, $R_2O$, $Li_2O$, $Al_2O_3$ and $ZrO_2$, the $R_2O$ is one or both of $Na_2O$ and $K_2O$, and components thereof is represented by weight percentage, in which: $SiO_2/Li_2O$ is 5.5-10.0.

(40) A microcrystalline glass, wherein components thereof comprise $SiO_2$, $R_2O$, $Li_2O$, $Al_2O_3$ and $ZrO_2$, and the $R_2O$ is one or both of $Na_2O$ and $K_2O$; wherein components thereof are represented by weight percentage, in which: $(K_2O+Na_2O)/ZrO_2$ is 0.5-7.1.

(41) A microcrystalline glass, wherein components thereof comprise $SiO_2$, $R_2O$, $Li_2O$, $Al_2O_3$ and $ZrO_2$, the $R_2O$ is one or both of $Na_2O$ and $K_2O$; wherein components thereof is represented by weight percentage, in which: $(SiO_2+Li_2O)/ZrO_2$ is 8.0-55.0.

(42) A microcrystalline glass, wherein components thereof comprise $SiO_2$, $Li_2O$, $Al_2O_3$, $CeO_2$ and $Ag_2O$, the $R_2O$ is one or both of $Na_2O$ and $K_2O$, and $Ag_2O/CeO_2$ is 1.0-10.0.

(43) A microcrystalline glass, wherein components thereof comprise $SiO_2$, $R_2O$, $Li_2O$, $Al_2O_3$ and $ZrO_2$, the $R_2O$ is one or both of $Na_2O$ and $K_2O$, the microcrystalline glass comprises a lithium metasilicate crystalline phase, and the lithium silicate crystalline phase has a higher weight percentage than other crystalline phases.

(44) A microcrystalline glass, wherein components thereof comprise $SiO_2$, $R_2O$, $Li_2O$, $Al_2O_3$ and $ZrO_2$, the $R_2O$ is one or both of $Na_2O$ and $K_2O$, and the microcrystalline glass comprises a lithium silicate crystalline phase.

(45) A microcrystalline glass, containing one or more blackened portions and one or more transparent portions, and transmittance at 870nm $T_{870nm}$ of the blackened portion of the microcrystalline glass with a thickness of 0.2-1.5mm is 15.0% or less.

(46) A microcrystalline glass, containing one or more blackened portions and one or more transparent portions, and transmittance at 940nm $T_{940nm}$ of the blackened portion of the microcrystalline glass with a thickness of 0.2-1.5mm is 50.0% or less.

(47) The microcrystalline glass according to any of (37) - (46), wherein components thereof are represented by weight percentage, in which: $SiO_2$ is 65-78%; and/or $R_2O$ is 2-12%; and/or $Li_2O$ is 5-15%; and/or $Al_2O_3$ is 3-12%; and/or $ZrO_2$ is 1.5-10%; and/or $CeO_2$ is 0.01-0.6%; and/or $Ag_2O$ is 0.01-0.8%; and/or $Sb_2O_3$ is 0-1%; and/or $SnO_2$ is 0-0.5%; and/or MO is 0-5%; and/or $Ln_2O_3$ is 0-5%; and/or $Fe_2O_3$ is 0-1%; the $R_2O$ is one or both of $Na_2O$ and $K_2O$; the MO is one or more of MgO, CaO, SrO, BaO and ZnO; and the $Ln_2O_3$ is one or more of $La_2O_3$, $Gd_2O_3$ and $Y_2O_3$.

(48) The microcrystalline glass according to any of (34) - (47), wherein components thereof are represented by weight percentage, in which: $SiO_2/Li_2O$ is 5.5-10.0, $SiO_2/Li_2O$ is preferably 6.0-9.0, and $SiO_2/Li_2O$ is more preferably 7.0-8.5.

(49) The microcrystalline glass according to any of (34) - (48), wherein components thereof are represented by weight percentage, in which: $(Sb_2O_3+SnO_2)/Ag_2O$ is 0.1-5.0, $(Sb_2O_3+SnO_2)/Ag_2O$ is preferably 0.5-3.5, and $(Sb_2O_3+SnO_2)/Ag_2O$ is more preferably 1.0-2.6.

(50) The microcrystalline glass according to any of (34) - (49), wherein components thereof are represented by weight percentage, in which: $(K_2O+Na_2O)/ZrO_2$ is 0.5-7.1, $(K_2O+Na_2O)/ZrO_2$ is preferably 0.7-4.5, and $(K_2O+Na_2O)/ZrO_2$ is more preferably 0.8-2.5.

(51) The microcrystalline glass according to any of (34) - (50), wherein components thereof are represented by weight percentage, in which: $Ag_2O/CeO_2$ is 1.0-10.0, $Ag_2O/CeO_2$ is preferably 1.5-6.5, and $Ag_2O/CeO_2$ is more preferably 2.0-4.5.

(52) The microcrystalline glass according to any of (34) - (51), wherein components thereof are represented by weight percentage, in which: $Li_2O/ZrO_2$ is 1.0-7.5, $Li_2O/ZrO_2$ is preferably 1.2-5.0, $Li_2O/ZrO_2$ is more preferably 1.4-4.3, and $Li_2O/ZrO_2$ is further preferably 1.6-3.0.

(53) The microcrystalline glass according to any of (34) - (52), wherein components thereof are represented by weight percentage, in which: $(SiO_2+Li_2O)/ZrO_2$ is 8.0-55.0, $(SiO_2+Li_2O)/ZrO_2$ is preferably 10.0-37.0, $(SiO_2+Li_2O)/ZrO_2$ is more preferably 12.0-25.0, and $(SiO_2+Li_2O)/ZrO_2$ is further preferably 13.0-20.0.

(54) The microcrystalline glass according to any of (34) - (53), wherein components thereof are represented by weight percentage, in which: $ZrO_2/(Ag_2O+CeO_2)$ is 2.3-50.0, $ZrO_2/(Ag_2O+CeO_2)$ is preferably 6.5-35.0, $ZrO_2/(Ag_2O+CeO_2)$ is more preferably 8.5-20.0, and $ZrO_2/(Ag_2O+CeO_2)$ is further preferably 11.0-18.0.

(55) The microcrystalline glass according to any of (34) - (54), wherein components thereof are represented by weight percentage, in which: $(Ag_2O+SnO_2+Sb_2O_3)/CeO_2$ is 1.0-30.0, $(Ag_2O+SnO_2+Sb_2O_3)/CeO_2$ is preferably 3.0-20.0, $(Ag_2O+SnO_2+Sb_2O_3)/CeO_2$ is more preferably 5.0-12.5, and $(Ag_2O+SnO_2+Sb_2O_3)/CeO_2$ is further preferably 7.5-10.0.

(56) The microcrystalline glass according to any of (34) - (55), wherein components thereof are represented by weight percentage, in which: $(Sb_2O_3+SnO_2+CeO_2)/Ag_2O$ is 0.1-10.0, $(Sb_2O_3+SnO_2+CeO_2)/Ag_2O$ is preferably 0.4-5.0, $(Sb_2O_3+SnO_2+CeO_2)/Ag_2O$ is more preferably 0.7-3.7, and $(Sb_2O_3+SnO_2+CeO_2)/Ag_2O$ is further preferably 1.5-3.2.

(57) The microcrystalline glass according to any of (34) - (56), wherein components thereof are represented by weight percentage, in which: $SnO_2/(CeO_2+SnO_2)$ is 0-0.9, $SnO_2/(CeO_2+SnO_2)$ is preferably 0-0.6, and $SnO_2/(CeO_2+SnO_2)$ is more preferably 0-0.5.

(58) The microcrystalline glass according to any of (34) - (57), wherein components thereof are represented by weight percentage, in which: $R_2O+Li_2O+Al_2O_3$ is 15-30%, $R_2O+Li_2O+Al_2O_3$ is preferably 17.5-29.5%, $R_2O+Li_2O+Al_2O_3$ is more preferably 18.5-26%, $R_2O+Li_2O+Al_2O_3$ is further preferably 20-25%, and the $R_2O$ is one or both of $Na_2O$ and $K_2O$.

(59) The microcrystalline glass according to any of (34) - (58), wherein components thereof are represented by weight percentage, in which: $(SiO_2+Al_2O_3)/(Li_2O+Na_2O+K_2O)$ is 3.0-7.5, $(SiO_2+Al_2O_3)/(Li_2O+Na_2O+K_2O)$ is preferably 3.7-6.5, $(SiO_2+Al_2O_3)/(Li_2O+Na_2O+K_2O)$ is more preferably 4.3-6.0, and $(SiO_2+Al_2O_3)/(Li_2O+Na_2O+K_2O)$ is further preferably 4.8-5.8.

(60) The microcrystalline glass according to any of (34) - (59), wherein components thereof are represented by weight percentage, in which: $MO/ZrO_2$ is 2.5 or less, $MO/ZrO_2$ is preferably 1.5 or less, $MO/ZrO_2$ is more preferably 0.5 or less, and the MO is one or more of MgO, CaO, SrO, BaO and ZnO.

(61) The microcrystalline glass according to any of (34) - (60), wherein components thereof are represented by weight percentage, in which: $Sb_2O_3+SnO_2$ is 0.05-1.2%, $Sb_2O_3+SnO_2$ is preferably 0.1-1%, and $Sb_2O_3+SnO_2$ is more preferably 0.2-0.7%.

(62) The microcrystalline glass according to any of (34) - (61), wherein components thereof are represented by weight percentage, in which: $SiO_2$ is 68-77%, and $SiO_2$ is preferably 69.5-75.5%; and/or $R_2O$ is 3-10%, and $R_2O$ is preferably 4-8%; and/or $Li_2O$ is 7-13%, and $Li_2O$ is preferably 8.5-12%; and/or $Al_2O_3$ is 4-10%, and $Al_2O_3$ is preferably 5-9%; and/or $ZrO_2$ is 2-8%, and $ZrO_2$ is preferably 3-6.5%; and/or $CeO_2$ is 0.07-0.4%, and $CeO_2$ is preferably 0.08-0.3%; and/or $Ag_2O$ is 0.1-0.6%, and $Ag_2O$ is preferably 0.2-0.5%; and/or $Sb_2O_3$ is 0.01-0.7%, and $Sb_2O_3$ is preferably 0.07-0.5%; and/or $SnO_2$ is 0-0.3%, and $SnO_2$ is preferably 0-0.2%; and/or MO is 0-3%, and MO is preferably 0-1%, more preferably not contained; and/or $Ln_2O_3$ is 0-3%, and $Ln_2O_3$ is preferably 0-1%, more preferably not contained; and/or $Fe_2O_3$ is 0-0.5%, and $Fe_2O_3$ is preferably 0-0.2%, more preferably not contained; the $R_2O$ is one or both of $Na_2O$ and $K_2O$; the MO is one or more of MgO, CaO, SrO, BaO and ZnO; and the $Ln_2O_3$ is one or more of $La_2O_3$, $Gd_2O_3$ and $Y_2O_3$.

(63) The microcrystalline glass according to any of (34)-(62), wherein the microcrystalline glass comprises one or more blackened portions and one or more transparent portions; or the microcrystalline glass is a blackened portion as a whole.

(64) The microcrystalline glass according to any of (34)-(63), wherein the microcrystalline glass comprises a lithium silicate crystalline phase, preferably a lithium metasilicate crystalline phase; more preferably, the lithium metasilicate crystalline phase accounts for 5-50% by weight percentage in the blackened portion of the microcrystalline glass; further preferably, the lithium metasilicate crystalline phase accounts for 5-40% by weight percentage in the blackened portion of the microcrystalline glass; and more further preferably, the lithium metasilicate crystalline phase accounts for 10-30% by weight percentage in the blackened portion of the microcrystalline glass.

(65) The microcrystalline glass according to any of (34)-(64), wherein an average transmittance $T_{400\text{-}800nm}$ of the transparent portion of the microcrystalline glass with a thickness of 0.2-1.5mm within a band range of 400-800nm is 85.0% or more, preferably 88.0% or more, more preferably 90.0% or more, further preferably 91.0% or more, more further preferably 91.5-95.0%; and/or an average transmittance $T_{400\text{-}800nm}$ of the blackened portion of the microcrystalline glass with a thickness of 0.2-1.5mm within a band range of 400-800nm is 5.0% or less, preferably 3.0% or less, more preferably 1.5% or less, further preferably 1.2% or less, more further preferably 0.5% or less; and/or a transmittance at 870nm $T_{870nm}$ of the blackened portion of the microcrystalline glass with a thickness of 0.2-1.5mm is 15.0% or less, preferably 0.1-12.5%, more preferably 0.1-10%, further preferably 0.1-8.0%, more further preferably 0.1-5.0%; and/or a transmittance at 940nm $T_{940nm}$ of the blackened portion of the microcrystalline glass with a thickness of 0.2-1.5mm is 50.0% or less, preferably 0.1-35.0%, more preferably 0.3-20.0%, further preferably 0.3-15.0%, more further preferably 0.3-10.0%.

(66) The microcrystalline glass according to any of (34)-(65), wherein the thickness of the microcrystalline glass is 0.5-1.5mm, preferably 0.8-1.2mm, more preferably 0.5mm, 0.7mm, 0.8mm, 0.9mm, 1.0mm, 1.1mm or 1.2mm.

(67) A matrix glass, wherein components thereof are represented by weight percentage, comprising: 65-78% of $SiO_2$; 2-12% of $R_2O$; 5-15% of $Li_2O$; 3-12% of $Al_2O_3$; 1.5-10% of $ZrO_2$; 0.01-0.6% of $CeO_2$; and 0.01-0.8% of $Ag_2O$; and the $R_2O$ is one or both of $Na_2O$ and $K_2O$.

(68) The matrix glass according to (67), wherein components thereof are represented by weight percentage, further comprising: 0-1% of $Sb_2O_3$; and/or 0-0.5% of $SnO_2$; and/or 0-5% of MO; and/or 0-5% of $Ln_2O_3$; and/or 0-1% of $Fe_2O_3$; the MO is one or more of MgO, CaO, SrO, BaO and ZnO; and the $Ln_2O_3$ is one or more of $La_2O_3$, $Gd_2O_3$ and $Y_2O_3$.

(69) A matrix glass, wherein components thereof are represented by weight percentage, consisting of: 65-78% of $SiO_2$; 2-12% of $R_2O$; 5-15% of $Li_2O$; 3-12% of $Al_2O_3$; 1.5-10% of $ZrO_2$; 0.01-0.6% of $CeO_2$; 0.01-0.8% of $Ag_2O$; 0-1% of $Sb_2O_3$; 0-0.5% of $SnO_2$; 0-5% of MO; 0-5% of $Ln_2O_3$; and 0-1% of $Fe_2O_3$; the $R_2O$ is one or both of $Na_2O$ and $K_2O$; the MO is one or more of MgO, CaO, SrO, BaO and ZnO; and the $Ln_2O_3$ is one or more of $La_2O_3$, $Gd_2O_3$ and $Y_2O_3$.

(70) A matrix glass, wherein components thereof comprise $SiO_2$, $R_2O$, $Li_2O$, $Al_2O_3$ and $ZrO_2$; the $R_2O$ is one or both of $Na_2O$ and $K_2O$; wherein components thereof are represented by weight percentage, $SiO_2/Li_2O$ is 5.5-10.0.

(71) A matrix glass, wherein components thereof comprise $SiO_2$, $R_2O$, $Li_2O$, $Al_2O_3$ and $ZrO_2$; the $R_2O$ is one or both of $Na_2O$ and $K_2O$; wherein components thereof are represented by weight percentage, in which: $(K_2O+Na_2O)/ZrO_2$ is 0.5-7.1.

(72) A matrix glass, wherein components thereof comprise $SiO_2$, $R_2O$, $Li_2O$, $Al_2O_3$ and $ZrO_2$; the $R_2O$ is one or both of $Na_2O$ and $K_2O$; wherein components thereof are represented by weight percentage, in which: $(SiO_2+Li_2O)/ZrO_2$ is 8.0-55.0.

(73) A matrix glass, wherein components thereof comprise $SiO_2$, $R_2O$, $Li_2O$, $Al_2O_3$, $ZrO_2$, $CeO_2$ and $Ag_2O$; the $R_2O$ is one or both of $Na_2O$ and $K_2O$; and $Ag_2O/CeO_2$ is 1.0-10.0.

(74) A matrix glass, wherein components thereof comprise $SiO_2$, $R_2O$, $Li_2O$, $Al_2O_3$ and $ZrO_2$; the $R_2O$ is one or both of $Na_2O$ and $K_2O$; and Young's modulus (E) of the matrix glass is $7000\times10^7Pa$-$9500\times10^7Pa$.

(75) A matrix glass, wherein components thereof comprise $SiO_2$, $R_2O$, $Li_2O$, $Al_2O_3$ and $ZrO_2$; the $R_2O$ is one or both of $Na_2O$ and $K_2O$; the dielectric constant $\varepsilon_r$ of the matrix glass is 5.5-8.5

(76) A matrix glass, wherein components thereof comprise $SiO_2$, $R_2O$, $Li_2O$, $Al_2O_3$ and $ZrO_2$; the $R_2O$ is one or both of $Na_2O$ and $K_2O$; and the Knoop hardness $(Hk_{0.1})$ of the matrix glass is $450kgf/mm^2$ or more.

(77) A matrix glass, wherein components thereof comprise $SiO_2$, $R_2O$, $Li_2O$ and $ZrO_2$; the $R_2O$ is one or both of $Na_2O$ and $K_2O$; and the Linear Expansion Coefficient $\alpha_{20°C-300°C}$ of the matrix glass is $100\times10^{-7}/°C$ or less.

(78) The matrix glass according to any of (70) - (77), wherein components thereof are represented by weight percentage, in which: $SiO_2$ is 65-78%; and/or $R_2O$ is 2-12%; and/or $Li_2O$ is 5-15%; and/or $Al_2O_3$ is 3-12%; and/or $ZrO_2$ is 1.5-10%; and/or $CeO_2$ is 0.01-0.6%; and/or $Ag_2O$ is 0.01-0.8%; and/or $Sb_2O_3$ is 0-1%; and/or $SnO_2$ is 0-0.5%; and/or MO is 0-5%; and/or $Ln_2O_3$ is 0-5%; and/or $Fe_2O_3$ is 0-1%; the $R_2O$ is one or both of $Na_2O$ and $K_2O$; the MO is one or more of MgO, CaO, SrO, BaO and ZnO; and the $Ln_2O_3$ is one or more of $La_2O_3$, $Gd_2O_3$ and $Y_2O_3$.

(79) The matrix glass according to any of (67) - (78), wherein components thereof are represented by weight percentage, in which: $SiO_2/Li_2O$ is 5.5-10.0, $SiO_2/Li_2O$ is preferably 6.0-9.0, and $SiO_2/Li_2O$ is more preferably 7.0-8.5.

(80) The matrix glass according to any of (67) - (79), wherein components thereof are represented by weight percentage, in which: $(Sb_2O_3+SnO_2)/Ag_2O$ is 0.1-5.0, $(Sb_2O_3+SnO_2)/Ag_2O$ is preferably 0.5-3.5, and $(Sb_2O_3+SnO_2)/Ag_2O$ is more preferably 1.0-2.6.

(81) The matrix glass according to any of (67) - (80), wherein components thereof are represented by weight percentage, in which: $(K_2O+Na_2O)/ZrO_2$ is 0.5-7.1, $(K_2O+Na_2O)/ZrO_2$ is preferably 0.7-4.5, and $(K_2O+Na_2O)/ZrO_2$ is more preferably 0.8-2.5.

(82) The matrix glass according to any of (67) - (81), wherein components thereof are represented by weight percentage, in which: $Ag_2O/CeO_2$ is 1.0-10.0, $Ag_2O/CeO_2$ is preferably 1.5-6.5, and $Ag_2O/CeO_2$ is more preferably 2.0-4.5.

(83) The matrix glass according to any of (67) - (82), wherein components thereof are represented by weight percentage, in which: $Li_2O/ZrO_2$ is 1.0-7.5, $Li_2O/ZrO_2$ is preferably 1.2-5.0, $Li_2O/ZrO_2$ is more preferably 1.4-4.3, and $Li_2O/ZrO_2$ is further preferably 1.6-3.0.

(84) The matrix glass according to any of (67) - (83), wherein components thereof are represented by weight percentage, in which: $(SiO_2+Li_2O)/ZrO_2$ is 8.0-55.0, $(SiO_2+Li_2O)/ZrO_2$ is preferably 10.0-37.0, $(SiO_2+Li_2O)/ZrO_2$ is more preferably 12.0-25.0, and $(SiO_2+Li_2O)/ZrO_2$ is further preferably 13.0-20.0.

(85) The matrix glass according to any of (67) - (84), wherein components thereof are represented by weight percentage, in which: $ZrO_2/(Ag_2O+CeO_2)$ is 2.3-50.0, $ZrO_2/(Ag_2O+CeO_2)$ is preferably 6.5-35.0, $ZrO_2/(Ag_2O+CeO_2)$ is more preferably 8.5-20.0, and $ZrO_2/(Ag_2O+CeO_2)$ is further preferably 11.0-18.0.

(86) The matrix glass according to any of (67) - (85), wherein components thereof are represented by weight percentage, in which: $(Ag_2O+SnO_2+Sb_2O_3)/CeO_2$ is 1.0-30.0, $(Ag_2O+SnO_2+Sb_2O_3)/CeO_2$ is preferably 3.0-20.0, $(Ag_2O+SnO_2+Sb_2O_3)/CeO_2$ is more preferably 5.0-12.5, and $(Ag_2O+SnO_2+Sb_2O_3)/CeO_2$ is further preferably 7.5-10.0.

(87) The matrix glass according to any of (67) - (86), wherein components thereof are represented by weight percentage, in which: $(Sb_2O_3+SnO_2+CeO_2)/Ag_2O$ is 0.1-10.0, $(Sb_2O_3+SnO_2+CeO_2)/Ag_2O$ is preferably 0.4-5.0, $(Sb_2O_3+SnO_2+CeO_2)/Ag_2O$ is more preferably 0.7-3.7, and $(Sb_2O_3+SnO_2+CeO_2)/Ag_2O$ is further preferably 1.5-3.2.

(88) The matrix glass according to any of (67) - (87), wherein components thereof are represented by weight percentage, in which: $SnO_2/(CeO_2+SnO_2)$ is 0-0.9, $SnO_2/(CeO_2+SnO_2)$ is preferably 0-0.6, and $SnO_2/(CeO_2+SnO_2)$ is more preferably 0-0.5.

(89) The matrix glass according to any of (67) - (88), wherein components thereof are represented by weight percentage, in which: $R_2O+Li_2O+Al_2O_3$ is 15-30%, $R_2O+Li_2O+Al_2O_3$ is preferably 17.5-29.5%, $R_2O+Li_2O+Al_2O_3$ is more preferably 18.5-26%, $R_2O+Li_2O+Al_2O_3$ is further preferably 20-25%, and the $R_2O$ is one or both of $Na_2O$ and $K_2O$.

(90) The matrix glass according to any of (67) - (89), wherein components thereof are represented by weight percentage, in which: $(SiO_2+Al_2O_3)/(Li_2O+Na_2O+K_2O)$ is 3.0-7.5, $(SiO_2+Al_2O_3)/(Li_2O+Na_2O+K_2O)$ is preferably 3.7-6.5, $(SiO_2+Al_2O_3)/(Li_2O+Na_2O+K_2O)$ is more preferably 4.3-6.0, and $(SiO_2+Al_2O_3)/(Li_2O+Na_2O+K_2O)$ is further preferably 4.8-5.8.

(91) The matrix glass according to any of (67) - (90), wherein components thereof are represented by weight percentage, in which: $MO/ZrO_2$ is 2.5 or less, $MO/ZrO_2$ is preferably 1.5 or less, $MO/ZrO_2$ is more preferably 0.5 or less, and the MO is one or more of MgO, CaO, SrO, BaO and ZnO.

(92) The matrix glass according to any of (67) - (91), wherein components thereof are represented by weight percentage, in which: $Sb_2O_3+SnO_2$ is 0.05-1.2%, $Sb_2O_3+SnO_2$ is preferably 0.1-1%, and $Sb_2O_3+SnO_2$ is more preferably 0.2-0.7%.

(93) The matrix glass according to any of (67) - (92), wherein components thereof are represented by weight percentage, in which: $SiO_2$ is 68-77%, and $SiO_2$ is preferably 69.5-75.5%; and/or $R_2O$ is 3-10%, and $R_2O$ is preferably 4-8%; and/or $Li_2O$ is 7-13%, and $Li_2O$ is preferably 8.5-12%; and/or $Al_2O_3$ is 4-10%, and $Al_2O_3$ is preferably 5-9%; and/or $ZrO_2$ is 2-8%, and $ZrO_2$ is preferably 3-6.5%; and/or $CeO_2$ is 0.07-0.4%, and $CeO_2$ is preferably 0.08-0.3%; and/or $Ag_2O$ is 0.1-0.6%, and $Ag_2O$ is preferably 0.2-0.5%; and/or $Sb_2O_3$ is 0.01-0.7%, and $Sb_2O_3$ is preferably 0.07-0.5%; and/or $SnO_2$ is 0-0.3%, and $SnO_2$ is preferably 0-0.2%; and/or MO is 0-3%, and MO is preferably 0-1%, more preferably not contained; and/or $Ln_2O_3$ is 0-3%, and $Ln_2O_3$ is preferably 0-1%, more preferably not contained; and/or $Fe_2O_3$ is 0-0.5%, and $Fe_2O_3$ is preferably 0-0.2%, more preferably not contained; the $R_2O$ is one or both of $Na_2O$ and $K_2O$; the MO is one or more of MgO, CaO, SrO, BaO and ZnO; and the $Ln_2O_3$ is one or more of $La_2O_3$, $Gd_2O_3$ and $Y_2O_3$.

(94) The matrix glass according to any of (67)-(93), wherein refractive index $n_d$ of the matrix glass is 1.51-1.55, preferably 1.52-1.54, more preferably 1.53-1.535, further preferably 1.53112-1.53284; and/or Young's modulus E is $7000\times10^7Pa$-$9500\times10^7Pa$, preferably $7500\times10^7Pa$-$9200\times10^7Pa$, more preferably $7836\times10^7Pa$-$9014\times10^7Pa$, further preferably $8005\times10^7Pa$-$8488\times10^7Pa$; and/or Knoop hardness $Hk_{0.1}$ is 450kgf/mm$^2$ or more, preferably 470-600kgf/mm$^2$, more preferably 480-582kgf/mm$^2$, further preferably 492-532 kgf/mm$^2$; and/or drop ball test height I is 200mm or more, preferably 300mm or more, more preferably 400mm or more; and/or the dielectric loss $\tan\delta$ is $11.0\times10^{-3}$ or less, preferably $7.0\times10^{-3}$-$10.5\times10^{-3}$, more preferably $7.2\times10^{-3}$-$9.8\times10^{-3}$, further preferably $7.4\times10^{-3}$-$9.2\times10^{-3}$; and/or the dielectric constant $\varepsilon_r$ is 5.5-8.5, preferably 6.0-8.0, more preferably 6.2-7.7, further preferably 6.3-7.0; and/or the Linear Expansion Coefficient $\alpha_{20°C-300°C}$ is $100\times10^{-7}$/°C or less, preferably $65\times10^{-7}$/°C-$100\times10^{-7}$/°C, more preferably $71\times10^{-7}$/°C-$95\times10^{-7}$/°C, further preferably $75\times10^{-7}$/°C-$90\times10^{-7}$/°C.

(95) A glass cover plate, comprising the microcrystalline glass product according to any of (1)-(33), and/or the microcrystalline glass according to any of (34)-(66), and/or the matrix glass according to any of (67)-(94).

(96) A glass component, comprising the microcrystalline glass product according to any of (1)-(33), and/or the microcrystalline glass according to any of (34)-(66), and/or the matrix glass according to any of (67)-(94).

(97) A device, comprising the microcrystalline glass product according to any of (1)-(33), and/or the microcrystalline glass according to any of (34)-(66), and/or the matrix glass according to any of (67)-(94), and/or the glass cover plate according to (95), and/or the glass component according to (96).

(98) A manufacturing method for the microcrystalline glass product according to any of (1)-(33), wherein the method comprises the following steps: forming a matrix glass, forming the matrix glass into a microcrystalline glass through a crystallization process, and then forming the microcrystalline glass into a microcrystalline glass product through a chemical strengthening process.

(99) The manufacturing method for the microcrystalline glass product according to (98), wherein the crystallization process comprises mask exposure treatment on the matrix glass, followed by crystallization heat treatment, the mask exposure treatment comprises exposing a specific position or region of the matrix glass to ultraviolet light, the ultraviolet light is preferably at a wavelength of 313nm, and exposure time is preferably 5-60 minutes.

(100) The manufacturing method for the microcrystalline glass product according to (98) or (99), wherein the crystallization heat treatment is conducted in two stages, and the two-stage crystallization heat treatment comprises: performing nucleation process treatment under a first temperature, and then performing crystal growth process treatment under a second temperature that is higher than a nucleation process temperature, wherein the first temperature is preferably 490°C-520°C, treatment time under the first temperature is preferably 1-4 hours, the second temperature is preferably 540°C-620°C, and treatment time under the second temperature is preferably 1-8 hours.

(101) The manufacturing method for the microcrystalline glass product according to (98)-(100), wherein the chemical strengthening process comprises: immersing the microcrystalline glass into a salt bath of molten Na salt, and/or K salt, and/or Na-K mixed salt at a temperature of 350°C-470°C for about 1-36 hours, wherein the temperature is preferably 380°C-460°C, and the time is preferably 2-24 hours.

(102) A manufacturing method for the microcrystalline glass according to any of (34)-(66), wherein the method comprises the following steps: forming a matrix glass, and then forming the matrix glass into a microcrystalline glass through a crystallization process.

(103) The manufacturing method for the microcrystalline glass according to (102), wherein the crystallization process comprises mask exposure treatment on the matrix glass, followed by crystallization heat treatment, the mask exposure treatment comprises exposing a specific position or region of the matrix glass to ultraviolet light, the ultraviolet light is preferably at a wavelength of 313nm, and exposure time is preferably 5-60 minutes.

(104) The manufacturing method for the microcrystalline glass according to (102) or (103), wherein the crystallization heat treatment is conducted in two stages, and the two-stage crystallization heat treatment comprises: performing nucleation process treatment under a first temperature, and then performing crystal growth process treatment under a second temperature that is higher than a nucleation process temperature, wherein the first temperature is preferably 490°C-520°C, treatment time under the first temperature is preferably 1-4 hours, the second temperature is preferably 540°C-620°C, and treatment time under the second temperature is preferably 1-8 hours.

The beneficial effects of the present invention are as follows: through rational component design, the matrix glass of the present invention can be crystallized to obtain microcrystalline glass with a blackened portion and a transparent portion. The microcrystalline glass obtained by the present invention is suitable for chemical strengthening, and the microcrystalline glass and the microcrystalline glass product made therefrom exhibit excellent mechanical properties. In some implementations, the microcrystalline glass or microcrystalline glass product of the present invention is provided with a blackened portion and a transparent portion. The transparent portion exhibits high transmittance within the visible light band, while the blackened portion exhibits low transmittance within the visible light band.

Detailed Description

The implementations of the present invention will be described in detail below, but the present invention is not limited to the following implementations. Appropriate changes may be made within the scope of the purpose of the present invention for implementation. In addition, the repeated descriptions will not limit the aim of the invention although with appropriate omissions.

The microcrystalline glass and microcrystalline glass product provided by the present invention are materials with crystalline phase (sometimes also called crystal) and glass phase, which are different from amorphous solid. The crystalline phase of the microcrystalline glass and microcrystalline glass product can be identified by peak angles appeared in X-ray diffraction pattern of X-ray diffraction analysis and/or measured by TEMEDX.

Through repeated tests and researches, the inventor of the present invention obtains the microcrystalline glass or microcrystalline glass product provided by the present invention by specifying the content and proportion of specific components constituting the microcrystalline glass and microcrystalline glass product as specific values and precipitating specific crystalline phases.

In some implementations, the microcrystalline glass of the present invention contains one or more blackened portions and one or more transparent portions. The transparent portion refers to the portion where the average transmittance ($T_{400-800nm}$) of the microcrystalline glass, when processed to a thickness of 0.2-1.5mm, within the band range of 400-800nm is 85.0% or more, and the blackened portion refers to the portion where the average transmittance ($T_{400-800nm}$) of the microcrystalline glass, when processed to a thickness of 0.2-1.5mm, within the band range of 400-800nm is 5.0% or less. In some implementations, crystalline phase is contained in the blackened portion of the microcrystalline glass, and crystalline phase is not contained in the transparent portion of the microcrystalline glass. In some implementations, the crystalline phase of the blackened portion of the microcrystalline glass is uniformly distributed.

In some implementations, the microcrystalline glass product of the present invention contains one or more blackened portions and one or more transparent portions. The transparent portion refers to the portion where the average transmittance ($T_{400-800nm}$) of the microcrystalline glass product, when processed to a thickness of 0.2-1.5mm, within the band range of 400-800nm is 85.0% or more, and the blackened portion refers to the portion where the average transmittance ($T_{400-800nm}$) of the microcrystalline glass product, when processed to a thickness of 0.2-1.5mm, within the band range of 400-800nm is 5.0% or less. In some implementations, crystalline phase is contained in the blackened portion of the microcrystalline glass product, and crystalline phase is not contained in the transparent portion of the microcrystalline glass product. In some implementations, the crystalline phase of the blackened portion of the microcrystalline glass product is uniformly distributed.

In some implementations, the microcrystalline glass or microcrystalline glass product of the present invention is a blackened portion as a whole. The blackened portion refers to the portion where the average transmittance ($T_{400\text{-}800nm}$) of the microcrystalline glass or microcrystalline glass product, when processed to a thickness of 0.2-1.5mm, within the band range of 400-800nm is 5.0% or less. In some implementations, the crystalline phase of the blackened portion of the microcrystalline glass or microcrystalline glass product is uniformly distributed.

In some implementations, the microcrystalline glass or microcrystalline glass product of the present invention is a transparent portion as a whole. The transparent portion refers to the portion where the average transmittance ($T_{400\text{-}800nm}$) of the microcrystalline glass or microcrystalline glass product, when processed to a thickness of 0.2-1.5mm, within the band range of 400-800nm is 85.0% or more.

In some implementations, the blackened portion of the microcrystalline glass or microcrystalline glass product according to the present invention can form a pattern of any shape and/or size.

In the following paragraphs, the range of components (ingredients) of the matrix glass, microcrystalline glass and microcrystalline glass product provided by the present invention will be described. If not specified herein, the content of each component is expressed in weight percentage (wt%) relative to the total content of the matrix glass or microcrystalline glass or microcrystalline glass product converted into oxide composition. "Converted into oxide composition" therein refers to that the total content of this oxide is taken as 100% when the oxide, compound salt and hydroxide, used as raw materials for the composition of the matrix glass, microcrystalline glass or microcrystalline glass product provided by the present invention, are decomposed and transformed into oxides during melting. In addition, in this description, only the matrix glass before crystallization (i.e., crystallization process treatment) is referred to as glass, the crystallized (i.e., crystallization process treatment) matrix glass is referred to as microcrystalline glass, and the microcrystalline glass product refers to that obtained by chemical strengthening of the microcrystalline glass.

Unless otherwise noted in specific circumstances, the numerical range listed herein includes upper and lower limits, and the words "or more" and "or less" include the endpoint values as well as all integers and fractions within the range, but not limited to the specific values listed when the range is limited. The term "about" as used herein refers to that formulations, parameters and other quantities as well as characteristics are not, and do not need to be, accurate, and may be approximate and/or greater or lower if necessary, reflecting tolerances, conversion factors, measurement errors, etc. "And/or" mentioned herein is inclusive. For example, "A and/or B" refers to only A, or only B, or both A and B.

In some implementations of the present invention, the crystalline phase (crystal) of the microcrystalline glass or microcrystalline glass product comprises a lithium silicate crystalline phase, preferably lithium metasilicate ($Li_2SiO_3$) crystalline phase. In some implementations, the lithium metasilicate crystalline phase has a higher weight percentage than other crystalline phases. In some implementations, the crystalline phase of the microcrystalline glass or microcrystalline glass product only comprises the lithium metasilicate crystalline phase.

In some implementations, in the blackened portion of the microcrystalline glass or microcrystalline glass product, the weight percentage of the lithium metasilicate crystalline phase is 5-50%, preferably the weight percentage of the lithium metasilicate crystalline phase is 5-40%, and more preferably the weight percentage of the lithium metasilicate crystalline phase is 10-30% In some implementations, in the blackened portion of the microcrystalline glass or microcrystalline glass product, the weight percentage of the lithium metasilicate crystalline phase is 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49% or 50%.

$SiO_2$ is a glass-forming oxide that serves as the backbone of the glass, exhibits a low dielectric constant and dielectric loss. $SiO_2$ is a component of lithium metasilicate in the microcrystalline glass. When the content of $SiO_2$ is less than 65%, the hardness and coefficient of expansion of the glass decrease, while the dielectric constant and dielectric loss increase. When the content of $SiO_2$ is higher than 78%, the transmittance of the blackened portions of the microcrystalline glass and microcrystalline glass product increases. Therefore, the content of $SiO_2$ is 65-78%, preferably 68-77%, more preferably 69.5-75.5%. In some implementations, it can comprise about 65%, 65.5%, 66%, 66.5%, 67%, 67.5%, 68%, 68.5%, 69%, 69.5%, 70%, 70.5%, 71%, 71.5%, 72%, 72.5%, 73%, 73.5%, 74%, 74.5%, 75%, 75.5%, 76%, 76.5%, 77%, 77.5% or 78% of $SiO_2$.

$Li_2O$ is a main ingredient for crystal formation in the microcrystalline glass and microcrystalline glass product of the present invention. When the content of $Li_2O$ is less than 5%, the crystal content in the microcrystalline glass or microcrystalline glass product decreases, and the transmittance of the blackened portion is high. When the content of $Li_2O$ is greater than 15%, the Young's modulus and drop ball test height of the glass decrease, while the refractive index and dielectric loss of the glass increase. Meanwhile, in the crystallization process of the matrix glass, the portion of the glass that has not been exposed to ultraviolet light is prone to devitrification during heat treatment, leading to a reduction in the transmittance of the transparent portions of the microcrystalline glass and microcrystalline glass product. Therefore, the content of $Li_2O$ is confined to 5-15%, preferably 7-13%, more preferably 8.5-12%. In some implementations, it can comprise about 5%, 5.5%, 6%, 6.5%, 7%, 7.5%, 8%, 8.5%, 9%, 9.5%, 10%, 10.5%, 11%, 11.5%, 12%, 12.5%, 13%, 13.5%, 14%, 14.5% or 15% of $Li_2O$.

The inventors have found through research that, in some implementations, the hardness and drop ball test height of the glass increase as the $SiO_2/Li_2O$ value increases, while the refractive index decreases as the $SiO_2/Li_2O$ value increases. Meanwhile, when the $SiO_2/Li_2O$ value is below 5.5, the transmittance of the transparent portions of the microcrystalline glass and microcrystalline glass product decreases, while the transmittance of the blackened portions increases; when the $SiO_2/Li_2O$ value exceeds 10.0, the crystal content in the blackened portions of the microcrystalline glass and microcrystalline glass product is low, and the transmittance of the blackened portions increases. Therefore, in some implementations, the $SiO_2/Li_2O$ value is preferably 5.5-10.0, the $SiO_2/Li_2O$ value is more preferably 6.0-9.0, and the $SiO_2/Li_2O$ value is further preferably 7.0-8.5. The transparent portions of the microcrystalline glass and microcrystalline glass product exhibit high transmittance within the visible light band, while the blackened portions show low transmittance. This is particularly suitable for optical signal channels or light shielding systems of electronic products. In some implementations, the value of $SiO_2/Li_2O$ can be 5.5, 5.6, 5.7, 5.8, 5.9, 6.0, 6.1, 6.2, 6.3, 6.4, 6.5, 6.6, 6.7, 6.8, 6.9, 7.0, 7.1, 7.2, 7.3, 7.4, 7.5, 7.6, 7.7, 7.8, 7.9, 8.0, 8.1, 8.2, 8.3, 8.4, 8.5, 8.6, 8.7, 8.8, 8.9, 9.0, 9.1, 9.2, 9.3, 9.4, 9.5, 9.6, 9.7, 9.8, 9.9 or 10.0.

Alkali metal oxides $R_2O$ ($R_2O$ is one or both of $Na_2O$ and $K_2O$) can promote the precipitation of lithium metasilicate crystals and improve the transmittance of the blackened portions of the microcrystalline glass and microcrystalline glass product. When the content of $R_2O$ is less than 2%, the crystal content in the microcrystalline glass and microcrystalline glass product decreases, the transmittance of the blackened portions increases, and the blackening effect may even fail to be achieved; when the content of $R_2O$ is greater than 12%, the Young's modulus and drop ball test height of the glass decrease, while the refractive index, dielectric constant, and dielectric loss of the glass increase. Therefore, the content of $R_2O$ is confined to 2-12%, preferably 3-10%, more preferably 4-8%. In some implementations, it can comprise about 2%, 2.5%, 3%, 3.5%, 4%, 4.5%, 5%, 5.5%, 6%, 6.5%, 7%, 7.5%, 8%, 8.5%, 9%, 9.5%, 10%, 10.5%, 11%, 11.5% or 12% of $R_2O$.

$Al_2O_3$ can inhibit the reduction in the transmittance of the transparent portions of the microcrystalline glass and microcrystalline glass product after mask exposure and heat treatment, enhance the strength and hardness of the glass, and improve the chemical stability of the glass. When the content of $Al_2O_3$ is less than 3%, the hardness and Young's modulus of the glass decrease, and the coefficient of linear expansion increases; when the content of $Al_2O_3$ exceeds 12%, the dielectric constant and dielectric loss of the glass increase, the crystal content in the blackened portions of the microcrystalline glass and microcrystalline glass product decreases, the transmittance of the blackened portions increases, and the blackening effect may even fail to be achieved. Therefore, the content of $Al_2O_3$ is 3-12%, preferably 4-10%, more preferably 5-9%. In some implementations, it can comprise about 3%, 3.5%, 4%, 4.5%, 5%, 5.5%, 6%, 6.5%, 7%, 7.5%, 8%, 8.5%, 9%, 9.5%, 10%, 10.5%, 11%, 11.5% or 12% of $Al_2O_3$.

In some implementations, when the total content of $R_2O$, $Li_2O$ and $Al_2O_3$ ($R_2O+Li_2O+Al_2O_3$) is less than 15%, the refractive index, hardness, and Young's modulus of the glass decrease; when $R_2O+Li_2O+Al_2O_3$ is greater than 30%, the dielectric constant and dielectric loss of the glass increase. Therefore, $R_2O+Li_2O+Al_2O_3$ is preferably 15-30%, $R_2O+Li_2O+Al_2O_3$ is more preferably 17.5-29.5%, $R_2O+Li_2O+Al_2O_3$ is further preferably 18.5-26%, $R_2O+Li_2O+Al_2O_3$ is more further preferably 20-25%. In some implementations, $R_2O+Li_2O+Al_2O_3$ is about 15%, 15.5%, 16%, 16.5%, 17%, 17.5%, 18%, 18.5%, 19%, 19.5%, 20%, 20.5%, 21%, 21.5%, 22%, 22.5%, 23%, 23.5%, 24%, 24.5%, 25%, 25.5%, 26%, 26.5%, 27%, 27.5%, 28%, 28.5%, 29%, 29.5% or 30%.

The inventors have found through extensive experimental research that, in some implementations, by controlling the ratio of the total content of $SiO_2$ and $Al_2O_3$ ($SiO_2+Al_2O_3$) to the total content of $Li_2O$, $Na_2O$ and $K_2O$ ($Li_2O+Na_2O+K_2O$), i.e., ($SiO_2+Al_2O_3$)/($Li_2O+Na_2O+K_2O$), within the range of 3.0-7.5, the blackened portions of the microcrystalline glass and microcrystalline glass product exhibit lower transmittance, and the refractive index of the glass is low, which can reduce the reflectivity of optical signals on the glass surface and increase the incidence rate of optical signals. Therefore, ($SiO_2+Al_2O_3$)/($Li_2O+Na_2O+K_2O$) is preferably 3.0-7.5, ($SiO_2+Al_2O_3$)/($Li_2O+Na_2O+K_2O$) is more preferably 3.7-6.5, ($SiO_2+Al_2O_3$)/($Li_2O+Na_2O+K_2O$) is further preferably 4.3-6.0, ($SiO_2+Al_2O_3$)/($Li_2O+Na_2O+K_2O$) is more further preferably 4.8-5.8. In some implementations, the value of ($SiO_2+Al_2O_3$)/($Li_2O+Na_2O+K_2O$) can be 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 6.1, 6.2, 6.3, 6.4, 6.5, 6.6, 6.7, 6.8, 6.9, 7.0, 7.1, 7.2, 7.3, 7.4 or 7.5.

$ZrO_2$ can modulate the precision of black pattern formation in the blackened portions of the glass after mask exposure, enhance the interface discrimination between the exposed and unexposed portions, and prevent devitrification near the interface position after the unexposed portion is subjected to heat treatment, thereby maintaining high transmittance within the visible light band after the unexposed portion is subjected to heat treatment, while ensuring that the blackened portions have low transmittance after the exposed portion is subjected to heat treatment. When the content of $ZrO_2$ is less than 1.5%, the coefficient of expansion of the glass increases, and the unexposed portion is prone to devitrification during heat treatment, leading to reduced transmittance in the transparent portions. When the content of $ZrO_2$ is higher than 10%, the crystal content in the microcrystalline glass and microcrystalline glass product decreases, the transmittance of the blackened portions increases, and the blackening effect may even fail to be achieved. Therefore, the

content of $ZrO_2$ is 1.5-10%, preferably 2-8%, more preferably 3-6.5%. In some implementations, it can comprise about 1.5%, 2%, 2.5%, 3%, 3.5%, 4%, 4.5%, 5%, 5.5%, 6%, 6.5%, 7%, 7.5%, 8%, 8.5%, 9%, 9.5% or 10% of $ZrO_2$.

In some implementations, by controlling the ratio of the total content of $K_2O$ and $Na_2O$ ($K_2O+Na_2O$) to the content of $ZrO_2$, i.e., $(K_2O+Na_2O)/ZrO_2$, within the range of 0.5-7.1, the transparent portions of the microcrystalline glass and microcrystalline glass product exhibit high transmittance, and the glass possesses high hardness and Young's modulus, as well as low dielectric constant. Therefore, $(K_2O+Na_2O)/ZrO_2$ is preferably 0.5-7.1, $(K_2O+Na_2O)/ZrO_2$ is more preferably 0.7-4.5, $(K_2O+Na_2O)/ZrO_2$ is further preferably 0.8-2.5. In some implementations, the value of $(K_2O+Na_2O)/ZrO_2$ can be 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.5, 4.6, 4.7, 4.8, 4.9, 5.0, 5.1, 5.2, 5.3, 5.4, 5.5, 6.0, 6.5, 7.0 or 7.1.

In some implementations, by controlling the ratio of the content of $Li_2O$ to the content of $ZrO_2$, i.e., $Li_2O/ZrO_2$, within the range of 1.0-7.5, the glass can achieve low refractive index and dielectric loss. This can improve the precision of pattern formation within the microcrystalline glass and microcrystalline glass product after mask exposure and heat treatment of the glass, resulting in high transmittance in the transparent portions and low transmittance in the blackened portions of the microcrystalline glass and microcrystalline glass product. Therefore, $Li_2O/ZrO_2$ is preferably 1.0-7.5, $Li_2O/ZrO_2$ is more preferably 1.2-5.0, $Li_2O/ZrO_2$ is further preferably 1.4-4.3, $Li_2O/ZrO_2$ is more further preferably 1.6-3.0. In some implementations, the value of $Li_2O/ZrO_2$ can be 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.5, 6.0, 6.5, 7.0 or 7.5.

In some implementations, by controlling the ratio of the total content of $SiO_2$ and $Li_2O$ ($SiO_2+Li_2O$) to the content of $ZrO_2$, i.e., $(SiO_2+Li_2O)/ZrO_2$, within the range of 8.0-55.0, the hardness and drop ball test height of the glass can be increased, the coefficient of expansion and dielectric constant of the glass can be reduced, the precision of pattern formation within the microcrystalline glass and microcrystalline glass product can be improved after mask exposure and heat treatment of the glass, and the drop ball test height of the microcrystalline glass and microcrystalline glass product can be improved; and the transmittance in the blackened portions of the microcrystalline glass and microcrystalline glass product is low. Therefore, $(SiO_2+Li_2O)/ZrO_2$ is preferably 8.0-55.0, $(SiO_2+Li_2O)/ZrO_2$ is more preferably 10.0-37.0, $(SiO_2+Li_2O)/ZrO_2$ is further preferably 12.0-25.0, $(SiO_2+Li_2O)/ZrO_2$ is more further preferably 13.0-20.0. In some implementations, the value of $(SiO_2+Li_2O)/ZrO_2$ can be 8.0, 8.5, 9.0, 9.5, 10.0, 10.5, 11.0, 11.5, 12.0, 12.5, 13.0, 13.5, 14.0, 14.5, 15.0, 15.5, 16.0, 16.5, 17.0, 17.5, 18.0, 18.5, 19.0, 19.5, 20.0, 20.5, 21.0, 21.5, 22.0, 22.5, 23.0, 23.5, 24.0, 24.5, 25.0, 25.5, 26.0, 26.5, 27.0, 27.5, 28.0, 28.5, 29.0, 29.5, 30.0, 30.5, 31.0, 31.5, 32.0, 32.5, 33.0, 33.5, 34.0, 34.5, 35.0, 35.5, 36.0, 36.5, 37.0, 38.0, 39.0, 40.0, 41.0, 42.0, 43.0, 44.0, 45.0, 46.0, 47.0, 48.0, 49.0, 50.0, 51.0, 52.0, 53.0, 54.0 or 55.0.

Alkaline-earth metal oxide MO (MO is one or more of MgO, CaO, SrO, BaO and ZnO) can improve the dielectric constant of the glass and improve the transmittance of the blackened portions of the microcrystalline glass and microcrystalline glass product. However, when the content of MO is higher than 5%, the dielectric constant and dielectric loss of the glass increase, and the Young's modulus and drop ball test height of the glass decrease. Therefore, the content of MO in the present invention is confined to 0-5%, preferably 0-3%, more preferably 0-1%, further preferably 0%. In some implementations, it can comprise about 0%, greater than 0%, 0.01%, 0.05%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, 2.1%, 2.2%, 2.3%, 2.4%, 2.5%, 2.6%, 2.7%, 2.8%, 2.9%, 3%, 3.1%, 3.2%, 3.3%, 3.4%, 3.5%, 3.6%, 3.7%, 3.8%, 3.9%, 4%, 4.1%, 4.2%, 4.3%, 4.4%, 4.5%, 4.6%, 4.7%, 4.8%, 4.9% or 5% of MO.

In some implementations, when the $MO/ZrO_2$ ratio is greater than 2.5, the dielectric loss of the glass increases, the hardness, Young's modulus, and drop ball test height of the glass decrease, and the transmittance of the blackened portions of the microcrystalline glass and microcrystalline glass product increases. Therefore, $MO/ZrO_2$ is preferably 2.5 or less, $MO/ZrO_2$ is more preferably 1.5 or less, $MO/ZrO_2$ is further preferably 0.5 or less. In some implementations, the value of $MO/ZrO_2$ can be 0, greater than 0, 0.01, 0.05, 0.1, 0.2, 0.3, 0.4, 0.5, 0.6, 0.7, 0.8, 0.9, 1, 1.1, 1.2, 1.3, 1.4, 1.5, 1.6, 1.7, 1.8, 1.9, 2, 2.1, 2.2, 2.3, 2.4 or 2.5.

$CeO_2$, as a photosensitizer, provides electrons for components such as Ag, Sb and Sn. When the content of $CeO_2$ is less than 0.01%, it cannot supply sufficient electrons, resulting in an excessively low crystal content in the microcrystalline glass, thereby reducing the transmittance of the blackened portions of the microcrystalline glass and microcrystalline glass product, and reducing the Young's modulus of the microcrystalline glass and microcrystalline glass product. When the content of $CeO_2$ is higher than 0.6%, the transmittance of the transparent portions of the microcrystalline glass and microcrystalline glass product decreases, and the penetration depth of the microcrystalline glass and microcrystalline glass product within the ultraviolet band is reduced, the crystal content in the blackened portions of the microcrystalline glass and microcrystalline glass product decreases, and the transmittance increases. Therefore, the content of $CeO_2$ is 0.01-0.6%, preferably 0.07-0.4%, more preferably 0.08-0.3%. In some implementations, it can comprise about 0.01%, 0.02%, 0.03%, 0.04%, 0.05%, 0.06%, 0.07%, 0.08%, 0.09%, 0.1%, 0.11%, 0.12%, 0.13%, 0.14%, 0.15%, 0.16%, 0.17%, 0.18%, 0.19%, 0.2%, 0.21%, 0.22%, 0.23%, 0.24%, 0.25%, 0.26%, 0.27%, 0.28%, 0.29%, 0.3%, 0.31%, 0.32%, 0.33%, 0.34%, 0.35%, 0.36%, 0.37%, 0.38%, 0.39%, 0.4%, 0.41%, 0.42%, 0.43%, 0.44%, 0.45%, 0.46%, 0.47%, 0.48%, 0.49%, 0.5%, 0.51%, 0.52%, 0.53%, 0.54%, 0.55%, 0.56%, 0.57%, 0.58%, 0.59% or 0.6% of $CeO_2$.

$Ag_2O$, as a nucleating agent for the microcrystalline glass and microcrystalline glass product of the present invention, plays a role in improving the blackening effect of the microcrystalline glass and microcrystalline glass product. When the content of $Ag_2O$ is less than 0.01%, the transmittance of the blackened portions of the microcrystalline glass and microcrystalline glass product increases, and blackening may even fail to occur. Moreover, the drop ball test height of the microcrystalline glass and microcrystalline glass product decreases, the coefficient of expansion increases, and the pattern precision is reduced. When the content of $Ag_2O$ exceeds 0.8%, the transmittance of the transparent portions decreases during the molding or heat treatment of the glass. Moreover, due to the excessively high content of crystal nucleus, the number of crystals within the microcrystalline glass and microcrystalline glass product increases, leading to excessively refined grain size. This weakens the scattering effect of the crystals in the blackened portions on the visible light, which easily leads to an increase in the transmittance of the blackened portions. In addition, the glass is prone to devitrification during the molding process. Therefore, the content of $Ag_2O$ is confined to 0.01-0.8%, preferably 0.1-0.6%, more preferably 0.2-0.5%. In some implementations, it can comprise about 0.01%, 0.02%, 0.03%, 0.04%, 0.05%, 0.06%, 0.07%, 0.08%, 0.09%, 0.1%, 0.11%, 0.12%, 0.13%, 0.14%, 0.15%, 0.16%, 0.17%, 0.18%, 0.19%, 0.2%, 0.21%, 0.22%, 0.23%, 0.24%, 0.25%, 0.26%, 0.27%, 0.28%, 0.29%, 0.3%, 0.31%, 0.32%, 0.33%, 0.34%, 0.35%, 0.36%, 0.37%, 0.38%, 0.39%, 0.4%, 0.41%, 0.42%, 0.43%, 0.44%, 0.45%, 0.46%, 0.47%, 0.48%, 0.49%, 0.5%, 0.51%, 0.52%, 0.53%, 0.54%, 0.55%, 0.56%, 0.57%, 0.58%, 0.59%, 0.6%, 0.61%, 0.62%, 0.63%, 0.64%, 0.65%, 0.66%, 0.67%, 0.68%, 0.69%, 0.7%, 0.71%, 0.72%, 0.73%, 0.74%, 0.75%, 0.76%, 0.77%, 0.78%, 0.79% or 0.8% of $Ag_2O$.

The inventors have found through research that, in some implementations, by controlling the ratio of the content of $Ag_2O$ to the content of $CeO_2$, i.e., $Ag_2O/CeO_2$, within the range of 1.0-10.0, the grain size of the blackened portions of the microcrystalline glass and microcrystalline glass product is large, the crystal content is higher, and stronger light scattering effect on the visible light band is achieved. In addition, the transmittance of the blackened portions is low, and the hardness and drop ball test height of the microcrystalline glass and microcrystalline glass product increase. Therefore, $Ag_2O/CeO_2$ is preferably 1.0-10.0, $Ag_2O/CeO_2$ is more preferably 1.5-6.5, $Ag_2O/CeO_2$ is further preferably 2.0-4.5. In some implementations, the value of $Ag_2O/CeO_2$ can be 1.0, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.5, 6.0, 6.5, 7.0, 7.5, 8.0, 8.5, 9.0, 9.5 or 10.0.

In some implementations, controlling the ratio of the content of $ZrO_2$ to the total content of $Ag_2O$ and $CeO_2$ ($Ag_2O+CeO_2$), i.e., $ZrO_2/(Ag_2O+CeO_2)$, within the range of 2.3-50.0 can optimize the coefficient of expansion of the glass, improve the precision of pattern formation within the microcrystalline glass after mask exposure and heat treatment. Meanwhile, the transparent portions of the microcrystalline glass and microcrystalline glass product exhibit high transmittance, while the blackened portions exhibit low transmittance. In addition, it can enhance the hardness and drop ball height of the glass and microcrystalline glass product. Therefore, $ZrO_2/(Ag_2O+CeO_2)$ is preferably 2.3-50.0, $ZrO_2/(Ag_2O+CeO_2)$ is more preferably 6.5-35.0, $ZrO_2/(Ag_2O+CeO_2)$ is further preferably 8.5-20.0, $ZrO_2/(Ag_2O+CeO_2)$ is more further preferably 11.0-18.0. In some implementations, the value of $ZrO_2/(Ag_2O+CeO_2)$ can be 2.3, 2.5, 3.0, 3.5, 4.0, 4.5, 5.0, 5.5, 6.0, 6.5, 7.0, 7.5, 8.0, 8.5, 9.0, 9.5, 10.0, 10.5, 11.0, 11.5, 12.0, 12.5, 13.0, 13.5, 14.0, 14.5, 15.0, 15.5, 16.0, 16.5, 17.0, 17.5, 18.0, 18.5, 19.0, 19.5, 20.0, 20.5, 21.0, 21.5, 22.0, 22.5, 23.0, 23.5, 24.0, 24.5, 25.0, 26.0, 27.0, 28.0, 29.0, 30.0, 31.0, 32.0, 33.0, 34.0, 35.0, 36.0, 37.0, 38.0, 39.0, 40.0, 41.0, 42.0, 43.0, 44.0, 45.0, 46.0, 47.0, 48.0, 49.0 or 50.0.

$Sb_2O_3$ and $SnO_2$ absorb electrons released by $Ce^{3+}$ during ultraviolet exposure, thereby playing the role of storing electrons and providing electrons for $Ag^+$ in subsequent heat treatment processes, thus forming Ag colloid nucleation and promoting the blackening of the microcrystalline glass. When the content of $Sb_2O_3+SnO_2$ is less than 0.05%, it is difficult for the microcrystalline glass or microcrystalline glass product to achieve the blackening effect; when the content of $Sb_2O_3+SnO_2$ is higher than 1.2%, the transmittance of the blackened regions of the microcrystalline glass or microcrystalline glass product tends to increase. Therefore, the content of $Sb_2O_3+SnO_2$ is 0.05-1.2%, preferably 0.1-1%, more preferably 0.2-0.7%. In some implementations, the content of $Sb_2O_3+SnO_2$ is about 0.05%, 0.1%, 0.15%, 0.2%, 0.25%, 0.3%, 0.35%, 0.4%, 0.45%, 0.5%, 0.55%, 0.6%, 0.65%, 0.7%, 0.75%, 0.8%, 0.85%, 0.9%, 0.95%, 1.0%, 1.05%, 1.1%, 1.15% or 1.2%.

$SnO_2$ can effectively promote the blackening of the microcrystalline glass. However, in some implementations, when the content of $SnO_2$ is higher than 0.5%, the transmittance of the transparent region decreases during molding or heat treatment of the glass, or devitrification may even occur. Therefore, the content of $SnO_2$ is confined to 0-0.5%, preferably 0-0.3%, more preferably 0-0.2%. The content of $Sb_2O_3$ is confined to 0-1%, preferably 0.01-0.7%, more preferably 0.07-0.5%. In some implementations, it can comprise about 0%, greater than 0%, 0.01%, 0.02%, 0.03%, 0.04%, 0.05%, 0.06%, 0.07%, 0.08%, 0.09%, 0.1%, 0.11%, 0.12%, 0.13%, 0.14%, 0.15%, 0.16%, 0.17%, 0.18%, 0.19%, 0.2%, 0.21%, 0.22%, 0.23%, 0.24%, 0.25%, 0.26%, 0.27%, 0.28%, 0.29%, 0.3%, 0.31%, 0.32%, 0.33%, 0.34%, 0.35%, 0.36%, 0.37%, 0.38%, 0.39%, 0.4%, 0.41%, 0.42%, 0.43%, 0.44%, 0.45%, 0.46%, 0.47%, 0.48%, 0.49% or 0.5% of $SnO_2$. In some implementations, it can comprise about 0%, greater than 0%, 0.01%, 0.02%, 0.03%, 0.04%, 0.05%, 0.06%, 0.07%, 0.08%, 0.09%, 0.1%, 0.11%, 0.12%, 0.13%, 0.14%, 0.15%, 0.16%, 0.17%, 0.18%, 0.19%, 0.2%, 0.21%, 0.22%, 0.23%, 0.24%, 0.25%, 0.26%, 0.27%, 0.28%, 0.29%, 0.3%, 0.31%, 0.32%, 0.33%, 0.34%, 0.35%, 0.36%, 0.37%, 0.38%, 0.39%, 0.4%, 0.41%, 0.42%, 0.43%, 0.44%, 0.45%, 0.46%, 0.47%, 0.48%, 0.49%, 0.5%, 0.55%, 0.6%, 0.65%, 0.7%, 0.75%, 0.8%, 0.85%, 0.9%, 0.95% or 1% of $Sb_2O_3$.

The inventors have found through extensive experimental research that, in some implementations, controlling the ratio of the total content of $Sb_2O_3$ and $SnO_2$ ($Sb_2O_3+SnO_2$) to the content of $Ag_2O$, i.e., ($Sb_2O_3+SnO_2$)/$Ag_2O$, within the range of 0.1-5.0 can reduce the dielectric loss of the glass, and increase the drop ball test height of the glass and microcrystalline glass product, resulting in high transmittance in the transparent regions of the microcrystalline glass and microcrystalline glass product and low transmittance in the blackened regions. Therefore, ($Sb_2O_3+SnO_2$)/$Ag_2O$ is preferably 0.1-5.0, ($Sb_2O_3+SnO_2$)/$Ag_2O$ is more preferably 0.5-3.5, ($Sb_2O_3+SnO_2$)/$Ag_2O$ is further preferably 1.0-2.6. In some implementations, the value of ($Sb_2O_3+SnO_2$)/$Ag_2O$ can be 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9 or 5.0.

In some implementations, controlling the ratio of the total content of $Ag_2O$, $SnO_2$, and $Sb_2O_3$ ($Ag_2O+SnO_2+Sb_2O_3$) to the content of $CeO_2$, i.e., ($Ag_2O+SnO_2+Sb_2O_3$)/$CeO_2$, within the range of 1.0-30.0 can result in lower transmittance in the blackened regions of the microcrystalline glass and microcrystalline glass products, reduce the dielectric constant of the glass, and meanwhile increase the hardness and Young's modulus. Therefore, ($Ag_2O+SnO_2+Sb_2O_3$)/$CeO_2$ is preferably 1.0-30.0, ($Ag_2O+SnO_2+Sb_2O_3$)/$CeO_2$ is more preferably 3.0-20.0, ($Ag_2O+SnO_2+Sb_2O_3$)/$CeO_2$ is further preferably 5.0-12.5, ($Ag_2O+SnO_2+Sb_2O_3$)/$CeO_2$ is more further preferably 7.5-10.0. In some implementations, the value of ($Ag_2O+SnO_2+Sb_2O_3$)/$CeO_2$ can be 1.0, 1.5, 2.0, 2.5, 3.0, 3.5, 4.0, 4.5, 5.0, 5.5, 6.0, 6.5, 7.0, 7.5, 8.0, 8.5, 9.0, 9.5, 10.0, 10.5, 11.0, 11.5, 12.0, 12.5, 13.0, 13.5, 14.0, 14.5, 15.0, 15.5, 16.0, 16.5, 17.0, 17.5, 18.0, 18.5, 19.0, 19.5, 20.0, 20.5, 21.0, 21.5, 22.0, 22.5, 23.0, 23.5, 24.0, 24.5, 25.0, 25.5, 26.0, 26.5, 27.0, 27.5, 28.0, 28.5, 29.0, 29.5 or 30.0.

In some implementations, controlling the ratio of the total content of $Sb_2O_3$, $SnO_2$, and $CeO_2$ ($Sb_2O_3+SnO_2+CeO_2$) to the content of $Ag_2O$, i.e., ($Sb_2O_3+SnO_2+CeO_2$)/$Ag_2O$, within the range of 0.1-10.0 can reduce the dielectric loss and coefficient of expansion of the glass, resulting in low transmittance in the blackened regions of the microcrystalline glass and microcrystalline glass product. Therefore, ($Sb_2O_3+SnO_2+CeO_2$)/$Ag_2O$ is preferably 0.1-10.0, ($Sb_2O_3+SnO_2+CeO_2$)/$Ag_2O$ is more preferably 0.4-5.0, ($Sb_2O_3+SnO_2+CeO_2$)/$Ag_2O$ is further preferably 0.7-3.7, ($Sb_2O_3+SnO_2+CeO_2$)/$Ag_2O$ is more further preferably 1.5-3.2. In some implementations, the value of ($Sb_2O_3+SnO_2+CeO_2$)/$Ag_2O$ can be 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 6.1, 6.2, 6.3, 6.4, 6.5, 6.6, 6.7, 6.8, 6.9, 7.0, 7.5, 8.0, 8.5, 9.0, 9.5 or 10.0.

In some implementations, when the value of $SnO_2$/($CeO_2+SnO_2$) is greater than 0.9, the transmittance of the transparent regions of the glass decreases sharply during molding or heat treatment of the glass, or devitrification may even occur. Therefore, $SnO_2$/($CeO_2+SnO_2$) is preferably 0-0.9, $SnO_2$/($CeO_2+SnO_2$) is more preferably 0-0.6, $SnO_2$/($CeO_2+SnO_2$) is further preferably 0-0.5. In some implementations, the value of $SnO_2$/($CeO_2+SnO_2$) can be 0, greater than 0, 0.01, 0.02, 0.03, 0.04, 0.05, 0.07, 0.1, 0.13, 0.15, 0.17, 0.2, 0.23, 0.25, 0.27, 0.3, 0.33, 0.35, 0.37, 0.4, 0.43, 0.45, 0.47, 0.5, 0.53, 0.55, 0.57, 0.6, 0.63, 0.65, 0.67, 0.7, 0.73, 0.75, 0.77, 0.8, 0.83, 0.85, 0.87 or 0.9.

$Ln_2O_3$ ($Ln_2O_3$ is one or more of $La_2O_3$, $Gd_2O_3$ and $Y_2O_3$) can adjust the dielectric constant and dielectric loss of the glass, provide electrons for $Ag^+$, and promote the blackening of the microcrystalline glass. When the content of $Ln_2O_3$ is higher than 5%, the transmittance of the blackened regions of the microcrystalline glass and microcrystalline glass product increases, and the dielectric constant and dielectric loss of the glass also increase. Therefore, the content of $Ln_2O_3$ is confined to 0-5%, preferably 0-3%, more preferably 0-1%. In some implementations, it further preferably contains no $Ln_2O_3$. In some implementations, it can comprise about 0%, greater than 0%, 0.01%, 0.05%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, 2.1%, 2.2%, 2.3%, 2.4%, 2.5%, 2.6%, 2.7%, 2.8%, 2.9%, 3%, 3.1%, 3.2%, 3.3%, 3.4%, 3.5%, 3.6%, 3.7%, 3.8%, 3.9%, 4%, 4.1%, 4.2%, 4.3%, 4.4%, 4.5%, 4.6%, 4.7%, 4.8%, 4.9% or 5% of $Ln_2O_3$.

$Fe_2O_3$ can absorb ultraviolet light during the ultraviolet exposure process of the glass, provide electrons for $Ag^+$, and promote the blackening of the microcrystalline glass. When the content of $Fe_2O_3$ is higher than 1%, the transmittance of the transparent regions of the microcrystalline glass and microcrystalline glass product within the visible light band range decreases, the transmittance of the blackened regions increases, and the drop ball test height of the microcrystalline glass and microcrystalline glass product decreases. Therefore, the content of $Fe_2O_3$ is confined to 0-1%, preferably 0-0.5%, more preferably 0-0.2%. In some implementations, it further preferably contains no $Fe_2O_3$. In some implementations, it can comprise about 0%, greater than 0%, 0.01%, 0.02%, 0.03%, 0.04%, 0.05%, 0.06%, 0.07%, 0.08%, 0.09%, 0.1%, 0.11%, 0.12%, 0.13%, 0.14%, 0.15%, 0.16%, 0.17%, 0.18%, 0.19%, 0.2%, 0.21%, 0.22%, 0.23%, 0.24%, 0.25%, 0.26%, 0.27%, 0.28%, 0.29%, 0.3%, 0.31%, 0.32%, 0.33%, 0.34%, 0.35%, 0.36%, 0.37%, 0.38%, 0.39%, 0.4%, 0.41%, 0.42%, 0.43%, 0.44%, 0.45%, 0.46%, 0.47%, 0.48%, 0.49%, 0.5%, 0.55%, 0.6%, 0.65%, 0.7%, 0.75%, 0.8%, 0.85%, 0.9%, 0.95% or 1% of $Fe_2O_3$.

The terms "not contained" and "0%" as used herein mean that the compound, molecule or element and the like are not intentionally added to the matrix glass, microcrystalline glass or microcrystalline glass product provided by the present invention as raw materials; however, as raw materials and/or equipment for the production of matrix glass, microcrystalline glass or microcrystalline glass product, there will be some impurities or components that are not intentionally added in small or trace amounts in the final matrix glass, microcrystalline glass or microcrystalline glass product, and this situation also falls within the protection scope of the present invention patent.

The following methods are adopted to test the performance indexes of the microcrystalline glass and/or microcrystalline glass product and/or matrix glass provided by the present invention:

<Light transmittance>

The light transmittance is tested as follows: the sample to be tested is processed to a certain thickness, and the opposite surfaces are subject to parallel polishing. The test is conducted in accordance with the Chinese National Standard *GB/T 7962.12-2010.*

<Coefficient of linear expansion>

The coefficient of linear expansion at the temperature of 20°C-300°C ($\alpha_{20°C-300°C}$) is tested in accordance with the Chinese National Standard *GB/T 7962.16-2010.* The coefficient of linear expansion is sometimes referred to as the coefficient of expansion in the present invention.

<Dielectric constant>

The dielectric constant ($\varepsilon_r$) is tested in accordance with the Chinese National Standard *GB/T 7265.1-1987* under the condition of 1GHz.

<Dielectric loss>

The dielectric loss ($\tan\delta$) is tested in accordance with the Chinese National Standard *GB/T 7265.1-1987* under the condition of 1GHz.

<Drop ball test height>

A $\varphi20\times1$mm sample is placed onto a glass bearing fixture, and a 32g steel ball falls from the specified height. The drop ball test height refers to the maximum drop ball test height where the sample can withstand impact without causing fracture. Specifically, the test starts from a drop ball test height of 100mm. If no fracture occurs, the height is successively changed by 100mm, 200mm, 300mm, 400mm, 500mm, 600mm, 700mm, 800mm, 900mm, 100mm, 1000mm, 1100mm, 1200mm, and above. For the embodiments with "drop ball test height II", the microcrystalline glass product is taken as the test object. The test data recorded as 1000mm in the embodiment means that even when the steel ball drops from the height of 1000mm, the microcrystalline glass product has no fracture and the impact is withstood. For embodiments with "Drop Ball Test Height I", the matrix glass is taken as the test object. The drop ball test height in the present invention is sometimes referred to as drop ball height.

<Knoop hardness>

It is expressed by the load (N) when a diamond quadrangular indenter with an opposite plane angle of 172.5° is pressed into a pyramid-shaped depression on the test surface divided by the surface area (mm$^2$) calculated by the length of the depression. The test load is 100(N), and the holding time is 15 (seconds). In the present invention, Knoop hardness is sometimes referred to as hardness.

<Young's modulus>

The Young's modulus (E) is tested by ultrasonic wave for P-wave velocity and S-wave velocity, and then calculated according to the following formula.

$$E = \frac{4G^2 - 3GV_T^2\rho}{G - V_T^2\rho}$$

$$G = V_S^2\rho$$

Wherein: E refers to Young's modulus, Pa;

G refers to shear modulus, Pa;
$V_T$ refers to S-wave velocity, m/s;
$V_S$ refers to P-wave velocity, m/s;
$\rho$ refers to glass density, $g/cm^3$.

<Refractive index>

The refractive index ($n_d$) is tested as per the method specified in *GB/T7962.1-2010*.
The matrix glass provided by the present invention has the properties as below:

1) In some implementations, the refractive index ($n_d$) of the matrix glass provided by the present invention is 1.51-1.55, preferably 1.52-1.54, more preferably 1.53-1.535, further preferably 1.53112-1.53284.
2) In some implementations, Young's modulus (E) of the matrix glass provided by the present invention is $7000\times10^7Pa$-$9500\times10^7Pa$, preferably $7500\times10^7Pa$-$9200\times10^7Pa$, more preferably $7836\times10^7Pa$-$9014\times10^7Pa$, further preferably $8005\times10^7Pa$-$8488\times10^7Pa$.
3) In some implementations, the Knoop hardness ($Hk_{0.1}$) of the matrix glass provided by the present invention is $450kgf/mm^2$ or more, preferably $470$-$600kgf/mm^2$, more preferably $480$-$582kgf/mm^2$, further preferably $492$-$532$ $kgf/mm^2$.
4) In some implementations, the Drop Ball Test Height I of the matrix glass according to the present invention is 200mm or more, preferably 300mm or more, and more preferably 400mm or more.
5) In some implementations, the dielectric loss ($\tan\delta$) of the matrix glass provided by the present invention is $11.0\times10^{-3}$ or less, preferably $7.0\times10^{-3}$-$10.5\times10^{-3}$, more preferably $7.2\times10^{-3}$-$9.8\times10^{-3}$, further preferably $7.4\times10^{-3}$-$9.2\times10^{-3}$.
6) In some implementations, the dielectric constant ($\varepsilon_r$) of the matrix glass provided by the present invention is 5.5-8.5, preferably 6.0-8.0, more preferably 6.2-7.7, further preferably 6.3-7.0.
7) In some implementations, the Linear Expansion Coefficient ($\alpha_{20°C\text{-}300°C}$) of the matrix glass provided by the present invention is $100\times10^{-7}/°C$ or less, preferably $65\times10^{-7}/°C$-$100\times10^{-7}/°C$, more preferably $71\times10^{-7}/°C$-$95\times10^{-7}/°C$, further preferably $75\times10^{-7}/°C$-$90\times10^{-7}/°C$.

The microcrystalline glass provided by the present invention has the properties as below:

1) In some implementations, the average transmittance ($T_{400\text{-}800nm}$) of the transparent region of the microcrystalline glass with a thickness of 0.2-1.5mm within the band range of 400-800nm is 85.0% or more, preferably 88.0% or more, more preferably 90.0% or more, further preferably 91.0% or more, and more further preferably 91.5-95.0%. The aforementioned thickness is preferably 0.5-1.5mm, more preferably 0.8-1.2mm, and further preferably 0.5mm, 0.7mm, 0.8mm, 0.9mm, 1.0mm, 1.1mm, or 1.2mm.
2) In some implementations, the average transmittance ($T_{400\text{-}800nm}$) of the blackened region of the microcrystalline glass with a thickness of 0.2-1.5mm within the band range of 400-800nm is 5.0% or less, preferably 3.0% or less, more preferably 1.5% or less, further preferably 1.2% or less, and more further preferably 0.5% or less. The aforementioned thickness is preferably 0.5-1.5mm, more preferably 0.8-1.2mm, and further preferably 0.5mm, 0.7mm, 0.8mm, 0.9mm, 1.0mm, 1.1mm, or 1.2mm.
3) In some implementations, the transmittance at 870nm ($T_{870nm}$) of the blackened region of the microcrystalline glass with a thickness of 0.2-1.5mm is 15.0% or less, preferably 0.1-12.5%, more preferably 0.1-10%, further preferably 0.1-8.0%, and more further preferably 0.1-5.0%. The aforementioned thickness is preferably 0.5-1.5mm, more preferably 0.8-1.2mm, and further preferably 0.5mm, 0.7mm, 0.8mm, 0.9mm, 1.0mm, 1.1mm, or 1.2mm.
4) In some implementations, the transmittance at 940nm ($T_{940nm}$) of the blackened region of the microcrystalline glass with a thickness of 0.2-1.5mm is 50.0% or less, preferably 0.1-35.0%, more preferably 0.3-20.0%, further preferably 0.3-15.0%, and more further preferably 0.3-10.0%. The aforementioned thickness is preferably 0.5-1.5mm, more preferably 0.8-1.2mm, and further preferably 0.5mm, 0.7mm, 0.8mm, 0.9mm, 1.0mm, 1.1mm, or 1.2mm.

In some implementations, since the transparent region of the microcrystalline glass according to the present invention does not undergo crystallization, the microcrystalline glass exhibits the same properties as the matrix glass, such as Young's modulus (E), Knoop hardness ($Hk_{0.1}$), drop ball test height, dielectric loss ($\tan\delta$), dielectric constant ($\varepsilon_r$), and coefficient of linear expansion ($\alpha_{20°C\text{-}300°C}$). Specifically, in some implementations, the Young's modulus (E) of the transparent portion of the microcrystalline glass according to the present invention is $7000\times10^7Pa$-$9500\times10^7Pa$, preferably $7500\times10^7Pa$-$9200\times10^7Pa$, more preferably $7836\times10^7Pa$-$9014\times10^7Pa$, and further preferably $8005\times10^7Pa$-$8488\times10^7Pa$. In some implementations, the Knoop hardness ($Hk_{0.1}$) of the transparent portion of the microcrystalline glass according to the present invention is 450kgf/mm$^2$ or more, preferably 470-600kgf/mm$^2$, more preferably 480-582kgf/mm$^2$, and further preferably 492-532kgf/mm$^2$. In some implementations, the drop ball test height of the transparent portion of the microcrystalline glass according to the present invention is 200mm or more, preferably 300mm or more, and more preferably 400mm or more. In some implementations, the dielectric loss (tan$\delta$) of the transparent portion of the microcrystalline glass according to the present invention is $11.0 \times 10^{-3}$ or less, preferably $7.0 \times 10^{-3}$-$10.5 \times 10^{-3}$, more preferably $7.2 \times 10^{-3}$-$9.8 \times 10^{-3}$, and further preferably $7.4 \times 10^{-3}$-$9.2 \times 10^{-3}$. In some implementations, the dielectric constant ($\varepsilon_r$) of the transparent portion of the microcrystalline glass according to the present invention is 5.5-8.5, preferably 6.0-8.0, more preferably 6.2-7.7, and further preferably 6.3-7.0. In some implementations, the coefficient of linear expansion ($\alpha_{20°C\text{-}300°C}$) of the transparent portion of the microcrystalline glass according to the present invention is $100 \times 10^{-7}$/°C or less, preferably $65 \times 10^{-7}$/°C-$100 \times 10^{-7}$/°C, more preferably $71 \times 10^{-7}$/°C-$95 \times 10^{-7}$/°C, and further preferably $75 \times 10^{-7}$/°C-$90 \times 10^{-7}$/°C.

The microcrystalline glass product provided by the present invention has the properties as below:

1) In some implementations, the average transmittance ($T_{400\text{-}800nm}$) of the transparent region of the microcrystalline glass product with a thickness of 0.2-1.5mm within the band range of 400-800nm is 85.0% or more, preferably 88.0% or more, more preferably 90.0% or more, further preferably 91.0% or more, and more further preferably 91.5-95.0%. The aforementioned thickness is preferably 0.5-1.5mm, more preferably 0.8-1.2mm, and further preferably 0.5mm, 0.7mm, 0.8mm, 0.9mm, 1.0mm, 1.1mm, or 1.2mm.

2) In some implementations, the average transmittance ($T_{400\text{-}800nm}$) of the blackened region of the microcrystalline glass product with a thickness of 0.2-1.5mm within the band range of 400-800nm is 5.0% or less, preferably 3.0% or less, more preferably 1.5% or less, further preferably 1.2% or less, and more further preferably 0.5% or less. The aforementioned thickness is preferably 0.5-1.5mm, more preferably 0.8-1.2mm, and further preferably 0.5mm, 0.7mm, 0.8mm, 0.9mm, 1.0mm, 1.1mm, or 1.2mm.

3) In some implementations, the transmittance at 870nm ($T_{870nm}$) of the blackened region of the microcrystalline glass product with a thickness of 0.2-1.5mm is 15.0% or less, preferably 0.1-12.5%, more preferably 0.1-10%, further preferably 0.1-8.0%, and more further preferably 0.1-5.0%. The aforementioned thickness is preferably 0.5-1.5mm, more preferably 0.8-1.2mm, and further preferably 0.5mm, 0.7mm, 0.8mm, 0.9mm, 1.0mm, 1.1mm, or 1.2mm.

4) In some implementations, the transmittance at 940nm ($T_{940nm}$) of the blackened region of the microcrystalline glass product with a thickness of 0.2-1.5mm is 50.0% or less, preferably 0.1-35.0%, more preferably 0.3-20.0%, further preferably 0.3-15.0%, and more further preferably 0.3-10.0%. The aforementioned thickness is preferably 0.5-1.5mm, more preferably 0.8-1.2mm, and further preferably 0.5mm, 0.7mm, 0.8mm, 0.9mm, 1.0mm, 1.1mm, or 1.2mm.

5) In some implementations, the Drop Ball Test Height II of the microcrystalline glass product according to the present invention is 800mm or more, preferably 900mm or more, more preferably 1000mm or more, and further preferably 1100mm or more.

In some implementations, the matrix glass/microcrystalline glass/microcrystalline glass product of the present invention has low dielectric constant and dielectric loss, which can reduce the transmission loss of electrical signals.

In some implementations, the matrix glass/microcrystalline glass/microcrystalline glass product of the present invention has high Knoop hardness, Young's modulus, and drop ball height.

In some implementations, the matrix glass/microcrystalline glass/microcrystalline glass product of the present invention has low coefficient of linear expansion, thereby improving the accuracy of optical signal channels or mask patterns.

In some implementations, the matrix glass/microcrystalline glass/microcrystalline glass product of the present invention has low refractive index, which can reduce the reflectivity of surface optical signals and increase the incidence rate of optical signals.

Due to the above-mentioned excellent performance, the microcrystalline glass, microcrystalline glass product, and matrix glass provided by the present invention can be widely made into glass cover plates or glass components. Meanwhile, the microcrystalline glass, microcrystalline glass product, and matrix glass provided by the present invention as well as glass cover plates or glass components made therefrom can be applied in the production of various instruments or devices, including but not limited to electronic devices, medical instruments, decorative items, or crafts, such as mobile phone, watch, computer, and biomedical testing equipment, and can be used to fabricate local light-shielding glass or patterned cover glass for mobile phones, smart phones, tablet computers, laptops, televisions, and the like, or serve as optical signal channel glass for smart watches and biomedical medical devices, or be utilized in the production of patterned decorative or craft glass.

The matrix glass, microcrystalline glass and microcrystalline glass product provided by the present invention can be produced and manufactured by the following methods:

The manufacturing method for the matrix glass comprises the following steps: weighing raw materials based on the component ratio and mixing uniformly, placing the uniform mixture into a platinum or quartz crucible, melting at 1450-1600°C followed by clarification and homogenization, then cooling, casting the molten glass into a mould for shaping, and introducing circulating cooling air to ensure that the glass is not subject to devitrification. Preferably, the mould is preheated to 200-500°C, and the shaped glass is placed together with the mould in an annealing furnace for heat preservation and annealing, and then the power is cut off for cooling within the furnace to obtain the matrix glass.

The manufacturing method for the microcrystalline glass comprises the following steps: forming the matrix glass, performing crystallization process treatment on the matrix glass, or processing the matrix glass into a glass element of a specific shape before the crystallization process, so as to obtain the microcrystalline glass of the present invention. The method for processing into the glass element of a specific shape in the present invention includes hot pressing, grinding, polishing, and other methods known to those skilled in the art. The crystallization process treatment in the present invention comprises mask exposure treatment of the matrix glass, followed by crystallization heat treatment, in order to uniformly precipitate crystals at the exposed positions of the glass. The mask exposure treatment in the present invention refers to ultraviolet exposure at a specific position or region of the matrix glass. The ultraviolet wavelength is preferably 313nm, and dedicated photomask patterns can be customized according to application requirements. The exposure time is preferably 5-60 minutes. In the present invention, the crystallization heat treatment can be carried out through one stage or two stages, preferably two stages. The two-stage crystallization heat treatment comprises: performing nucleation process treatment under a first temperature, and then performing crystal growth process treatment under a second temperature that is higher than a nucleation process temperature. The first temperature is preferably 490°C-520°C, the treatment time under the first temperature is preferably 1-4 hours, the second temperature is preferably 540°C-620°C, and the treatment time under the second temperature is preferably 1-8 hours.

The manufacturing method for the microcrystalline glass product comprises the following steps: performing chemical strengthening on the microcrystalline glass of the present invention, or first processing the microcrystalline glass into a microcrystalline glass element of a specific shape, and then performing chemical strengthening to obtain the microcrystalline glass product of the present invention. The method for processing into a specific shape in the present invention includes hot pressing, grinding, polishing, and other methods known to those skilled in the art.

The chemical strengthening mentioned in the present invention is ion exchange method. In the process of ion exchange, the smaller metal ions in the microcrystalline glass are substituted or "exchanged" by larger metal ions with the same valence state near the microcrystalline glass. The substitution of smaller ions with larger ions can construct the compressive stress in the microcrystalline glass, so as to form the compressive stress layer.

In some implementations, metal ions belong to monovalent alkali metal ions (such as $Na^+$, $K^+$, $Rb^+$ and $Cs^+$), and the ion exchange is carried out by immersing the microcrystalline glass in the salt bath of at least one molten salt containing larger metal ions. These larger metal ions are used to substitute the smaller metal ions in the microcrystalline glass. Or other monovalent metal ions, such as $Ag^+$, $Tl^+$ and $Cu^+$, can also be used to exchange monovalent ions. One or more ion exchange processes for chemical strengthening of microcrystalline glass may include but are not limited to: immersing in a single salt bath, or immersing in multiple salt baths with the same or different composition. Washing and/or annealing steps can be added between the immersions.

In some implementations, the microcrystalline glass can undergo ion exchange by immersing in the salt bath of molten Na salt (e.g. $NaNO_3$), and/or K salt (e.g., $KNO_3$), and/or Na-K mixed salt at the temperature of about 350°C-470°C for about 1-36 hours. The temperature range is preferably 380°C-460°C, and the time range is preferably 2-24 hours.

In some implementations, the matrix glass of the present invention can be used to manufacture strengthened glass through the aforementioned chemical strengthening process, and then the microcrystalline glass product can be obtained by the aforementioned crystallization process treatment. In some implementations, the matrix glass of the present invention can be processed into a glass element, then the glass element is made into strengthened glass through the aforementioned chemical strengthening process, and the microcrystalline glass product can be obtained by the aforementioned crystallization process treatment.


Embodiment


The following non-limiting embodiments are provided in order to further clearly explain and illustrate the technical solution of the present invention. Many efforts have been made to ensure the accuracy of numerical values (e.g., quantity) in the embodiments of the present invention, but some errors and deviations must be considered. The composition itself is given as wt% based on oxide and has been standardized to 100%.


<Matrix glass embodiment>


This embodiment obtains the matrix glass with composition shown in Tables 1 to 4 by the above manufacturing method for matrix glass. In addition, the characteristics of each matrix glass are measured by the test method mentioned in the present invention, and the measurement results are shown in Tables 1 to 4.

EP 4 699 991 A1

Table 1.

| Embodiment (wt%) | 1# | 2# | 3# | 4# | 5# | 6# | 7# | 8# | 9# | 10# |
|---|---|---|---|---|---|---|---|---|---|---|
| $SiO_2$ | 72.66 | 67.2 | 69.9 | 65 | 77.19 | 74.37 | 75.58 | 70.1 | 69.2 | 71.5 |
| $Al_2O_3$ | 7.4 | 9.46 | 6.9 | 10 | 3 | 6.7 | 5.5 | 5.9 | 7.7 | 9 |
| $Li_2O$ | 10 | 8.7 | 11.6 | 10.5 | 9.9 | 10.6 | 8.6 | 11.5 | 8.7 | 8.3 |
| $K_2O$ | 4.2 | 3.8 | 3.5 | 5.5 | 2.5 | 2.7 | 4.8 | 4.1 | 5.1 | 2.2 |
| $Na_2O$ | 2.2 | 5.6 | 4.9 | 3.6 | 3 | 2.6 | 1.7 | 3.9 | 4.3 | 5 |
| $ZrO_2$ | 2.6 | 4.5 | 2.2 | 4.6 | 3.5 | 2.5 | 3.1 | 3.2 | 4 | 1.5 |
| $CeO_2$ | 0.1 | 0.07 | 0.12 | 0.06 | 0.14 | 0.07 | 0.08 | 0.14 | 0.1 | 0.09 |
| $Ag_2O$ | 0.2 | 0.42 | 0.38 | 0.32 | 0.34 | 0.27 | 0.33 | 0.45 | 0.47 | 0.41 |
| $Sb_2O_3$ | 0.52 | 0.2 | 0.36 | 0.32 | 0.42 | 0.15 | 0.15 | 0.09 | 0.32 | 0.46 |
| $SnO_2$ | 0.12 | 0.05 | 0.14 | 0.1 | 0.01 | 0.04 | 0.16 | 0.12 | 0.11 | 0.04 |
| ZnO | 0 | 0 | 0 | 0 | 0 | 0 | 0 | 0 | 0 | 1.5 |
| MgO | 0 | 0 | 0 | 0 | 0 | 0 | 0 | 0 | 0 | 0 |
| CaO | 0 | 0 | 0 | 0 | 0 | 0 | 0 | 0 | 0 | 0 |
| SrO | 0 | 0 | 0 | 0 | 0 | 0 | 0 | 0 | 0 | 0 |
| BaO | 0 | 0 | 0 | 0 | 0 | 0 | 0 | 0 | 0 | 0 |
| $La_2O_3$ | 0 | 0 | 0 | 0 | 0 | 0 | 0 | 0 | 0 | 0 |
| $Gd_2O_3$ | 0 | 0 | 0 | 0 | 0 | 0 | 0 | 0 | 0 | 0 |
| $Y_2O_3$ | 0 | 0 | 0 | 0 | 0 | 0 | 0 | 0 | 0 | 0 |
| $Fe_2O_3$ | 0 | 0 | 0 | 0 | 0 | 0 | 0 | 0.5 | 0 | 0 |
| Total | 100 | 100 | 100 | 100 | 100 | 100 | 100 | 100 | 100 | 100 |
| $R_2O$ | 6.4 | 9.4 | 8.4 | 9.1 | 5.5 | 5.3 | 6.5 | 8 | 9.4 | 7.2 |
| $SiO_2/Li_2O$ | 7.27 | 7.72 | 6.03 | 6.19 | 7.8 | 7.02 | 8.79 | 6.1 | 7.95 | 8.61 |
| $Sb_2O_3+SnO_2$ | 0.64 | 0.25 | 0.5 | 0.42 | 0.43 | 0.19 | 0.31 | 0.21 | 0.43 | 0.5 |
| $(Sb_2O_3+SnO_2)/Ag_2O$ | 3.2 | 0.6 | 1.32 | 1.31 | 1.26 | 0.7 | 0.94 | 0.47 | 0.91 | 1.22 |
| $Ag_2O/CeO_2$ | 2 | 6 | 3.17 | 5.33 | 2.43 | 3.86 | 4.13 | 3.21 | 4.7 | 4.56 |
| $Li_2O/ZrO_2$ | 3.85 | 1.93 | 5.27 | 2.28 | 2.83 | 4.24 | 2.77 | 3.59 | 2.18 | 5.53 |

| Embodiment (wt%) | 1# | 2# | 3# | 4# | 5# | 6# | 7# | 8# | 9# | 10# |
|---|---|---|---|---|---|---|---|---|---|---|
| $(K_2O+Na_2O)/ZrO_2$ | 2.46 | 2.09 | 3.82 | 1.98 | 1.57 | 2.12 | 2.1 | 2.5 | 2.35 | 4.8 |
| $(SiO_2+Li_2O)/ZrO_2$ | 31.79 | 16.87 | 37.05 | 16.41 | 24.88 | 33.99 | 27.15 | 25.50 | 19.48 | 53.2 |
| $MO/ZrO_2$ | 0 | 0 | 0 | 0 | 0 | 0 | 0 | 0 | 0 | 1 |
| $ZrO_2/(Ag_2O+CeO_2)$ | 8.67 | 9.18 | 4.4 | 12.11 | 7.29 | 7.35 | 7.56 | 5.42 | 7.02 | 3 |
| $(Ag_2O+SnO_2+Sb_2O_3)/CeO_2$ | 8.4 | 9.57 | 7.33 | 12.33 | 5.5 | 6.57 | 8 | 4.71 | 9 | 10.11 |
| $(Sb_2O_3+SnO_2+CeO_2)/Ag_2O$ | 3.7 | 0.76 | 1.63 | 1.50 | 1.68 | 0.96 | 1.18 | 0.78 | 1.13 | 1.44 |
| $SnO_2/(CeO_2+SnO_2)$ | 0.55 | 0.42 | 0.54 | 0.63 | 0.07 | 0.36 | 0.67 | 0.46 | 0.52 | 0.31 |
| $R_2O+Li_2O+Al_2O_3$ | 23.8 | 27.56 | 26.9 | 29.6 | 18.4 | 22.6 | 20.6 | 25.4 | 25.8 | 24.5 |
| $(SiO_2+Al_2O_3)/(Li_2O+Na_2O+K_2O)$ | 4.88 | 4.24 | 3.84 | 3.83 | 5.21 | 5.1 | 5.37 | 3.9 | 4.25 | 5.19 |
| $\varepsilon_r$ | 6.9 | 7.3 | 7.2 | 7.5 | 6.3 | 6.8 | 6.6 | 7.1 | 7.1 | 7.2 |
| $Tan\delta$ $(\times 10^{-3})$ | 8.7 | 9.57 | 9.43 | 10.06 | 7.43 | 8.43 | 7.96 | 9.13 | 9.17 | 9.33 |
| $HK_{0.1}$ $(kgf/mm^2)$ | 516 | 494 | 479 | 478 | 528 | 523 | 532 | 479 | 493 | 506 |
| $E$ $(\times 10^7 Pa)$ | 8254 | 8035 | 7892 | 7886 | 8372 | 8324 | 8413 | 7897 | 8032 | 8157 |
| $\alpha_{20°C\text{-}300°C}$ $(\times 10^{-7}/°C)$ | 83 | 90 | 95 | 95 | 79 | 81 | 78 | 95 | 90 | 86 |
| Drop ball test height I (mm) | 400 | 400 | 300 | 300 | 400 | 400 | 400 | 400 | 300 | 400 |
| $n_d$ | 1.53234 | 1.53277 | 1.53238 | 1.53284 | 1.53037 | 1.53225 | 1.53190 | 1.53216 | 1.53252 | 1.53265 |

Table 2.

| Embodiment (wt%) | 11# | 12# | 13# | 14# | 15# | 16# | 17# | 18# | 19# | 20# |
|---|---|---|---|---|---|---|---|---|---|---|
| $SiO_2$ | 73.78 | 72.36 | 76.2 | 74.27 | 69.2 | 72.56 | 70.4 | 72.7 | 76.3 | 75.4 |
| $Al_2O_3$ | 6.9 | 5.3 | 3.8 | 4.9 | 5.5 | 4.9 | 7 | 7.8 | 5.4 | 6.4 |
| $Li_2O$ | 7.5 | 8.3 | 9.2 | 9.6 | 10.4 | 7.3 | 11.9 | 10 | 10.5 | 8 |
| $K_2O$ | 1.1 | 3.4 | 2.4 | 3 | 3.8 | 3.3 | 4 | 3.3 | 1.4 | 2.3 |
| $Na_2O$ | 3.4 | 3.7 | 2 | 2.5 | 4.4 | 4.1 | 1.5 | 1.3 | 1.5 | 2.2 |
| $ZrO_2$ | 6.6 | 6.1 | 5.6 | 4.5 | 6.2 | 5.3 | 4.7 | 4.1 | 3.9 | 5.2 |
| $CeO_2$ | 0.07 | 0.13 | 0.13 | 0.1 | 0.09 | 0.1 | 0.12 | 0.11 | 0.13 | 0.11 |
| $Ag_2O$ | 0.42 | 0.44 | 0.3 | 0.46 | 0.24 | 0.37 | 0.23 | 0.22 | 0.32 | 0.23 |
| $Sb_2O_3$ | 0.07 | 0.1 | 0.22 | 0.55 | 0.07 | 0.06 | 0.08 | 0.45 | 0.51 | 0.11 |
| $SnO_2$ | 0.16 | 0.17 | 0.15 | 0.12 | 0.1 | 0.01 | 0.07 | 0.02 | 0.04 | 0.05 |
| $ZnO$ | 0 | 0 | 0 | 0 | 0 | 0 | 0 | 0 | 0 | 0 |
| $MgO$ | 0 | 0 | 0 | 0 | 0 | 0 | 0 | 0 | 0 | 0 |
| $CaO$ | 0 | 0 | 0 | 0 | 0 | 0 | 0 | 0 | 0 | 0 |
| $SrO$ | 0 | 0 | 0 | 0 | 0 | 0 | 0 | 0 | 0 | 0 |
| $BaO$ | 0 | 0 | 0 | 0 | 0 | 0 | 0 | 0 | 0 | 0 |
| $La_2O_3$ | 0 | 0 | 0 | 0 | 0 | 2 | 0 | 0 | 0 | 0 |
| $Gd_2O_3$ | 0 | 0 | 0 | 0 | 0 | 0 | 0 | 0 | 0 | 0 |
| $Y_2O_3$ | 0 | 0 | 0 | 0 | 0 | 0 | 0 | 0 | 0 | 0 |
| $Fe_2O_3$ | 0 | 0 | 0 | 0 | 0 | 0 | 0 | 0 | 0 | 0 |
| Total | 100 | 100 | 100 | 100 | 100 | 100 | 100 | 100 | 100 | 100 |
| $R_2O$ | 4.5 | 7.1 | 4.4 | 5.5 | 8.2 | 7.4 | 5.5 | 4.6 | 2.9 | 4.5 |
| $SiO_2/Li_2O$ | 9.84 | 8.72 | 8.28 | 7.74 | 6.65 | 9.94 | 5.92 | 7.27 | 7.27 | 9.43 |
| $Sb_2O_3+SnO_2$ | 0.23 | 0.27 | 0.37 | 0.67 | 0.17 | 0.07 | 0.15 | 0.47 | 0.55 | 0.16 |
| $(Sb_2O_3+SnO_2)/Ag_2O$ | 0.55 | 0.61 | 1.23 | 1.46 | 0.71 | 0.19 | 0.65 | 2.14 | 1.72 | 0.7 |
| $Ag_2O/CeO_2$ | 6 | 3.38 | 2.31 | 4.6 | 2.67 | 3.7 | 1.92 | 2 | 2.46 | 2.09 |
| $Li_2O/ZrO_2$ | 1.14 | 1.36 | 1.64 | 2.13 | 1.68 | 1.38 | 2.53 | 2.44 | 2.69 | 1.54 |

| Embodiment (wt%) | 11# | 12# | 13# | 14# | 15# | 16# | 17# | 18# | 19# | 20# |
|---|---|---|---|---|---|---|---|---|---|---|
| $(K_2O+Na_2O)/ZrO_2$ | 0.68 | 1.16 | 0.79 | 1.22 | 1.32 | 1.4 | 1.17 | 1.12 | 0.74 | 0.87 |
| $(SiO_2+Li_2O)/ZrO_2$ | 12.32 | 13.22 | 15.25 | 18.64 | 12.84 | 15.07 | 17.51 | 20.17 | 22.26 | 16.04 |
| $MO/ZrO_2$ | 0 | 0 | 0 | 0 | 0 | 0 | 0 | 0 | 0 | 0 |
| $ZrO_2/(Ag_2O+CeO_2)$ | 13.47 | 10.7 | 13.02 | 8.04 | 18.79 | 11.28 | 13.43 | 12.42 | 8.67 | 15.29 |
| $(Ag_2O+SnO_2+Sb_2O_3)/CeO_2$ | 9.29 | 5.46 | 5.15 | 11.3 | 4.56 | 4.4 | 3.17 | 6.27 | 6.69 | 3.55 |
| $(Sb_2O_3+SnO_2+CeO_2)/Ag_2O$ | 0.71 | 0.91 | 1.67 | 1.67 | 1.08 | 0.46 | 1.17 | 2.64 | 2.13 | 1.17 |
| $SnO_2/(CeO_2+SnO_2)$ | 0.7 | 0.57 | 0.54 | 0.55 | 0.53 | 0.09 | 0.37 | 0.15 | 0.24 | 0.31 |
| $R_2O+Li_2O+Al_2O_3$ | 18.9 | 20.7 | 17.4 | 20 | 24.1 | 19.6 | 24.4 | 22.4 | 18.8 | 18.9 |
| $(SiO_2+Al_2O_3)/(Li_2O+Na_2O+K_2O)$ | 6.72 | 5.04 | 5.88 | 5.24 | 4.02 | 5.27 | 4.45 | 5.51 | 6.1 | 6.54 |
| $\varepsilon_r$ | 6.4 | 6.5 | 6.2 | 6.5 | 6.9 | 6.7 | 7.0 | 6.7 | 6.4 | 6.4 |
| $Tan\delta (\times 10^{-3})$ | 7.56 | 7.94 | 7.2 | 7.78 | 8.78 | 8.19 | 8.86 | 8.36 | 7.53 | 7.55 |
| $HK_{0.1} (kgf/mm^2)$ | 582 | 523 | 553 | 531 | 485 | 507 | 500 | 540 | 559 | 577 |
| $E (\times 10^7 Pa)$ | 8892 | 8322 | 8611 | 8396 | 7951 | 8166 | 8094 | 8488 | 8677 | 8846 |
| $\alpha_{20°C-300°C} (\times 10^{-7}/°C)$ | 66 | 81 | 71 | 78 | 93 | 86 | 88 | 75 | 69 | 63 |
| Drop ball test height I (mm) | 400 | 400 | 400 | 400 | 300 | 400 | 400 | 400 | 400 | 400 |
| $n_d$ | 1.53230 | 1.53191 | 1.53112 | 1.53173 | 1.53207 | 1.53176 | 1.53239 | 1.53248 | 1.53186 | 1.53216 |

EP 4 699 991 A1

Table 3.

| Embodiment (wt%) | 21# | 22# | 23# | 24# | 25# | 26# | 27# | 28# | 29# | 30# |
|---|---|---|---|---|---|---|---|---|---|---|
| $SiO_2$ | 72.76 | 72 | 72.5 | 69.8 | 69.4 | 73.5 | 71 | 71.5 | 67.5 | 78 |
| $Al_2O_3$ | 5.7 | 6 | 6.1 | 6.5 | 8.4 | 7.6 | 7.9 | 9.5 | 6 | 3 |
| $Li_2O$ | 9.2 | 10.2 | 9.8 | 10 | 12 | 9.2 | 11.2 | 9.8 | 11.6 | 11.8 |
| $K_2O$ | 4.3 | 3 | 3.1 | 5.2 | 2.1 | 2.5 | 3.7 | 1.8 | 3.7 | 3 |
| $Na_2O$ | 1.9 | 2.5 | 2.8 | 5.4 | 3.3 | 1.7 | 4 | 3.7 | 4.1 | 1 |
| $ZrO_2$ | 5.5 | 5.5 | 4.8 | 2.4 | 3.7 | 4.6 | 1.6 | 2.9 | 6.5 | 2.1 |
| $CeO_2$ | 0.1 | 0.1 | 0.15 | 0.14 | 0.09 | 0.1 | 0.07 | 0.11 | 0.12 | 0.14 |
| $Ag_2O$ | 0.29 | 0.33 | 0.22 | 0.21 | 0.5 | 0.31 | 0.3 | 0.4 | 0.32 | 0.4 |
| $Sb_2O_3$ | 0.07 | 0.23 | 0.42 | 0.3 | 0.43 | 0.29 | 0.22 | 0.21 | 0.14 | 0.46 |
| $SnO_2$ | 0.18 | 0.14 | 0.11 | 0.05 | 0.08 | 0.2 | 0.01 | 0.08 | 0.02 | 0.1 |
| $ZnO$ | 0 | 0 | 0 | 0 | 0 | 0 | 0 | 0 | 0 | 0 |
| $MgO$ | 0 | 0 | 0 | 0 | 0 | 0 | 0 | 0 | 0 | 0 |
| $CaO$ | 0 | 0 | 0 | 0 | 0 | 0 | 0 | 0 | 0 | 0 |
| $SrO$ | 0 | 0 | 0 | 0 | 0 | 0 | 0 | 0 | 0 | 0 |
| $BaO$ | 0 | 0 | 0 | 0 | 0 | 0 | 0 | 0 | 0 | 0 |
| $La_2O_3$ | 0 | 0 | 0 | 0 | 0 | 0 | 0 | 0 | 0 | 0 |
| $Gd_2O_3$ | 0 | 0 | 0 | 0 | 0 | 0 | 0 | 0 | 0 | 0 |
| $Y_2O_3$ | 0 | 0 | 0 | 0 | 0 | 0 | 0 | 0 | 0 | 0 |
| $Fe_2O_3$ | 0 | 0 | 0 | 0 | 0 | 0 | 0 | 0 | 0 | 0 |
| Total | 100 | 100 | 100 | 100 | 100 | 100 | 100 | 100 | 100 | 100 |
| $R_2O$ | 6.2 | 5.5 | 5.9 | 10.6 | 5.4 | 4.2 | 7.7 | 5.5 | 7.8 | 4 |
| $SiO_2/Li_2O$ | 7.91 | 7.06 | 7.40 | 6.98 | 5.78 | 7.99 | 6.34 | 7.30 | 5.82 | 6.61 |
| $Sb_2O_3+SnO_2$ | 0.25 | 0.37 | 0.53 | 0.35 | 0.51 | 0.49 | 0.23 | 0.29 | 0.16 | 0.56 |
| $(Sb_2O_3+SnO_2)/Ag_2O$ | 0.86 | 1.12 | 2.41 | 1.67 | 1.02 | 1.58 | 0.77 | 0.73 | 0.5 | 1.4 |
| $Ag_2O/CeO_2$ | 2.9 | 3.3 | 1.47 | 1.5 | 5.56 | 3.1 | 4.29 | 3.64 | 2.67 | 2.86 |
| $Li_2O/ZrO_2$ | 1.67 | 1.85 | 2.04 | 4.17 | 3.24 | 2 | 7 | 3.38 | 1.78 | 5.62 |

(continued)

| Embodiment (wt%) | 21# | 22# | 23# | 24# | 25# | 26# | 27# | 28# | 29# | 30# |
|---|---|---|---|---|---|---|---|---|---|---|
| $(K_2O+Na_2O)/ZrO_2$ | 1.13 | 1 | 1.23 | 4.42 | 1.46 | 0.91 | 4.81 | 1.9 | 1.2 | 1.9 |
| $(SiO_2+Li_2O)/ZrO_2$ | 14.9 | 14.95 | 17.15 | 33.25 | 22 | 17.98 | 51.38 | 28.03 | 12.17 | 42.76 |
| $MO/ZrO_2$ | 0 | 0 | 0 | 0 | 0 | 0 | 0 | 0 | 0 | 0 |
| $ZrO_2/(Ag_2O+CeO_2)$ | 14.1 | 12.79 | 12.97 | 6.86 | 6.27 | 11.22 | 4.32 | 5.69 | 14.77 | 3.89 |
| $(Ag_2O+SnO_2+Sb_2O_3)/CeO_2$ | 5.4 | 7 | 5 | 4 | 11.22 | 8 | 7.57 | 6.27 | 4 | 6.86 |
| $(Sb_2O_3+SnO_2+CeO_2)/Ag_2O$ | 1.21 | 1.42 | 3.09 | 2.33 | 1.2 | 1.9 | 1 | 1 | 0.88 | 1.75 |
| $SnO_2/(CeO_2+SnO_2)$ | 0.64 | 0.58 | 0.42 | 0.26 | 0.47 | 0.67 | 0.13 | 0.42 | 0.14 | 0.42 |
| $R_2O+Li_2O+Al_2O_3$ | 21.1 | 21.7 | 21.8 | 27.1 | 25.8 | 21 | 26.8 | 24.8 | 25.4 | 18.8 |
| $(SiO_2+Al_2O_3)/(Li_2O+Na_2O+K_2O)$ | 5.09 | 4.97 | 5.01 | 3.7 | 4.47 | 6.05 | 4.17 | 5.29 | 3.79 | 5.13 |
| $\varepsilon_r$ | 6.6 | 6.7 | 6.7 | 7.3 | 7.1 | 6.6 | 7.2 | 7.0 | 7.1 | 6.4 |
| $Tan\delta\ (\times 10^{-3})$ | 8.07 | 8.24 | 8.26 | 9.5 | 9.17 | 8.06 | 9.41 | 8.94 | 9.08 | 7.54 |
| $HK_{0.1}\ (kgf/mm^2)$ | 523 | 519 | 520 | 473 | 501 | 558 | 490 | 531 | 477 | 524 |
| $E\ (\times 10^7 Pa)$ | 8326 | 8284 | 8289 | 7836 | 8109 | 8660 | 8005 | 8396 | 7871 | 8334 |
| $\alpha_{20°C\text{-}300°C}\ (\times 10^{-7}/°C)$ | 81 | 82 | 82 | 97 | 88 | 69 | 91 | 78 | 96 | 80 |
| Drop ball test height l (mm) | 400 | 400 | 400 | 300 | 300 | 400 | 400 | 400 | 300 | 400 |
| $n_d$ | 1.53203 | 1.53216 | 1.53216 | 1.53231 | 1.53261 | 1.53244 | 1.53252 | 1.53271 | 1.53223 | 1.53034 |

Table 4.

| Embodiment (wt%) | 31# | 32# | 33# | 34# | 35# | 36# | 37# | 38# | 39# | 40# |
|---|---|---|---|---|---|---|---|---|---|---|
| $SiO_2$ | 71.1 | 70.9 | 73.5 | 72.3 | 74.2 | 72.5 | 72.1 | 72.9 | 70.1 | 70.5 |
| $Al_2O_3$ | 8.9 | 8.4 | 3.5 | 7.6 | 5.9 | 6 | 6 | 4.8 | 9.7 | 8 |
| $Li_2O$ | 8.5 | 10.2 | 11 | 9.6 | 9.8 | 10.4 | 10.7 | 10.8 | 7.4 | 11.6 |
| $K_2O$ | 1.8 | 3.2 | 3.8 | 2.3 | 3.2 | 3.4 | 4.5 | 3.7 | 4.6 | 1.1 |
| $Na_2O$ | 5.5 | 1.9 | 3.2 | 1.1 | 2.9 | 2.1 | 2.8 | 3.9 | 1.3 | 2.5 |
| $ZrO_2$ | 2 | 4.8 | 4.3 | 2 | 3.4 | 5.1 | 3 | 3.4 | 6.1 | 5.4 |
| $CeO_2$ | 0.15 | 0.12 | 0.09 | 0.15 | 0.09 | 0.1 | 0.11 | 0.1 | 0.13 | 0.13 |
| $Ag_2O$ | 0.36 | 0.24 | 0.23 | 0.34 | 0.29 | 0.22 | 0.3 | 0.25 | 0.24 | 0.3 |
| $Sb_2O_3$ | 0.5 | 0.21 | 0.31 | 0.43 | 0.15 | 0.08 | 0.39 | 0.14 | 0.35 | 0.44 |
| $SnO_2$ | 0.09 | 0.03 | 0.07 | 0.18 | 0.07 | 0.1 | 0.1 | 0.01 | 0.08 | 0.03 |
| $ZnO$ | 1.1 | 0 | 0 | 4 | 0 | 0 | 0 | 0 | 0 | 0 |
| $MgO$ | 0 | 0 | 0 | 0 | 0 | 0 | 0 | 0 | 0 | 0 |
| $CaO$ | 0 | 0 | 0 | 0 | 0 | 0 | 0 | 0 | 0 | 0 |
| $SrO$ | 0 | 0 | 0 | 0 | 0 | 0 | 0 | 0 | 0 | 0 |
| $BaO$ | 0 | 0 | 0 | 0 | 0 | 0 | 0 | 0 | 0 | 0 |
| $La_2O_3$ | 0 | 0 | 0 | 0 | 0 | 0 | 0 | 0 | 0 | 0 |
| $Gd_2O_3$ | 0 | 0 | 0 | 0 | 0 | 0 | 0 | 0 | 0 | 0 |
| $Y_2O_3$ | 0 | 0 | 0 | 0 | 0 | 0 | 0 | 0 | 0 | 0 |
| $Fe_2O_3$ | 0 | 0 | 0 | 0 | 0 | 0 | 0 | 0 | 0 | 0 |
| Total | 100 | 100 | 100 | 100 | 100 | 100 | 100 | 100 | 100 | 100 |
| $R_2O$ | 7.3 | 5.1 | 7 | 3.4 | 6.1 | 5.5 | 7.3 | 7.6 | 5.9 | 3.6 |
| $SiO_2/Li_2O$ | 8.36 | 6.95 | 6.68 | 7.53 | 7.57 | 6.97 | 6.74 | 6.75 | 9.47 | 6.08 |
| $Sb_2O_3+SnO_2$ | 0.59 | 0.24 | 0.38 | 0.61 | 0.22 | 0.18 | 0.49 | 0.15 | 0.43 | 0.47 |
| $(Sb_2O_3+SnO_2)/Ag_2O$ | 1.64 | 1 | 1.65 | 1.79 | 0.76 | 0.82 | 1.63 | 0.60 | 1.79 | 1.57 |
| $Ag_2O/CeO_2$ | 2.4 | 2 | 2.56 | 2.27 | 3.22 | 2.2 | 2.73 | 2.5 | 1.85 | 2.31 |
| $Li_2O/ZrO_2$ | 4.25 | 2.13 | 2.56 | 4.8 | 2.88 | 2.04 | 3.57 | 3.18 | 1.21 | 2.15 |

(continued)

| Embodiment (wt%) | 31# | 32# | 33# | 34# | 35# | 36# | 37# | 38# | 39# | 40# |
|---|---|---|---|---|---|---|---|---|---|---|
| $(K_2O+Na_2O)/ZrO_2$ | 3.65 | 1.06 | 1.63 | 1.7 | 1.79 | 1.08 | 2.43 | 2.24 | 0.97 | 0.67 |
| $(SiO_2+Li_2O)/ZrO_2$ | 39.8 | 16.9 | 19.65 | 40.95 | 24.71 | 16.25 | 27.6 | 24.62 | 12.7 | 15.2 |
| $MO/ZrO_2$ | 0.55 | 0 | 0 | 2 | 0 | 0 | 0 | 0 | 0 | 0 |
| $ZrO_2/(Ag_2O+CeO_2)$ | 3.92 | 13.33 | 13.44 | 4.08 | 8.95 | 15.94 | 7.32 | 9.71 | 16.49 | 12.56 |
| $(Ag_2O+SnO_2+Sb_2O_3)/CeO_2$ | 6.33 | 4 | 6.78 | 6.33 | 5.67 | 4 | 7.18 | 4 | 5.15 | 5.92 |
| $(Sb_2O_3+SnO_2+CeO_2)/Ag_2O$ | 2.06 | 1.5 | 2.04 | 2.24 | 1.07 | 1.27 | 2 | 1 | 2.33 | 2 |
| $SnO_2/(CeO_2+SnO_2)$ | 0.38 | 0.2 | 0.44 | 0.55 | 0.44 | 0.5 | 0.48 | 0.09 | 0.38 | 0.19 |
| $R_2O+Li_2O+Al_2O_3$ | 24.7 | 23.7 | 21.5 | 20.6 | 21.8 | 21.9 | 24 | 23.2 | 23 | 23.2 |
| $(SiO_2+Al_2O_3)/(Li_2O+Na_2O+K_2O)$ | 5.06 | 5.18 | 4.28 | 6.15 | 5.04 | 4.94 | 4.34 | 4.22 | 6 | 5.16 |
| $\varepsilon_r$ | 7.2 | 6.9 | 6.7 | 6.7 | 6.7 | 6.7 | 6.9 | 6.8 | 6.8 | 6.8 |
| $Tan\delta$ $(\times 10^{-3})$ | 9.39 | 8.7 | 8.18 | 8.19 | 8.25 | 8.28 | 8.76 | 8.56 | 8.53 | 8.56 |
| $HK_{0.1}$ $(kgf/mm^2)$ | 502 | 526 | 494 | 555 | 521 | 517 | 496 | 492 | 554 | 526 |
| $E$ $(\times 10^7 Pa)$ | 8118 | 8348 | 8038 | 8629 | 8299 | 8264 | 8060 | 8021 | 8624 | 8351 |
| $\alpha_{20°C\text{-}300°C}$ $(\times 10^{-7}/°C)$ | 88 | 80 | 90 | 70 | 81 | 83 | 90 | 91 | 71 | 80 |
| Drop ball test height l (mm) | 400 | 400 | 400 | 400 | 400 | 400 | 400 | 400 | 400 | 400 |
| $n_d$ | 1.53265 | 1.53259 | 1.53098 | 1.53238 | 1.53207 | 1.53212 | 1.53213 | 1.53172 | 1.53274 | 1.53254 |

<Microcrystalline glass embodiment>

This embodiment obtains the microcrystalline glass with composition shown in Tables 5-8 by the above manufacturing method for microcrystalline glass. In addition, the characteristics of each microcrystalline glass are measured using the test methods described in the present invention, and the measurement results are presented in Tables 5-8. In the following embodiments, the transmittance of the microcrystalline glass is tested using 1mm-thick samples.

Table 5.

| Embodiment (wt%) | 1# | 2# | 3# | 4# | 5# | 6# | 7# | 8# | 9# | 10# |
|---|---|---|---|---|---|---|---|---|---|---|
| $SiO_2$ | 72.66 | 67.2 | 69.9 | 65 | 77.19 | 74.37 | 75.58 | 70.1 | 69.2 | 71.5 |
| $Al_2O_3$ | 7.4 | 9.46 | 6.9 | 10 | 3 | 6.7 | 5.5 | 5.9 | 7.7 | 9 |
| $Li_2O$ | 10 | 8.7 | 11.6 | 10.5 | 9.9 | 10.6 | 8.6 | 11.5 | 8.7 | 8.3 |
| $K_2O$ | 4.2 | 3.8 | 3.5 | 5.5 | 2.5 | 2.7 | 4.8 | 4.1 | 5.1 | 2.2 |
| $Na_2O$ | 2.2 | 5.6 | 4.9 | 3.6 | 3 | 2.6 | 1.7 | 3.9 | 4.3 | 5 |
| $ZrO_2$ | 2.6 | 4.5 | 2.2 | 4.6 | 3.5 | 2.5 | 3.1 | 3.2 | 4 | 1.5 |
| $CeO_2$ | 0.1 | 0.07 | 0.12 | 0.06 | 0.14 | 0.07 | 0.08 | 0.14 | 0.1 | 0.09 |
| $Ag_2O$ | 0.2 | 0.42 | 0.38 | 0.32 | 0.34 | 0.27 | 0.33 | 0.45 | 0.47 | 0.41 |
| $Sb_2O_3$ | 0.52 | 0.2 | 0.36 | 0.32 | 0.42 | 0.15 | 0.15 | 0.09 | 0.32 | 0.46 |
| $SnO_2$ | 0.12 | 0.05 | 0.14 | 0.1 | 0.01 | 0.04 | 0.16 | 0.12 | 0.11 | 0.04 |
| ZnO | 0 | 0 | 0 | 0 | 0 | 0 | 0 | 0 | 0 | 1.5 |
| MgO | 0 | 0 | 0 | 0 | 0 | 0 | 0 | 0 | 0 | 0 |
| CaO | 0 | 0 | 0 | 0 | 0 | 0 | 0 | 0 | 0 | 0 |
| SrO | 0 | 0 | 0 | 0 | 0 | 0 | 0 | 0 | 0 | 0 |
| BaO | 0 | 0 | 0 | 0 | 0 | 0 | 0 | 0 | 0 | 0 |
| $La_2O_3$ | 0 | 0 | 0 | 0 | 0 | 0 | 0 | 0 | 0 | 0 |
| $Gd_2O_3$ | 0 | 0 | 0 | 0 | 0 | 0 | 0 | 0 | 0 | 0 |
| $Y_2O_3$ | 0 | 0 | 0 | 0 | 0 | 0 | 0 | 0 | 0 | 0 |
| $Fe_2O_3$ | 0 | 0 | 0 | 0 | 0 | 0 | 0 | 0.5 | 0 | 0 |
| Total | 100 | 100 | 100 | 100 | 100 | 100 | 100 | 100 | 100 | 100 |
| $R_2O$ | 6.4 | 9.4 | 8.4 | 9.1 | 5.5 | 5.3 | 6.5 | 8 | 9.4 | 7.2 |
| $SiO_2/Li_2O$ | 7.27 | 7.72 | 6.03 | 6.19 | 7.8 | 7.02 | 8.79 | 6.1 | 7.95 | 8.61 |
| $Sb_2O_3+SnO_2$ | 0.64 | 0.25 | 0.5 | 0.42 | 0.43 | 0.19 | 0.31 | 0.21 | 0.43 | 0.5 |
| $(Sb_2O_3+SnO_2)/Ag_2O$ | 3.2 | 0.6 | 1.32 | 1.31 | 1.26 | 0.7 | 0.94 | 0.47 | 0.91 | 1.22 |
| $Ag_2O/CeO_2$ | 2 | 6 | 3.17 | 5.33 | 2.43 | 3.86 | 4.13 | 3.21 | 4.7 | 4.56 |
| $Li_2O/ZrO_2$ | 3.85 | 1.93 | 5.27 | 2.28 | 2.83 | 4.24 | 2.77 | 3.59 | 2.18 | 5.53 |
| $(K_2O+Na_2O)/ZrO_2$ | 2.46 | 2.09 | 3.82 | 1.98 | 1.57 | 2.12 | 2.1 | 2.5 | 2.35 | 4.8 |
| $(SiO_2+Li_2O)/ZrO_2$ | 31.79 | 16.87 | 37.05 | 16.41 | 24.88 | 33.99 | 27.15 | 25.50 | 19.48 | 53.2 |
| $MO/ZrO_2$ | 0 | 0 | 0 | 0 | 0 | 0 | 0 | 0 | 0 | 1 |
| $ZrO_2/(Ag_2O+CeO_2)$ | 8.67 | 9.18 | 4.4 | 12.11 | 7.29 | 7.35 | 7.56 | 5.42 | 7.02 | 3 |
| $(Ag_2O+SnO_2+Sb_2O_3)/CeO_2$ | 8.4 | 9.57 | 7.33 | 12.33 | 5.5 | 6.57 | 8 | 4.71 | 9 | 10.11 |
| $(Sb_2O_3+SnO_2+CeO_2)/Ag_2O$ | 3.7 | 0.76 | 1.63 | 1.50 | 1.68 | 0.96 | 1.18 | 0.78 | 1.13 | 1.44 |
| $SnO_2/(CeO_2+SnO_2)$ | 0.55 | 0.42 | 0.54 | 0.63 | 0.07 | 0.36 | 0.67 | 0.46 | 0.52 | 0.31 |
| $R_2O+Li_2O+Al_2O_3$ | 23.8 | 27.56 | 26.9 | 29.6 | 18.4 | 22.6 | 20.6 | 25.4 | 25.8 | 24.5 |

(continued)

| Embodiment (wt%) | 1# | 2# | 3# | 4# | 5# | 6# | 7# | 8# | 9# | 10# |
|---|---|---|---|---|---|---|---|---|---|---|
| $(SiO_2+Al_2O_3)/(Li_2O+Na_2O+K_2O)$ | 4.88 | 4.24 | 3.84 | 3.83 | 5.21 | 5.1 | 5.37 | 3.9 | 4.25 | 5.19 |
| Transparent portion T400-800nm (%) | 91.8 | 92.0 | 91.6 | 91.8 | 92.0 | 92.0 | 90.7 | 91.6 | 91.8 | 92.0 |
| Blackened portion $T_{940nm}$ (%) | 0.3 | 21.7 | 3.3 | 2.8 | 4.0 | 17.1 | 10.1 | 2.5 | 11.1 | 4.8 |
| Blackened portion $T_{870nm}$ (%) | 0.3 | 7.6 | 1.2 | 1.0 | 1.4 | 6.0 | 3.5 | 0.9 | 3.9 | 1.7 |
| Blackened portion $T_{400-800nm}$ (%) | 0 | 0.7 | 0.3 | 0.3 | 0.3 | 0.6 | 0.5 | 0.3 | 0.5 | 0.3 |

Table 6.

| Embodiment (wt%) | 11# | 12# | 13# | 14# | 15# | 16# | 17# | 18# | 19# | 20# |
|---|---|---|---|---|---|---|---|---|---|---|
| $SiO_2$ | 73.78 | 72.36 | 76.2 | 74.27 | 69.2 | 72.56 | 70.4 | 72.7 | 76.3 | 75.4 |
| $Al_2O_3$ | 6.9 | 5.3 | 3.8 | 4.9 | 5.5 | 4.9 | 7 | 7.8 | 5.4 | 6.4 |
| $Li_2O$ | 7.5 | 8.3 | 9.2 | 9.6 | 10.4 | 7.3 | 11.9 | 10 | 10.5 | 8 |
| $K_2O$ | 1.1 | 3.4 | 2.4 | 3 | 3.8 | 3.3 | 4 | 3.3 | 1.4 | 2.3 |
| $Na_2O$ | 3.4 | 3.7 | 2 | 2.5 | 4.4 | 4.1 | 1.5 | 1.3 | 1.5 | 2.2 |
| $ZrO_2$ | 6.6 | 6.1 | 5.6 | 4.5 | 6.2 | 5.3 | 4.7 | 4.1 | 3.9 | 5.2 |
| $CeO_2$ | 0.07 | 0.13 | 0.13 | 0.1 | 0.09 | 0.1 | 0.12 | 0.11 | 0.13 | 0.11 |
| $Ag_2O$ | 0.42 | 0.44 | 0.3 | 0.46 | 0.24 | 0.37 | 0.23 | 0.22 | 0.32 | 0.23 |
| $Sb_2O_3$ | 0.07 | 0.1 | 0.22 | 0.55 | 0.07 | 0.06 | 0.08 | 0.45 | 0.51 | 0.11 |
| $SnO_2$ | 0.16 | 0.17 | 0.15 | 0.12 | 0.1 | 0.01 | 0.07 | 0.02 | 0.04 | 0.05 |
| ZnO | 0 | 0 | 0 | 0 | 0 | 0 | 0 | 0 | 0 | 0 |
| MgO | 0 | 0 | 0 | 0 | 0 | 0 | 0 | 0 | 0 | 0 |
| CaO | 0 | 0 | 0 | 0 | 0 | 0 | 0 | 0 | 0 | 0 |
| SrO | 0 | 0 | 0 | 0 | 0 | 0 | 0 | 0 | 0 | 0 |
| BaO | 0 | 0 | 0 | 0 | 0 | 0 | 0 | 0 | 0 | 0 |
| $La_2O_3$ | 0 | 0 | 0 | 0 | 0 | 2 | 0 | 0 | 0 | 0 |
| $Gd_2O_3$ | 0 | 0 | 0 | 0 | 0 | 0 | 0 | 0 | 0 | 0 |
| $Y_2O_3$ | 0 | 0 | 0 | 0 | 0 | 0 | 0 | 0 | 0 | 0 |
| $Fe_2O_3$ | 0 | 0 | 0 | 0 | 0 | 0 | 0 | 0 | 0 | 0 |
| Total | 100 | 100 | 100 | 100 | 100 | 100 | 100 | 100 | 100 | 100 |
| $R_2O$ | 4.5 | 7.1 | 4.4 | 5.5 | 8.2 | 7.4 | 5.5 | 4.6 | 2.9 | 4.5 |
| $SiO_2/Li_2O$ | 9.84 | 8.72 | 8.28 | 7.74 | 6.65 | 9.94 | 5.92 | 7.27 | 7.27 | 9.43 |
| $Sb_2O_3+SnO_2$ | 0.23 | 0.27 | 0.37 | 0.67 | 0.17 | 0.07 | 0.15 | 0.47 | 0.55 | 0.16 |
| $(Sb_2O_3+SnO_2)/Ag_2O$ | 0.55 | 0.61 | 1.23 | 1.46 | 0.71 | 0.19 | 0.65 | 2.14 | 1.72 | 0.7 |
| $Ag_2O/CeO_2$ | 6 | 3.38 | 2.31 | 4.6 | 2.67 | 3.7 | 1.92 | 2 | 2.46 | 2.09 |
| $Li_2O/ZrO_2$ | 1.14 | 1.36 | 1.64 | 2.13 | 1.68 | 1.38 | 2.53 | 2.44 | 2.69 | 1.54 |
| $(K_2O+Na_2O)/ZrO_2$ | 0.68 | 1.16 | 0.79 | 1.22 | 1.32 | 1.4 | 1.17 | 1.12 | 0.74 | 0.87 |
| $(SiO_2+Li_2O)/ZrO_2$ | 12.32 | 13.22 | 15.25 | 18.64 | 12.84 | 15.07 | 17.51 | 20.17 | 22.26 | 16.04 |
| $MO/ZrO_2$ | 0 | 0 | 0 | 0 | 0 | 0 | 0 | 0 | 0 | 0 |
| $ZrO_2/(Ag_2O+CeO_2)$ | 13.47 | 10.7 | 13.02 | 8.04 | 18.79 | 11.28 | 13.43 | 12.42 | 8.67 | 15.29 |
| $(Ag_2O+SnO_2+Sb_2O_3)/CeO_2$ | 9.29 | 5.46 | 5.15 | 11.3 | 4.56 | 4.4 | 3.17 | 6.27 | 6.69 | 3.55 |

(continued)

| Embodiment (wt%) | 11# | 12# | 13# | 14# | 15# | 16# | 17# | 18# | 19# | 20# |
|---|---|---|---|---|---|---|---|---|---|---|
| $(Sb_2O_3+SnO_2+CeO_2)$ /$Ag_2O$ | 0.71 | 0.91 | 1.67 | 1.67 | 1.08 | 0.46 | 1.17 | 2.64 | 2.13 | 1.17 |
| $SnO_2$/ $(CeO_2+SnO_2)$ | 0.7 | 0.57 | 0.54 | 0.55 | 0.53 | 0.09 | 0.37 | 0.15 | 0.24 | 0.31 |
| $R_2O+Li_2O+Al_2O_3$ | 18.9 | 20.7 | 17.4 | 20 | 24.1 | 19.6 | 24.4 | 22.4 | 18.8 | 18.9 |
| $(SiO_2+Al_2O_3)$/$(Li_2O+Na_2O+K_2O)$ | 6.72 | 5.04 | 5.88 | 5.24 | 4.02 | 5.27 | 4.45 | 5.51 | 6.1 | 6.54 |
| Transparent portion $T_{400-800nm}$ (%) | 90.7 | 90.7 | 91.5 | 90.7 | 91.8 | 92.0 | 92.0 | 92.0 | 92.0 | 92.0 |
| Blackened portion $T_{940nm}$ (%) | 20.7 | 18.8 | 4.7 | 1.0 | 19.7 | 35.9 | 18.3 | 0.4 | 0.4 | 12.8 |
| Blackened portion $T_{870nm}$ (%) | 7.3 | 6.6 | 1.7 | 0.4 | 6.9 | 12.6 | 6.4 | 0.1 | 0.1 | 4.5 |
| Blackened portion $T_{400-800nm}$ (%) | 0.7 | 0.6 | 0.3 | 0.2 | 0.6 | 1.2 | 0.6 | 0 | 0 | 0.2 |

Table 7.

| Embodiment (wt%) | 21# | 22# | 23# | 24# | 25# | 26# | 27# | 28# | 29# | 30# |
|---|---|---|---|---|---|---|---|---|---|---|
| $SiO_2$ | 72.76 | 72 | 72.5 | 69.8 | 69.4 | 73.5 | 71 | 71.5 | 67.5 | 78 |
| $Al_2O_3$ | 5.7 | 6 | 6.1 | 6.5 | 8.4 | 7.6 | 7.9 | 9.5 | 6 | 3 |
| $Li_2O$ | 9.2 | 10.2 | 9.8 | 10 | 12 | 9.2 | 11.2 | 9.8 | 11.6 | 11.8 |
| $K_2O$ | 4.3 | 3 | 3.1 | 5.2 | 2.1 | 2.5 | 3.7 | 1.8 | 3.7 | 3 |
| $Na_2O$ | 1.9 | 2.5 | 2.8 | 5.4 | 3.3 | 1.7 | 4 | 3.7 | 4.1 | 1 |
| $ZrO_2$ | 5.5 | 5.5 | 4.8 | 2.4 | 3.7 | 4.6 | 1.6 | 2.9 | 6.5 | 2.1 |
| $CeO_2$ | 0.1 | 0.1 | 0.15 | 0.14 | 0.09 | 0.1 | 0.07 | 0.11 | 0.12 | 0.14 |
| $Ag_2O$ | 0.29 | 0.33 | 0.22 | 0.21 | 0.5 | 0.31 | 0.3 | 0.4 | 0.32 | 0.4 |
| $Sb_2O_3$ | 0.07 | 0.23 | 0.42 | 0.3 | 0.43 | 0.29 | 0.22 | 0.21 | 0.14 | 0.46 |
| $SnO_2$ | 0.18 | 0.14 | 0.11 | 0.05 | 0.08 | 0.2 | 0.01 | 0.08 | 0.02 | 0.1 |
| $ZnO$ | 0 | 0 | 0 | 0 | 0 | 0 | 0 | 0 | 0 | 0 |
| $MgO$ | 0 | 0 | 0 | 0 | 0 | 0 | 0 | 0 | 0 | 0 |
| $CaO$ | 0 | 0 | 0 | 0 | 0 | 0 | 0 | 0 | 0 | 0 |
| $SrO$ | 0 | 0 | 0 | 0 | 0 | 0 | 0 | 0 | 0 | 0 |
| $BaO$ | 0 | 0 | 0 | 0 | 0 | 0 | 0 | 0 | 0 | 0 |
| $La_2O_3$ | 0 | 0 | 0 | 0 | 0 | 0 | 0 | 0 | 0 | 0 |
| $Gd_2O_3$ | 0 | 0 | 0 | 0 | 0 | 0 | 0 | 0 | 0 | 0 |
| $Y_2O_3$ | 0 | 0 | 0 | 0 | 0 | 0 | 0 | 0 | 0 | 0 |
| $Fe_2O_3$ | 0 | 0 | 0 | 0 | 0 | 0 | 0 | 0 | 0 | 0 |
| Total | 100 | 100 | 100 | 100 | 100 | 100 | 100 | 100 | 100 | 100 |
| $R_2O$ | 6.2 | 5.5 | 5.9 | 10.6 | 5.4 | 4.2 | 7.7 | 5.5 | 7.8 | 4 |
| $SiO_2$/$Li_2O$ | 7.91 | 7.06 | 7.40 | 6.98 | 5.78 | 7.99 | 6.34 | 7.30 | 5.82 | 6.61 |
| $Sb_2O_3+SnO_2$ | 0.25 | 0.37 | 0.53 | 0.35 | 0.51 | 0.49 | 0.23 | 0.29 | 0.16 | 0.56 |
| $(Sb_2O_3+SnO_2)$/$Ag_2O$ | 0.86 | 1.12 | 2.41 | 1.67 | 1.02 | 1.58 | 0.77 | 0.73 | 0.5 | 1.4 |
| $Ag_2O$/$CeO_2$ | 2.9 | 3.3 | 1.47 | 1.5 | 5.56 | 3.1 | 4.29 | 3.64 | 2.67 | 2.86 |
| $Li_2O$/$ZrO_2$ | 1.67 | 1.85 | 2.04 | 4.17 | 3.24 | 2 | 7 | 3.38 | 1.78 | 5.62 |
| $(K_2O+Na_2O)$ /$ZrO_2$ | 1.13 | 1 | 1.23 | 4.42 | 1.46 | 0.91 | 4.81 | 1.9 | 1.2 | 1.9 |
| $(SiO_2+Li_2O)$ /$ZrO_2$ | 14.9 | 14.95 | 17.15 | 33.25 | 22 | 17.98 | 51.38 | 28.03 | 12.17 | 42.76 |

(continued)

| Embodiment (wt%) | 21# | 22# | 23# | 24# | 25# | 26# | 27# | 28# | 29# | 30# |
|---|---|---|---|---|---|---|---|---|---|---|
| $MO/ZrO_2$ | 0 | 0 | 0 | 0 | 0 | 0 | 0 | 0 | 0 | 0 |
| $ZrO_2/(Ag_2O+CeO_2)$ | 14.1 | 12.79 | 12.97 | 6.86 | 6.27 | 11.22 | 4.32 | 5.69 | 14.77 | 3.89 |
| $(Ag_2O+SnO_2+Sb_2O_3)/CeO_2$ | 5.4 | 7 | 5 | 4 | 11.22 | 8 | 7.57 | 6.27 | 4 | 6.86 |
| $(Sb_2O_3+SnO_2+CeO_2)/Ag_2O$ | 1.21 | 1.42 | 3.09 | 2.33 | 1.2 | 1.9 | 1 | 1 | 0.88 | 1.75 |
| $SnO_2/(CeO_2+SnO_2)$ | 0.64 | 0.58 | 0.42 | 0.26 | 0.47 | 0.67 | 0.13 | 0.42 | 0.14 | 0.42 |
| $R_2O+Li_2O+Al_2O_3$ | 21.1 | 21.7 | 21.8 | 27.1 | 25.8 | 21 | 26.8 | 24.8 | 25.4 | 18.8 |
| $(SiO_2+Al_2O_3)/(Li_2O+Na_2O+K_2O)$ | 5.09 | 4.97 | 5.01 | 3.7 | 4.47 | 6.05 | 4.17 | 5.29 | 3.79 | 5.13 |
| Transparent portion $T_{400-800nm}$ (%) | 90.8 | 91.6 | 91.6 | 92.0 | 92.0 | 90.5 | 92.0 | 92.0 | 92.0 | 90.5 |
| Blackened portion $T_{940nm}$ (%) | 12.6 | 7.0 | 7.9 | 2.1 | 6.4 | 0.9 | 17.0 | 17.5 | 24.6 | 0.5 |
| Blackened portion $T_{870nm}$ (%) | 4.4 | 2.5 | 2.8 | 0.7 | 2.2 | 0.3 | 6.0 | 6.2 | 8.6 | 0.2 |
| Blackened portion $T_{400-800nm}$ (%) | 0.2 | 0.4 | 0.4 | 0.3 | 0.4 | 0.1 | 0.6 | 0.6 | 0.7 | 0 |

Table 8.

| Embodiment (wt%) | 31# | 32# | 33# | 34# | 35# | 36# | 37# | 38# | 39# | 40# |
|---|---|---|---|---|---|---|---|---|---|---|
| $SiO_2$ | 71.1 | 70.9 | 73.5 | 72.3 | 74.2 | 72.5 | 72.1 | 72.9 | 70.1 | 70.5 |
| $Al_2O_3$ | 8.9 | 8.4 | 3.5 | 7.6 | 5.9 | 6 | 6 | 4.8 | 9.7 | 8 |
| $Li_2O$ | 8.5 | 10.2 | 11 | 9.6 | 9.8 | 10.4 | 10.7 | 10.8 | 7.4 | 11.6 |
| $K_2O$ | 1.8 | 3.2 | 3.8 | 2.3 | 3.2 | 3.4 | 4.5 | 3.7 | 4.6 | 1.1 |
| $Na_2O$ | 5.5 | 1.9 | 3.2 | 1.1 | 2.9 | 2.1 | 2.8 | 3.9 | 1.3 | 2.5 |
| $ZrO_2$ | 2 | 4.8 | 4.3 | 2 | 3.4 | 5.1 | 3 | 3.4 | 6.1 | 5.4 |
| $CeO_2$ | 0.15 | 0.12 | 0.09 | 0.15 | 0.09 | 0.1 | 0.11 | 0.1 | 0.13 | 0.13 |
| $Ag_2O$ | 0.36 | 0.24 | 0.23 | 0.34 | 0.29 | 0.22 | 0.3 | 0.25 | 0.24 | 0.3 |
| $Sb_2O_3$ | 0.5 | 0.21 | 0.31 | 0.43 | 0.15 | 0.08 | 0.39 | 0.14 | 0.35 | 0.44 |
| $SnO_2$ | 0.09 | 0.03 | 0.07 | 0.18 | 0.07 | 0.1 | 0.1 | 0.01 | 0.08 | 0.03 |
| ZnO | 1.1 | 0 | 0 | 4 | 0 | 0 | 0 | 0 | 0 | 0 |
| MgO | 0 | 0 | 0 | 0 | 0 | 0 | 0 | 0 | 0 | 0 |
| CaO | 0 | 0 | 0 | 0 | 0 | 0 | 0 | 0 | 0 | 0 |
| SrO | 0 | 0 | 0 | 0 | 0 | 0 | 0 | 0 | 0 | 0 |
| BaO | 0 | 0 | 0 | 0 | 0 | 0 | 0 | 0 | 0 | 0 |
| $La_2O_3$ | 0 | 0 | 0 | 0 | 0 | 0 | 0 | 0 | 0 | 0 |
| $Gd_2O_3$ | 0 | 0 | 0 | 0 | 0 | 0 | 0 | 0 | 0 | 0 |
| $Y_2O_3$ | 0 | 0 | 0 | 0 | 0 | 0 | 0 | 0 | 0 | 0 |
| $Fe_2O_3$ | 0 | 0 | 0 | 0 | 0 | 0 | 0 | 0 | 0 | 0 |
| Total | 100 | 100 | 100 | 100 | 100 | 100 | 100 | 100 | 100 | 100 |
| $R_2O$ | 7.3 | 5.1 | 7 | 3.4 | 6.1 | 5.5 | 7.3 | 7.6 | 5.9 | 3.6 |
| $SiO_2/Li_2O$ | 8.36 | 6.95 | 6.68 | 7.53 | 7.57 | 6.97 | 6.74 | 6.75 | 9.47 | 6.08 |
| $Sb_2O_3+SnO_2$ | 0.59 | 0.24 | 0.38 | 0.61 | 0.22 | 0.18 | 0.49 | 0.15 | 0.43 | 0.47 |
| $(Sb_2O_3+SnO_2)/Ag_2O$ | 1.64 | 1 | 1.65 | 1.79 | 0.76 | 0.82 | 1.63 | 0.60 | 1.79 | 1.57 |
| $Ag_2O/CeO_2$ | 2.4 | 2 | 2.56 | 2.27 | 3.22 | 2.2 | 2.73 | 2.5 | 1.85 | 2.31 |

(continued)

| Embodiment (wt%) | 31# | 32# | 33# | 34# | 35# | 36# | 37# | 38# | 39# | 40# |
|---|---|---|---|---|---|---|---|---|---|---|
| $Li_2O/ZrO_2$ | 4.25 | 2.13 | 2.56 | 4.8 | 2.88 | 2.04 | 3.57 | 3.18 | 1.21 | 2.15 |
| $(K_2O+Na_2O)/ZrO_2$ | 3.65 | 1.06 | 1.63 | 1.7 | 1.79 | 1.08 | 2.43 | 2.24 | 0.97 | 0.67 |
| $(SiO_2+Li_2O)/ZrO_2$ | 39.8 | 16.9 | 19.65 | 40.95 | 24.71 | 16.25 | 27.6 | 24.62 | 12.7 | 15.2 |
| $MO/ZrO_2$ | 0.55 | 0 | 0 | 2 | 0 | 0 | 0 | 0 | 0 | 0 |
| $ZrO_2/(Ag_2O+CeO_2)$ | 3.92 | 13.33 | 13.44 | 4.08 | 8.95 | 15.94 | 7.32 | 9.71 | 16.49 | 12.56 |
| $(Ag_2O+SnO_2+Sb_2O_3)/CeO_2$ | 6.33 | 4 | 6.78 | 6.33 | 5.67 | 4 | 7.18 | 4 | 5.15 | 5.92 |
| $(Sb_2O_3+SnO_2+CeO_2)/Ag_2O$ | 2.06 | 1.5 | 2.04 | 2.24 | 1.07 | 1.27 | 2 | 1 | 2.33 | 2 |
| $SnO_2/(CeO_2+SnO_2)$ | 0.38 | 0.2 | 0.44 | 0.55 | 0.44 | 0.5 | 0.48 | 0.09 | 0.38 | 0.19 |
| $R_2O+Li_2O+Al_2O_3$ | 24.7 | 23.7 | 21.5 | 20.6 | 21.8 | 21.9 | 24 | 23.2 | 23 | 23.2 |
| $(SiO_2+Al_2O_3)/(Li_2O+Na_2O+K_2O)$ | 5.06 | 5.18 | 4.28 | 6.15 | 5.04 | 4.94 | 4.34 | 4.22 | 6 | 5.16 |
| Transparent portion $T_{400-800nm}$ (%) | 91.8 | 92.0 | 92.0 | 90.8 | 92.0 | 92.0 | 92.0 | 92.0 | 92.0 | 92.0 |
| Blackened portion $T_{940nm}$ (%) | 0.3 | 7.1 | 0.5 | 0.9 | 22.7 | 9.7 | 0.7 | 21.7 | 0.3 | 1.0 |
| Blackened portion $T_{870nm}$ (%) | 0.1 | 2.5 | 0.2 | 0.3 | 8.0 | 3.4 | 0.2 | 7.6 | 0.1 | 0.3 |
| Blackened portion $T_{400-800nm}$ (%) | 0 | 0.4 | 0 | 0 | 0.7 | 0.2 | 0 | 0.7 | 0 | 0.1 |

<Microcrystalline glass product embodiment>

This embodiment obtains the microcrystalline glass product with composition shown in Tables 9-12 by the above manufacturing method for microcrystalline glass product. In addition, the characteristics of each microcrystalline glass product are measured using the test methods described in the present invention, and the measurement results are presented in Tables 9-12. In the following embodiments, the transmittance of the microcrystalline glass product is tested using 1mm-thick samples.

Table 9.

| Embodiment (wt%) | 1# | 2# | 3# | 4# | 5# | 6# | 7# | 8# | 9# | 10# |
|---|---|---|---|---|---|---|---|---|---|---|
| $SiO_2$ | 72.66 | 67.2 | 69.9 | 65 | 77.19 | 74.37 | 75.58 | 70.1 | 69.2 | 71.5 |
| $Al_2O_3$ | 7.4 | 9.46 | 6.9 | 10 | 3 | 6.7 | 5.5 | 5.9 | 7.7 | 9 |
| $Li_2O$ | 10 | 8.7 | 11.6 | 10.5 | 9.9 | 10.6 | 8.6 | 11.5 | 8.7 | 8.3 |
| $K_2O$ | 4.2 | 3.8 | 3.5 | 5.5 | 2.5 | 2.7 | 4.8 | 4.1 | 5.1 | 2.2 |
| $Na_2O$ | 2.2 | 5.6 | 4.9 | 3.6 | 3 | 2.6 | 1.7 | 3.9 | 4.3 | 5 |
| $ZrO_2$ | 2.6 | 4.5 | 2.2 | 4.6 | 3.5 | 2.5 | 3.1 | 3.2 | 4 | 1.5 |
| $CeO_2$ | 0.1 | 0.07 | 0.12 | 0.06 | 0.14 | 0.07 | 0.08 | 0.14 | 0.1 | 0.09 |
| $Ag_2O$ | 0.2 | 0.42 | 0.38 | 0.32 | 0.34 | 0.27 | 0.33 | 0.45 | 0.47 | 0.41 |
| $Sb_2O_3$ | 0.52 | 0.2 | 0.36 | 0.32 | 0.42 | 0.15 | 0.15 | 0.09 | 0.32 | 0.46 |
| $SnO_2$ | 0.12 | 0.05 | 0.14 | 0.1 | 0.01 | 0.04 | 0.16 | 0.12 | 0.11 | 0.04 |
| ZnO | 0 | 0 | 0 | 0 | 0 | 0 | 0 | 0 | 0 | 1.5 |
| MgO | 0 | 0 | 0 | 0 | 0 | 0 | 0 | 0 | 0 | 0 |
| CaO | 0 | 0 | 0 | 0 | 0 | 0 | 0 | 0 | 0 | 0 |
| SrO | 0 | 0 | 0 | 0 | 0 | 0 | 0 | 0 | 0 | 0 |
| BaO | 0 | 0 | 0 | 0 | 0 | 0 | 0 | 0 | 0 | 0 |
| $La_2O_3$ | 0 | 0 | 0 | 0 | 0 | 0 | 0 | 0 | 0 | 0 |
| $Gd_2O_3$ | 0 | 0 | 0 | 0 | 0 | 0 | 0 | 0 | 0 | 0 |

(continued)

| Embodiment (wt%) | 1# | 2# | 3# | 4# | 5# | 6# | 7# | 8# | 9# | 10# |
|---|---|---|---|---|---|---|---|---|---|---|
| $Y_2O_3$ | 0 | 0 | 0 | 0 | 0 | 0 | 0 | 0 | 0 | 0 |
| $Fe_2O_3$ | 0 | 0 | 0 | 0 | 0 | 0 | 0 | 0.5 | 0 | 0 |
| Total | 100 | 100 | 100 | 100 | 100 | 100 | 100 | 100 | 100 | 100 |
| $R_2O$ | 6.4 | 9.4 | 8.4 | 9.1 | 5.5 | 5.3 | 6.5 | 8 | 9.4 | 7.2 |
| $SiO_2/Li_2O$ | 7.27 | 7.72 | 6.03 | 6.19 | 7.8 | 7.02 | 8.79 | 6.1 | 7.95 | 8.61 |
| $Sb_2O_3+SnO_2$ | 0.64 | 0.25 | 0.5 | 0.42 | 0.43 | 0.19 | 0.31 | 0.21 | 0.43 | 0.5 |
| $(Sb_2O_3+SnO_2)/Ag_2O$ | 3.2 | 0.6 | 1.32 | 1.31 | 1.26 | 0.7 | 0.94 | 0.47 | 0.91 | 1.22 |
| $Ag_2O/CeO_2$ | 2 | 6 | 3.17 | 5.33 | 2.43 | 3.86 | 4.13 | 3.21 | 4.7 | 4.56 |
| $Li_2O/ZrO_2$ | 3.85 | 1.93 | 5.27 | 2.28 | 2.83 | 4.24 | 2.77 | 3.59 | 2.18 | 5.53 |
| $(K_2O+Na_2O)/ZrO_2$ | 2.46 | 2.09 | 3.82 | 1.98 | 1.57 | 2.12 | 2.1 | 2.5 | 2.35 | 4.8 |
| $(SiO_2+Li_2O)/ZrO_2$ | 31.79 | 16.87 | 37.05 | 16.41 | 24.88 | 33.99 | 27.15 | 25.50 | 19.48 | 53.2 |
| $MO/ZrO_2$ | 0 | 0 | 0 | 0 | 0 | 0 | 0 | 0 | 0 | 1 |
| $ZrO_2/(Ag_2O+CeO_2)$ | 8.67 | 9.18 | 4.4 | 12.11 | 7.29 | 7.35 | 7.56 | 5.42 | 7.02 | 3 |
| $(Ag_2O+SnO_2+Sb_2O_3)/CeO_2$ | 8.4 | 9.57 | 7.33 | 12.33 | 5.5 | 6.57 | 8 | 4.71 | 9 | 10.11 |
| $(Sb_2O_3+SnO_2+CeO_2)/Ag_2O$ | 3.7 | 0.76 | 1.63 | 1.50 | 1.68 | 0.96 | 1.18 | 0.78 | 1.13 | 1.44 |
| $SnO_2/(CeO_2+SnO_2)$ | 0.55 | 0.42 | 0.54 | 0.63 | 0.07 | 0.36 | 0.67 | 0.46 | 0.52 | 0.31 |
| $R_2O+Li_2O+Al_2O_3$ | 23.8 | 27.56 | 26.9 | 29.6 | 18.4 | 22.6 | 20.6 | 25.4 | 25.8 | 24.5 |
| $(SiO_2+Al_2O_3)/(Li_2O+Na_2O+K_2O)$ | 4.88 | 4.24 | 3.84 | 3.83 | 5.21 | 5.1 | 5.37 | 3.9 | 4.25 | 5.19 |
| Transparent portion $T_{400-800nm}$ (%) | 91.8 | 92.0 | 91.6 | 91.8 | 92.0 | 92.0 | 90.7 | 91.6 | 91.8 | 92.0 |
| Blackened portion $T_{940nm}$(%) | 0.3 | 21.7 | 3.3 | 2.8 | 4.0 | 17.1 | 10.1 | 2.5 | 11.1 | 4.8 |
| Blackened portion $T_{870nm}$(%) | 0.3 | 7.6 | 1.2 | 1.0 | 1.4 | 6.0 | 3.5 | 0.9 | 3.9 | 1.7 |
| Blackened portion $T_{400-800nm}$(%) | 0 | 0.7 | 0.3 | 0.3 | 0.3 | 0.6 | 0.5 | 0.3 | 0.5 | 0.3 |
| Drop ball test height II (mm) | 1200 | 800 | 900 | 800 | 800 | 1200 | 900 | 1100 | 800 | 1200 |

Table 10.

| Embodiment (wt%) | 11# | 12# | 13# | 14# | 15# | 16# | 17# | 18# | 19# | 20# |
|---|---|---|---|---|---|---|---|---|---|---|
| $SiO_2$ | 73.78 | 72.36 | 76.2 | 74.27 | 69.2 | 72.56 | 70.4 | 72.7 | 76.3 | 75.4 |
| $Al_2O_3$ | 6.9 | 5.3 | 3.8 | 4.9 | 5.5 | 4.9 | 7 | 7.8 | 5.4 | 6.4 |
| $Li_2O$ | 7.5 | 8.3 | 9.2 | 9.6 | 10.4 | 7.3 | 11.9 | 10 | 10.5 | 8 |
| $K_2O$ | 1.1 | 3.4 | 2.4 | 3 | 3.8 | 3.3 | 4 | 3.3 | 1.4 | 2.3 |
| $Na_2O$ | 3.4 | 3.7 | 2 | 2.5 | 4.4 | 4.1 | 1.5 | 1.3 | 1.5 | 2.2 |
| $ZrO_2$ | 6.6 | 6.1 | 5.6 | 4.5 | 6.2 | 5.3 | 4.7 | 4.1 | 3.9 | 5.2 |
| $CeO_2$ | 0.07 | 0.13 | 0.13 | 0.1 | 0.09 | 0.1 | 0.12 | 0.11 | 0.13 | 0.11 |
| $Ag_2O$ | 0.42 | 0.44 | 0.3 | 0.46 | 0.24 | 0.37 | 0.23 | 0.22 | 0.32 | 0.23 |
| $Sb_2O_3$ | 0.07 | 0.1 | 0.22 | 0.55 | 0.07 | 0.06 | 0.08 | 0.45 | 0.51 | 0.11 |
| $SnO_2$ | 0.16 | 0.17 | 0.15 | 0.12 | 0.1 | 0.01 | 0.07 | 0.02 | 0.04 | 0.05 |
| ZnO | 0 | 0 | 0 | 0 | 0 | 0 | 0 | 0 | 0 | 0 |
| MgO | 0 | 0 | 0 | 0 | 0 | 0 | 0 | 0 | 0 | 0 |
| CaO | 0 | 0 | 0 | 0 | 0 | 0 | 0 | 0 | 0 | 0 |

(continued)

| Embodiment (wt%) | 11# | 12# | 13# | 14# | 15# | 16# | 17# | 18# | 19# | 20# |
|---|---|---|---|---|---|---|---|---|---|---|
| SrO | 0 | 0 | 0 | 0 | 0 | 0 | 0 | 0 | 0 | 0 |
| BaO | 0 | 0 | 0 | 0 | 0 | 0 | 0 | 0 | 0 | 0 |
| $La_2O_3$ | 0 | 0 | 0 | 0 | 0 | 2 | 0 | 0 | 0 | 0 |
| $Gd_2O_3$ | 0 | 0 | 0 | 0 | 0 | 0 | 0 | 0 | 0 | 0 |
| $Y_2O_3$ | 0 | 0 | 0 | 0 | 0 | 0 | 0 | 0 | 0 | 0 |
| $Fe_2O_3$ | 0 | 0 | 0 | 0 | 0 | 0 | 0 | 0 | 0 | 0 |
| Total | 100 | 100 | 100 | 100 | 100 | 100 | 100 | 100 | 100 | 100 |
| $R_2O$ | 4.5 | 7.1 | 4.4 | 5.5 | 8.2 | 7.4 | 5.5 | 4.6 | 2.9 | 4.5 |
| $SiO_2/Li_2O$ | 9.84 | 8.72 | 8.28 | 7.74 | 6.65 | 9.94 | 5.92 | 7.27 | 7.27 | 9.43 |
| $Sb_2O_3+SnO_2$ | 0.23 | 0.27 | 0.37 | 0.67 | 0.17 | 0.07 | 0.15 | 0.47 | 0.55 | 0.16 |
| $(Sb_2O_3+SnO_2)/Ag_2O$ | 0.55 | 0.61 | 1.23 | 1.46 | 0.71 | 0.19 | 0.65 | 2.14 | 1.72 | 0.7 |
| $Ag_2O/CeO_2$ | 6 | 3.38 | 2.31 | 4.6 | 2.67 | 3.7 | 1.92 | 2 | 2.46 | 2.09 |
| $Li_2O/ZrO_2$ | 1.14 | 1.36 | 1.64 | 2.13 | 1.68 | 1.38 | 2.53 | 2.44 | 2.69 | 1.54 |
| $(K_2O+Na_2O)/ZrO_2$ | 0.68 | 1.16 | 0.79 | 1.22 | 1.32 | 1.4 | 1.17 | 1.12 | 0.74 | 0.87 |
| $(SiO_2+Li_2O)/ZrO_2$ | 12.32 | 13.22 | 15.25 | 18.64 | 12.84 | 15.07 | 17.51 | 20.17 | 22.26 | 16.04 |
| $MO/ZrO_2$ | 0 | 0 | 0 | 0 | 0 | 0 | 0 | 0 | 0 | 0 |
| $ZrO_2/(Ag_2O+CeO_2)$ | 13.47 | 10.7 | 13.02 | 8.04 | 18.79 | 11.28 | 13.43 | 12.42 | 8.67 | 15.29 |
| $(Ag_2O+SnO_2+Sb_2O_3)/CeO_2$ | 9.29 | 5.46 | 5.15 | 11.3 | 4.56 | 4.4 | 3.17 | 6.27 | 6.69 | 3.55 |
| $(Sb_2O_3+SnO_2+CeO_2)/Ag_2O$ | 0.71 | 0.91 | 1.67 | 1.67 | 1.08 | 0.46 | 1.17 | 2.64 | 2.13 | 1.17 |
| $SnO_2/(CeO_2+SnO_2)$ | 0.7 | 0.57 | 0.54 | 0.55 | 0.53 | 0.09 | 0.37 | 0.15 | 0.24 | 0.31 |
| $R_2O+Li_2O+Al_2O_3$ | 18.9 | 20.7 | 17.4 | 20 | 24.1 | 19.6 | 24.4 | 22.4 | 18.8 | 18.9 |
| $(SiO_2+Al_2O_3)/(Li_2O+Na_2O+K_2O)$ | 6.72 | 5.04 | 5.88 | 5.24 | 4.02 | 5.27 | 4.45 | 5.51 | 6.1 | 6.54 |
| Transparent portion $T_{400-800nm}$ (%) | 90.7 | 90.7 | 91.5 | 90.7 | 91.8 | 92.0 | 92.0 | 92.0 | 92.0 | 92.0 |
| Blackened portion $T_{940nm}$(%) | 20.7 | 18.8 | 4.7 | 1.0 | 19.7 | 35.9 | 18.3 | 0.4 | 0.4 | 12.8 |
| Blackened portion $T_{870nm}$(%) | 7.3 | 6.6 | 1.7 | 0.4 | 6.9 | 12.6 | 6.4 | 0.1 | 0.1 | 4.5 |
| Blackened portion $T_{400-800nm}$(%) | 0.7 | 0.6 | 0.3 | 0.2 | 0.6 | 1.2 | 0.6 | 0 | 0 | 0.2 |
| Drop ball test height II (mm) | 800 | 900 | 900 | 1000 | 800 | 800 | 800 | 1200 | 1100 | 800 |

Table 11.

| Embodiment (wt%) | 21# | 22# | 23# | 24# | 25# | 26# | 27# | 28# | 29# | 30# |
|---|---|---|---|---|---|---|---|---|---|---|
| $SiO_2$ | 72.76 | 72 | 72.5 | 69.8 | 69.4 | 73.5 | 71 | 71.5 | 67.5 | 78 |
| $Al_2O_3$ | 5.7 | 6 | 6.1 | 6.5 | 8.4 | 7.6 | 7.9 | 9.5 | 6 | 3 |
| $Li_2O$ | 9.2 | 10.2 | 9.8 | 10 | 12 | 9.2 | 11.2 | 9.8 | 11.6 | 11.8 |
| $K_2O$ | 4.3 | 3 | 3.1 | 5.2 | 2.1 | 2.5 | 3.7 | 1.8 | 3.7 | 3 |
| $Na_2O$ | 1.9 | 2.5 | 2.8 | 5.4 | 3.3 | 1.7 | 4 | 3.7 | 4.1 | 1 |
| $ZrO_2$ | 5.5 | 5.5 | 4.8 | 2.4 | 3.7 | 4.6 | 1.6 | 2.9 | 6.5 | 2.1 |
| $CeO_2$ | 0.1 | 0.1 | 0.15 | 0.14 | 0.09 | 0.1 | 0.07 | 0.11 | 0.12 | 0.14 |
| $Ag_2O$ | 0.29 | 0.33 | 0.22 | 0.21 | 0.5 | 0.31 | 0.3 | 0.4 | 0.32 | 0.4 |
| $Sb_2O_3$ | 0.07 | 0.23 | 0.42 | 0.3 | 0.43 | 0.29 | 0.22 | 0.21 | 0.14 | 0.46 |

(continued)

| Embodiment (wt%) | 21# | 22# | 23# | 24# | 25# | 26# | 27# | 28# | 29# | 30# |
|---|---|---|---|---|---|---|---|---|---|---|
| $SnO_2$ | 0.18 | 0.14 | 0.11 | 0.05 | 0.08 | 0.2 | 0.01 | 0.08 | 0.02 | 0.1 |
| ZnO | 0 | 0 | 0 | 0 | 0 | 0 | 0 | 0 | 0 | 0 |
| MgO | 0 | 0 | 0 | 0 | 0 | 0 | 0 | 0 | 0 | 0 |
| CaO | 0 | 0 | 0 | 0 | 0 | 0 | 0 | 0 | 0 | 0 |
| SrO | 0 | 0 | 0 | 0 | 0 | 0 | 0 | 0 | 0 | 0 |
| BaO | 0 | 0 | 0 | 0 | 0 | 0 | 0 | 0 | 0 | 0 |
| $La_2O_3$ | 0 | 0 | 0 | 0 | 0 | 0 | 0 | 0 | 0 | 0 |
| $Gd_2O_3$ | 0 | 0 | 0 | 0 | 0 | 0 | 0 | 0 | 0 | 0 |
| $Y_2O_3$ | 0 | 0 | 0 | 0 | 0 | 0 | 0 | 0 | 0 | 0 |
| $Fe_2O_3$ | 0 | 0 | 0 | 0 | 0 | 0 | 0 | 0 | 0 | 0 |
| Total | 100 | 100 | 100 | 100 | 100 | 100 | 100 | 100 | 100 | 100 |
| $R_2O$ | 6.2 | 5.5 | 5.9 | 10.6 | 5.4 | 4.2 | 7.7 | 5.5 | 7.8 | 4 |
| $SiO_2/Li_2O$ | 7.91 | 7.06 | 7.40 | 6.98 | 5.78 | 7.99 | 6.34 | 7.30 | 5.82 | 6.61 |
| $Sb_2O_3+SnO_2$ | 0.25 | 0.37 | 0.53 | 0.35 | 0.51 | 0.49 | 0.23 | 0.29 | 0.16 | 0.56 |
| $(Sb_2O_3+SnO_2)/Ag_2O$ | 0.86 | 1.12 | 2.41 | 1.67 | 1.02 | 1.58 | 0.77 | 0.73 | 0.5 | 1.4 |
| $Ag_2O/CeO_2$ | 2.9 | 3.3 | 1.47 | 1.5 | 5.56 | 3.1 | 4.29 | 3.64 | 2.67 | 2.86 |
| $Li_2O/ZrO_2$ | 1.67 | 1.85 | 2.04 | 4.17 | 3.24 | 2 | 7 | 3.38 | 1.78 | 5.62 |
| $(K_2O+Na_2O)/ZrO_2$ | 1.13 | 1 | 1.23 | 4.42 | 1.46 | 0.91 | 4.81 | 1.9 | 1.2 | 1.9 |
| $(SiO_2+Li_2O)/ZrO_2$ | 14.9 | 14.95 | 17.15 | 33.25 | 22 | 17.98 | 51.38 | 28.03 | 12.17 | 42.76 |
| $MO/ZrO_2$ | 0 | 0 | 0 | 0 | 0 | 0 | 0 | 0 | 0 | 0 |
| $ZrO_2/(Ag_2O+CeO_2)$ | 14.1 | 12.79 | 12.97 | 6.86 | 6.27 | 11.22 | 4.32 | 5.69 | 14.77 | 3.89 |
| $(Ag_2O+SnO_2+Sb_2O_3)/CeO_2$ | 5.4 | 7 | 5 | 4 | 11.22 | 8 | 7.57 | 6.27 | 4 | 6.86 |
| $(Sb_2O_3+SnO_2+CeO_2)/Ag_2O$ | 1.21 | 1.42 | 3.09 | 2.33 | 1.2 | 1.9 | 1 | 1 | 0.88 | 1.75 |
| $SnO_2/(CeO_2+SnO_2)$ | 0.64 | 0.58 | 0.42 | 0.26 | 0.47 | 0.67 | 0.13 | 0.42 | 0.14 | 0.42 |
| $R_2O+Li_2O+Al_2O_3$ | 21.1 | 21.7 | 21.8 | 27.1 | 25.8 | 21 | 26.8 | 24.8 | 25.4 | 18.8 |
| $(SiO_2+Al_2O_3)/(Li_2O+Na_2O+K_2O)$ | 5.09 | 4.97 | 5.01 | 3.7 | 4.47 | 6.05 | 4.17 | 5.29 | 3.79 | 5.13 |
| Transparent portion $T_{400-800nm}$ (%) | 90.8 | 91.6 | 91.6 | 92.0 | 92.0 | 90.5 | 92.0 | 92.0 | 92.0 | 90.5 |
| Blackened portion $T_{940nm}$(%) | 12.6 | 7.0 | 7.9 | 2.1 | 6.4 | 0.9 | 17.0 | 17.5 | 24.6 | 0.5 |
| Blackened portion $T_{870nm}$(%) | 4.4 | 2.5 | 2.8 | 0.7 | 2.2 | 0.3 | 6.0 | 6.2 | 8.6 | 0.2 |
| Blackened portion $T_{400-800nm}$(%) | 0.2 | 0.4 | 0.4 | 0.3 | 0.4 | 0.1 | 0.6 | 0.6 | 0.7 | 0 |
| Drop ball test height II (mm) | 1200 | 1200 | 1100 | 800 | 800 | 1200 | 900 | 1200 | 800 | 1000 |

Table 12.

| Embodiment (wt%) | 31# | 32# | 33# | 34# | 35# | 36# | 37# | 38# | 39# | 40# |
|---|---|---|---|---|---|---|---|---|---|---|
| $SiO_2$ | 71.1 | 70.9 | 73.5 | 72.3 | 74.2 | 72.5 | 72.1 | 72.9 | 70.1 | 70.5 |
| $Al_2O_3$ | 8.9 | 8.4 | 3.5 | 7.6 | 5.9 | 6 | 6 | 4.8 | 9.7 | 8 |
| $Li_2O$ | 8.5 | 10.2 | 11 | 9.6 | 9.8 | 10.4 | 10.7 | 10.8 | 7.4 | 11.6 |
| $K_2O$ | 1.8 | 3.2 | 3.8 | 2.3 | 3.2 | 3.4 | 4.5 | 3.7 | 4.6 | 1.1 |
| $Na_2O$ | 5.5 | 1.9 | 3.2 | 1.1 | 2.9 | 2.1 | 2.8 | 3.9 | 1.3 | 2.5 |

(continued)

| Embodiment (wt%) | 31# | 32# | 33# | 34# | 35# | 36# | 37# | 38# | 39# | 40# |
|---|---|---|---|---|---|---|---|---|---|---|
| $ZrO_2$ | 2 | 4.8 | 4.3 | 2 | 3.4 | 5.1 | 3 | 3.4 | 6.1 | 5.4 |
| $CeO_2$ | 0.15 | 0.12 | 0.09 | 0.15 | 0.09 | 0.1 | 0.11 | 0.1 | 0.13 | 0.13 |
| $Ag_2O$ | 0.36 | 0.24 | 0.23 | 0.34 | 0.29 | 0.22 | 0.3 | 0.25 | 0.24 | 0.3 |
| $Sb_2O_3$ | 0.5 | 0.21 | 0.31 | 0.43 | 0.15 | 0.08 | 0.39 | 0.14 | 0.35 | 0.44 |
| $SnO_2$ | 0.09 | 0.03 | 0.07 | 0.18 | 0.07 | 0.1 | 0.1 | 0.01 | 0.08 | 0.03 |
| ZnO | 1.1 | 0 | 0 | 4 | 0 | 0 | 0 | 0 | 0 | 0 |
| MgO | 0 | 0 | 0 | 0 | 0 | 0 | 0 | 0 | 0 | 0 |
| CaO | 0 | 0 | 0 | 0 | 0 | 0 | 0 | 0 | 0 | 0 |
| SrO | 0 | 0 | 0 | 0 | 0 | 0 | 0 | 0 | 0 | 0 |
| BaO | 0 | 0 | 0 | 0 | 0 | 0 | 0 | 0 | 0 | 0 |
| $La_2O_3$ | 0 | 0 | 0 | 0 | 0 | 0 | 0 | 0 | 0 | 0 |
| $Gd_2O_3$ | 0 | 0 | 0 | 0 | 0 | 0 | 0 | 0 | 0 | 0 |
| $Y_2O_3$ | 0 | 0 | 0 | 0 | 0 | 0 | 0 | 0 | 0 | 0 |
| $Fe_2O_3$ | 0 | 0 | 0 | 0 | 0 | 0 | 0 | 0 | 0 | 0 |
| Total | 100 | 100 | 100 | 100 | 100 | 100 | 100 | 100 | 100 | 100 |
| $R_2O$ | 7.3 | 5.1 | 7 | 3.4 | 6.1 | 5.5 | 7.3 | 7.6 | 5.9 | 3.6 |
| $SiO_2/Li_2O$ | 8.36 | 6.95 | 6.68 | 7.53 | 7.57 | 6.97 | 6.74 | 6.75 | 9.47 | 6.08 |
| $Sb_2O_3+SnO_2$ | 0.59 | 0.24 | 0.38 | 0.61 | 0.22 | 0.18 | 0.49 | 0.15 | 0.43 | 0.47 |
| $(Sb_2O_3+SnO_2)/Ag_2O$ | 1.64 | 1 | 1.65 | 1.79 | 0.76 | 0.82 | 1.63 | 0.60 | 1.79 | 1.57 |
| $Ag_2O/CeO_2$ | 2.4 | 2 | 2.56 | 2.27 | 3.22 | 2.2 | 2.73 | 2.5 | 1.85 | 2.31 |
| $Li_2O/ZrO_2$ | 4.25 | 2.13 | 2.56 | 4.8 | 2.88 | 2.04 | 3.57 | 3.18 | 1.21 | 2.15 |
| $(K_2O+Na_2O)/ZrO_2$ | 3.65 | 1.06 | 1.63 | 1.7 | 1.79 | 1.08 | 2.43 | 2.24 | 0.97 | 0.67 |
| $(SiO_2+Li_2O)/ZrO_2$ | 39.8 | 16.9 | 19.65 | 40.95 | 24.71 | 16.25 | 27.6 | 24.62 | 12.7 | 15.2 |
| $MO/ZrO_2$ | 0.55 | 0 | 0 | 2 | 0 | 0 | 0 | 0 | 0 | 0 |
| $ZrO_2/(Ag_2O+CeO_2)$ | 3.92 | 13.33 | 13.44 | 4.08 | 8.95 | 15.94 | 7.32 | 9.71 | 16.49 | 12.56 |
| $(Ag_2O+SnO_2+Sb_2O_3)/CeO_2$ | 6.33 | 4 | 6.78 | 6.33 | 5.67 | 4 | 7.18 | 4 | 5.15 | 5.92 |
| $(Sb_2O_3+SnO_2+CeO_2)/Ag_2O$ | 2.06 | 1.5 | 2.04 | 2.24 | 1.07 | 1.27 | 2 | 1 | 2.33 | 2 |
| $SnO_2/(CeO_2+SnO_2)$ | 0.38 | 0.2 | 0.44 | 0.55 | 0.44 | 0.5 | 0.48 | 0.09 | 0.38 | 0.19 |
| $R_2O+Li_2O+Al_2O_3$ | 24.7 | 23.7 | 21.5 | 20.6 | 21.8 | 21.9 | 24 | 23.2 | 23 | 23.2 |
| $(SiO_2+Al_2O_3)/(Li_2O+Na_2O+K_2O)$ | 5.06 | 5.18 | 4.28 | 6.15 | 5.04 | 4.94 | 4.34 | 4.22 | 6 | 5.16 |
| Transparent portion $T_{400-800nm}$(%) | 91.8 | 92.0 | 92.0 | 90.8 | 92.0 | 92.0 | 92.0 | 92.0 | 92.0 | 92.0 |
| Blackened portion $T_{940nm}$(%) | 0.3 | 7.1 | 0.5 | 0.9 | 22.7 | 9.7 | 0.7 | 21.7 | 0.3 | 1.0 |
| Blackened portion $T_{870nm}$(%) | 0.1 | 2.5 | 0.2 | 0.3 | 8.0 | 3.4 | 0.2 | 7.6 | 0.1 | 0.3 |
| Blackened portion $T_{400-800nm}$(%) | 0 | 0.4 | 0 | 0 | 0.7 | 0.2 | 0 | 0.7 | 0 | 0.1 |
| Drop ball test height II (mm) | 1200 | 1100 | 1000 | 900 | 800 | 800 | 800 | 800 | 800 | 800 |

**Claims**

1. A microcrystalline glass product, wherein components thereof are represented by weight percentage, comprising: 65-78% of $SiO_2$; 2-12% of $R_2O$; 5-15% of $Li_2O$; 3-12% of $Al_2O_3$; 1.5-10% of $ZrO_2$; 0.01-0.6% of $CeO_2$; and 0.01-0.8%

of $Ag_2O$; and the $R_2O$ is one or both of $Na_2O$ and $K_2O$.

2. The microcrystalline glass product according to claim 1, wherein components thereof are represented by weight percentage, further comprising: 0-1% of $Sb_2O_3$; and/or 0-0.5% of $SnO_2$; and/or 0-5% of MO; and/or 0-5% of $Ln_2O_3$; and/or 0-1% of $Fe_2O_3$; the MO is one or more of MgO, CaO, SrO, BaO and ZnO; and the $Ln_2O_3$ is one or more of $La_2O_3$, $Gd_2O_3$ and $Y_2O_3$.

3. A microcrystalline glass product, wherein components thereof are represented by weight percentage, consisting of: 65-78% of $SiO_2$; 2-12% of $R_2O$; 5-15% of $Li_2O$; 3-12% of $Al_2O_3$; 1.5-10% of $ZrO_2$; 0.01-0.6% of $CeO_2$; 0.01-0.8% of $Ag_2O$; 0-1% of $Sb_2O_3$; 0-0.5% of $SnO_2$; 0-5% of MO; 0-5% of $Ln_2O_3$; and 0-1% of $Fe_2O_3$; the $R_2O$ is one or both of $Na_2O$ and $K_2O$; the MO is one or more of MgO, CaO, SrO, BaO and ZnO; and the $Ln_2O_3$ is one or more of $La_2O_3$, $Gd_2O_3$ and $Y_2O_3$.

4. The microcrystalline glass product according to any of claims 1-3, wherein components thereof are represented by weight percentage, and one or more of the following 14 conditions are satisfied:

1) $SiO_2/Li_2O$ is 5.5-10.0, $SiO_2/Li_2O$ is preferably 6.0-9.0, and $SiO_2/Li_2O$ is more preferably 7.0-8.5;
2) $(Sb_2O_3+SnO_2)/Ag_2O$ is 0.1-5.0, $(Sb_2O_3+SnO_2)/Ag_2O$ is preferably 0.5-3.5, and $(Sb_2O_3+SnO_2)/Ag_2O$ is more preferably 1.0-2.6;
3) $(K_2O+Na_2O)/ZrO_2$ is 0.5-7.1, $(K_2O+Na_2O)/ZrO_2$ is preferably 0.7-4.5, and $(K_2O+Na_2O)/ZrO_2$ is more preferably 0.8-2.5;
4) $Ag_2O/CeO_2$ is 1.0-10.0, $Ag_2O/CeO_2$ is preferably 1.5-6.5, and $Ag_2O/CeO_2$ is more preferably 2.0-4.5;
5) $Li_2O/ZrO_2$ is 1.0-7.5, $Li_2O/ZrO_2$ is preferably 1.2-5.0, $Li_2O/ZrO_2$ is more preferably 1.4-4.3, and $Li_2O/ZrO_2$ is further preferably 1.6-3.0;
6) $(SiO_2+Li_2O)/ZrO_2$ is 8.0-55.0, $(SiO_2+Li_2O)/ZrO_2$ is preferably 10.0-37.0, $(SiO_2+Li_2O)/ZrO_2$ is more preferably 12.0-25.0, and $(SiO_2+Li_2O)/ZrO_2$ is further preferably 13.0-20.0;
7) $ZrO_2/(Ag_2O+CeO_2)$ is 2.3-50.0, $ZrO_2/(Ag_2O+CeO_2)$ is preferably 6.5-35.0, $ZrO_2/(Ag_2O+CeO_2)$ is more preferably 8.5-20.0, and $ZrO_2/(Ag_2O+CeO_2)$ is further preferably 11.0-18.0;
8) $(Ag_2O+SnO_2+Sb_2O_3)/CeO_2$ is 1.0-30.0, $(Ag_2O+SnO_2+Sb_2O_3)/CeO_2$ is preferably 3.0-20.0, $(Ag_2O+SnO_2+Sb_2O_3)/CeO_2$ is more preferably 5.0-12.5, and $(Ag_2O+SnO_2+Sb_2O_3)/CeO_2$ is further preferably 7.5-10.0;
9) $(Sb_2O_3+SnO_2+CeO_2)/Ag_2O$ is 0.1-10.0, $(Sb_2O_3+SnO_2+CeO_2)/Ag_2O$ is preferably 0.4-5.0, $(Sb_2O_3+SnO_2+CeO_2)/Ag_2O$ is more preferably 0.7-3.7, and $(Sb_2O_3+SnO_2+CeO_2)/Ag_2O$ is further preferably 1.5-3.2;
10) $SnO_2/(CeO_2+SnO_2)$ is 0-0.9, $SnO_2/(CeO_2+SnO_2)$ is preferably 0-0.6, and $SnO_2/(CeO_2+SnO_2)$ is more preferably 0-0.5;
11) $R_2O+Li_2O+Al_2O_3$ is 15-30%, $R_2O+Li_2O+Al_2O_3$ is preferably 17.5-29.5%, $R_2O+Li_2O+Al_2O_3$ is more preferably 18.5-26%, and $R_2O+Li_2O+Al_2O_3$ is further preferably 20-25%;
12) $(SiO_2+Al_2O_3)/(Li_2O+Na_2O+K_2O)$ is 3.0-7.5, $(SiO_2+Al_2O_3)/(Li_2O+Na_2O+K_2O)$ is preferably 3.7-6.5, $(SiO_2+Al_2O_3)/(Li_2O+Na_2O+K_2O)$ is more preferably 4.3-6.0, and $(SiO_2+Al_2O_3)/(Li_2O+Na_2O+K_2O)$ is further preferably 4.8-5.8;
13) $MO/ZrO_2$ is 2.5 or less, $MO/ZrO_2$ is preferably 1.5 or less, and $MO/ZrO_2$ is more preferably 0.5 or less; and
14) $Sb_2O_3+SnO_2$ is 0.05-1.2%, $Sb_2O_3+SnO_2$ is preferably 0.1-1%, $Sb_2O_3+SnO_2$ is more preferably 0.2-0.7%, and the $R_2O$ is one or both of $Na_2O$ and $K_2O$; and the MO is one or more of MgO, CaO, SrO, BaO and ZnO.

5. The microcrystalline glass product according to any of claims 1-3, wherein components thereof are represented by weight percentage, in which: $SiO_2$ is 68-77%, and $SiO_2$ is preferably 69.5-75.5%; and/or $R_2O$ is 3-10%, and $R_2O$ is preferably 4-8%; and/or $Li_2O$ is 7-13%, and $Li_2O$ is preferably 8.5-12%; and/or $Al_2O_3$ is 4-10%, and $Al_2O_3$ is preferably 5-9%; and/or $ZrO_2$ is 2-8%, and $ZrO_2$ is preferably 3-6.5%; and/or $CeO_2$ is 0.07-0.4%, and $CeO_2$ is preferably 0.08-0.3%; and/or $Ag_2O$ is 0.1-0.6%, and $Ag_2O$ is preferably 0.2-0.5%; and/or $Sb_2O_3$ is 0.01-0.7%, and $Sb_2O_3$ is preferably 0.07-0.5%; and/or $SnO_2$ is 0-0.3%, and $SnO_2$ is preferably 0-0.2%; and/or MO is 0-3%, and MO is preferably 0-1%, more preferably not contained; and/or $Ln_2O_3$ is 0-3%, and $Ln_2O_3$ is preferably 0-1%, more preferably not contained; and/or $Fe_2O_3$ is 0-0.5%, and $Fe_2O_3$ is preferably 0-0.2%, more preferably not contained; the $R_2O$ is one or both of $Na_2O$ and $K_2O$; the MO is one or more of MgO, CaO, SrO, BaO and ZnO; and the $Ln_2O_3$ is one or more of $La_2O_3$, $Gd_2O_3$ and $Y_2O_3$.

6. The microcrystalline glass product according to any of claims 1-3, wherein the microcrystalline glass product contains one or more blackened portions and one or more transparent portions; or the microcrystalline glass product is a blackened portion as a whole.

7. The microcrystalline glass product according to claim 6, wherein the microcrystalline glass product contains a lithium silicate crystalline phase, preferably a lithium metasilicate crystalline phase; more preferably, the lithium metasilicate crystalline phase accounts for 5-50% by weight percentage in the blackened portion of the microcrystalline glass product; further preferably, the lithium metasilicate crystalline phase accounts for 5-40% by weight percentage in the blackened portion of the microcrystalline glass product; and more further preferably, the lithium metasilicate crystalline phase accounts for 10-30% by weight percentage in the blackened portion of the microcrystalline glass product.

8. The microcrystalline glass product according to claim 6, wherein an average transmittance $T_{400-800nm}$ of the transparent portion of the microcrystalline glass product with a thickness of 0.2-1.5mm within a band range of 400-800nm is 85.0% or more, preferably 88.0% or more, more preferably 90.0% or more, further preferably 91.0% or more, more further preferably 91.5-95.0%; and/or an average transmittance $T_{400-800nm}$ of the blackened portion of the microcrystalline glass product with a thickness of 0.2-1.5mm within a band range of 400-800nm is 5.0% or less, preferably 3.0% or less, more preferably 1.5% or less, further preferably 1.2% or less, more further preferably 0.5% or less; and/or a transmittance at 870nm $T_{870nm}$ of the blackened portion of the microcrystalline glass product with a thickness of 0.2-1.5mm is 15.0% or less, preferably 0.1-12.5%, more preferably 0.1-10%, further preferably 0.1-8.0%, more further preferably 0.1-5.0%; and/or a transmittance at 940nm $T_{940nm}$ of the blackened portion of the microcrystalline glass product with a thickness of 0.2-1.5mm is 50.0% or less, preferably 0.1-35.0%, more preferably 0.3-20.0%, further preferably 0.3-15.0%, more further preferably 0.3-10.0%.

9. The microcrystalline glass product according to claim 8, wherein the thickness of the microcrystalline glass product is 0.5-1.5mm, preferably 0.8-1.2mm, more preferably 0.5mm, 0.7mm, 0.8mm, 0.9mm, 1.0mm, 1.1mm or 1.2mm.

10. The microcrystalline glass product according to any of claims 1-3, wherein the microcrystalline glass product has a drop ball test height II of 800mm or more, preferably 900mm or more, more preferably 1000mm or more, further preferably 1100mm or more.

11. A microcrystalline glass, wherein components thereof are represented by weight percentage, comprising: 65-78% of $SiO_2$; 2-12% of $R_2O$; 5-15% of $Li_2O$; 3-12% of $Al_2O_3$; 1.5-10% of $ZrO_2$; 0.01-0.6% of $CeO_2$; and 0.01-0.8% of $Ag_2O$; and the $R_2O$ is one or both of $Na_2O$ and $K_2O$.

12. The microcrystalline glass according to claim 11, wherein components thereof are represented by weight percentage, further comprising: 0-1% of $Sb_2O_3$; and/or 0-0.5% of $SnO_2$; and/or 0-5% of $MO$; and/or 0-5% of $Ln_2O_3$; and/or 0-1% of $Fe_2O_3$; the $MO$ is one or more of $MgO$, $CaO$, $SrO$, $BaO$ and $ZnO$; and the $Ln_2O_3$ is one or more of $La_2O_3$, $Gd_2O_3$ and $Y_2O_3$.

13. A microcrystalline glass, wherein components thereof are represented by weight percentage, consisting of: 65-78% of $SiO_2$; 2-12% of $R_2O$; 5-15% of $Li_2O$; 3-12% of $Al_2O_3$; 1.5-10% of $ZrO_2$; 0.01-0.6% of $CeO_2$; 0.01-0.8% of $Ag_2O$; 0-1% of $Sb_2O_3$; 0-0.5% of $SnO_2$; 0-5% of $MO$; 0-5% of $Ln_2O_3$; and 0-1% of $Fe_2O_3$; the $R_2O$ is one or both of $Na_2O$ and $K_2O$; the $MO$ is one or more of $MgO$, $CaO$, $SrO$, $BaO$ and $ZnO$; and the $Ln_2O_3$ is one or more of $La_2O_3$, $Gd_2O_3$ and $Y_2O_3$.

14. The microcrystalline glass according to any of claims 11-13, wherein components thereof are represented by weight percentage, and one or more of the following 14 conditions are satisfied:

1) $SiO_2/Li_2O$ is 5.5-10.0, $SiO_2/Li_2O$ is preferably 6.0-9.0, and $SiO_2/Li_2O$ is more preferably 7.0-8.5;
2) $(Sb_2O_3+SnO_2)/Ag_2O$ is 0.1-5.0, $(Sb_2O_3+SnO_2)/Ag_2O$ is preferably 0.5-3.5, and $(Sb_2O_3+SnO_2)/Ag_2O$ is more preferably 1.0-2.6;
3) $(K_2O+Na_2O)/ZrO_2$ is 0.5-7.1, $(K_2O+Na_2O)/ZrO_2$ is preferably 0.7-4.5, and $(K_2O+Na_2O)/ZrO_2$ is more preferably 0.8-2.5;
4) $Ag_2O/CeO_2$ is 1.0-10.0, $Ag_2O/CeO_2$ is preferably 1.5-6.5, and $Ag_2O/CeO_2$ is more preferably 2.0-4.5;
5) $Li_2O/ZrO_2$ is 1.0-7.5, $Li_2O/ZrO_2$ is preferably 1.2-5.0, $Li_2O/ZrO_2$ is more preferably 1.4-4.3, and $Li_2O/ZrO_2$ is further preferably 1.6-3.0;
6) $(SiO_2+Li_2O)/ZrO_2$ is 8.0-55.0, $(SiO_2+Li_2O)/ZrO_2$ is preferably 10.0-37.0, $(SiO_2+Li_2O)/ZrO_2$ is more preferably 12.0-25.0, and $(SiO_2+Li_2O)/ZrO_2$ is further preferably 13.0-20.0;
7) $ZrO_2/(Ag_2O+CeO_2)$ is 2.3-50.0, $ZrO_2/(Ag_2O+CeO_2)$ is preferably 6.5-35.0, $ZrO_2/(Ag_2O+CeO_2)$ is more preferably 8.5-20.0, and $ZrO_2/(Ag_2O+CeO_2)$ is further preferably 11.0-18.0;
8) $(Ag_2O+SnO_2+Sb_2O_3)/CeO_2$ is 1.0-30.0, $(Ag_2O+SnO_2+Sb_2O_3)/CeO_2$ is preferably 3.0-20.0, $(Ag_2O+SnO_2+Sb_2O_3)/CeO_2$ is more preferably 5.0-12.5, and $(Ag_2O+SnO_2+Sb_2O_3)/CeO_2$ is further preferably 7.5-10.0;
9) $(Sb_2O_3+SnO_2+CeO_2)/Ag_2O$ is 0.1-10.0, $(Sb_2O_3+SnO_2+CeO_2)/Ag_2O$ is preferably 0.4-5.0, $(Sb_2O_3+SnO_2$

+CeO$_2$)/Ag$_2$O is more preferably 0.7-3.7, and (Sb$_2$O$_3$+SnO$_2$+CeO$_2$)/Ag$_2$O is further preferably 1.5-3.2;

10) SnO$_2$/(CeO$_2$+SnO$_2$) is 0-0.9, SnO$_2$/(CeO$_2$+SnO$_2$) is preferably 0-0.6, and SnO$_2$/(CeO$_2$+SnO$_2$) is more preferably 0-0.5;

11) R$_2$O+Li$_2$O+Al$_2$O$_3$ is 15-30%, R$_2$O+Li$_2$O+Al$_2$O$_3$ is preferably 17.5-29.5%, R$_2$O+Li$_2$O+Al$_2$O$_3$ is more preferably 18.5-26%, and R$_2$O+Li$_2$O+Al$_2$O$_3$ is further preferably 20-25%;

12) (SiO$_2$+Al$_2$O$_3$)/(Li$_2$O+Na$_2$O+K$_2$O) is 3.0-7.5, (SiO$_2$+Al$_2$O$_3$)/(Li$_2$O+Na$_2$O+K$_2$O) is preferably 3.7-6.5, (SiO$_2$+Al$_2$O$_3$)/(Li$_2$O+Na$_2$O+K$_2$O) is more preferably 4.3-6.0, and (SiO$_2$+Al$_2$O$_3$)/(Li$_2$O+Na$_2$O+K$_2$O) is further preferably 4.8-5.8;

13) MO/ZrO$_2$ is 2.5 or less, MO/ZrO$_2$ is preferably 1.5 or less, and MO/ZrO$_2$ is more preferably 0.5 or less; and

14) Sb$_2$O$_3$+SnO$_2$ is 0.05-1.2%, Sb$_2$O$_3$+SnO$_2$ is preferably 0.1-1%, Sb$_2$O$_3$+SnO$_2$ is more preferably 0.2-0.7%, and the R$_2$O is one or both of Na$_2$O and K$_2$O; and the MO is one or more of MgO, CaO, SrO, BaO and ZnO.

15. The microcrystalline glass according to any of claims 11-13, wherein components thereof are represented by weight percentage, in which: SiO$_2$ is 68-77%, and SiO$_2$ is preferably 69.5-75.5%; and/or R$_2$O is 3-10%, and R$_2$O is preferably 4-8%; and/or Li$_2$O is 7-13%, and Li$_2$O is preferably 8.5-12%; and/or Al$_2$O$_3$ is 4-10%, and Al$_2$O$_3$ is preferably 5-9%; and/or ZrO$_2$ is 2-8%, and ZrO$_2$ is preferably 3-6.5%; and/or CeO$_2$ is 0.07-0.4%, and CeO$_2$ is preferably 0.08-0.3%; and/or Ag$_2$O is 0.1-0.6%, and Ag$_2$O is preferably 0.2-0.5%; and/or Sb$_2$O$_3$ is 0.01-0.7%, and Sb$_2$O$_3$ is preferably 0.07-0.5%; and/or SnO$_2$ is 0-0.3%, and SnO$_2$ is preferably 0-0.2%; and/or MO is 0-3%, and MO is preferably 0-1%, more preferably not contained; and/or Ln$_2$O$_3$ is 0-3%, and Ln$_2$O$_3$ is preferably 0-1%, more preferably not contained; and/or Fe$_2$O$_3$ is 0-0.5%, and Fe$_2$O$_3$ is preferably 0-0.2%, more preferably not contained; the R$_2$O is one or both of Na$_2$O and K$_2$O; the MO is one or more of MgO, CaO, SrO, BaO and ZnO; and the Ln$_2$O$_3$ is one or more of La$_2$O$_3$, Gd$_2$O$_3$ and Y$_2$O$_3$.

16. The microcrystalline glass according to any of claims 11-13, wherein the microcrystalline glass contains one or more blackened portions and one or more transparent portions; or the microcrystalline glass is a blackened portion as a whole.

17. The microcrystalline glass according to claim 16, wherein the microcrystalline glass contains a lithium silicate crystalline phase, preferably a lithium metasilicate crystalline phase; more preferably, the lithium metasilicate crystalline phase accounts for 5-50% by weight percentage in the blackened portion of the microcrystalline glass; further preferably, the lithium metasilicate crystalline phase accounts for 5-40% by weight percentage in the blackened portion of the microcrystalline glass; and more further preferably, the lithium metasilicate crystalline phase accounts for 10-30% by weight percentage in the blackened portion of the microcrystalline glass.

18. The microcrystalline glass according to claim 16, wherein an average transmittance T$_{400-800nm}$ of the transparent portion of the microcrystalline glass with a thickness of 0.2-1.5mm within a band range of 400-800nm is 85.0% or more, preferably 88.0% or more, more preferably 90.0% or more, further preferably 91.0% or more, more further preferably 91.5-95.0%; and/or an average transmittance T$_{400-800nm}$ of the blackened portion of the microcrystalline glass with a thickness of 0.2-1.5mm within a band range of 400-800nm is 5.0% or less, preferably 3.0% or less, more preferably 1.5% or less, further preferably 1.2% or less, more further preferably 0.5% or less; and/or a transmittance at 870nm T$_{870nm}$ of the blackened portion of the microcrystalline glass with a thickness of 0.2-1.5mm is 15.0% or less, preferably 0.1-12.5%, more preferably 0.1-10%, further preferably 0.1-8.0%, more further preferably 0.1-5.0%; and/or a transmittance at 940nm T$_{940nm}$ of the blackened portion of the microcrystalline glass with a thickness of 0.2-1.5mm is 50.0% or less, preferably 0.1-35.0%, more preferably 0.3-20.0%, further preferably 0.3-15.0%, more further preferably 0.3-10.0%.

19. The microcrystalline glass according to claim 18, wherein the thickness of the microcrystalline glass is 0.5-1.5mm, preferably 0.8-1.2mm, more preferably 0.5mm, 0.7mm, 0.8mm, 0.9mm, 1.0mm, 1.1mm or 1.2mm.

20. A matrix glass, wherein components thereof are represented by weight percentage, comprising: 65-78% of SiO$_2$; 2-12% of R$_2$O; 5-15% of Li$_2$O; 3-12% of Al$_2$O$_3$; 1.5-10% of ZrO$_2$; 0.01-0.6% of CeO$_2$; and 0.01-0.8% of Ag$_2$O; and the R$_2$O is one or both of Na$_2$O and K$_2$O.

21. The matrix glass according to claim 20, wherein components thereof are represented by weight percentage, further comprising: 0-1% of Sb$_2$O$_3$; and/or 0-0.5% of SnO$_2$; and/or 0-5% of MO; and/or 0-5% of Ln$_2$O$_3$; and/or 0-1% of Fe$_2$O$_3$; the MO is one or more of MgO, CaO, SrO, BaO and ZnO; and the Ln$_2$O$_3$ is one or more of La$_2$O$_3$, Gd$_2$O$_3$ and Y$_2$O$_3$.

22. A matrix glass, wherein components thereof are represented by weight percentage, consisting of: 65-78% of SiO$_2$;

2-12% of $R_2O$; 5-15% of $Li_2O$; 3-12% of $Al_2O_3$; 1.5-10% of $ZrO_2$; 0.01-0.6% of $CeO_2$; 0.01-0.8% of $Ag_2O$; 0-1% of $Sb_2O_3$; 0-0.5% of $SnO_2$; 0-5% of MO; 0-5% of $Ln_2O_3$; and 0-1% of $Fe_2O_3$; the $R_2O$ is one or both of $Na_2O$ and $K_2O$; the MO is one or more of MgO, CaO, SrO, BaO and ZnO; and the $Ln_2O_3$ is one or more of $La_2O_3$, $Gd_2O_3$ and $Y_2O_3$.

**23.** The matrix glass according to any of claims 20 to 22, wherein components thereof are represented by weight percentage, and one or more of the following 14 conditions are satisfied:

1) $SiO_2/Li_2O$ is 5.5-10.0, $SiO_2/Li_2O$ is preferably 6.0-9.0, and $SiO_2/Li_2O$ is more preferably 7.0-8.5;
2) $(Sb_2O_3+SnO_2)/Ag_2O$ is 0.1-5.0, $(Sb_2O_3+SnO_2)/Ag_2O$ is preferably 0.5-3.5, and $(Sb_2O_3+SnO_2)/Ag_2O$ is more preferably 1.0-2.6;
3) $(K_2O+Na_2O)/ZrO_2$ is 0.5-7.1, $(K_2O+Na_2O)/ZrO_2$ is preferably 0.7-4.5, and $(K_2O+Na_2O)/ZrO_2$ is more preferably 0.8-2.5;
4) $Ag_2O/CeO_2$ is 1.0-10.0, $Ag_2O/CeO_2$ is preferably 1.5-6.5, and $Ag_2O/CeO_2$ is more preferably 2.0-4.5;
5) $Li_2O/ZrO_2$ is 1.0-7.5, $Li_2O/ZrO_2$ is preferably 1.2-5.0, $Li_2O/ZrO_2$ is more preferably 1.4-4.3, and $Li_2O/ZrO_2$ is further preferably 1.6-3.0;
6) $(SiO_2+Li_2O)/ZrO_2$ is 8.0-55.0, $(SiO_2+Li_2O)/ZrO_2$ is preferably 10.0-37.0, $(SiO_2+Li_2O)/ZrO_2$ is more preferably 12.0-25.0, and $(SiO_2+Li_2O)/ZrO_2$ is further preferably 13.0-20.0;
7) $ZrO_2/(Ag_2O+CeO_2)$ is 2.3-50.0, $ZrO_2/(Ag_2O+CeO_2)$ is preferably 6.5-35.0, $ZrO_2/(Ag_2O+CeO_2)$ is more preferably 8.5-20.0, and $ZrO_2/(Ag_2O+CeO_2)$ is further preferably 11.0-18.0;
8) $(Ag_2O+SnO_2+Sb_2O_3)/CeO_2$ is 1.0-30.0, $(Ag_2O+SnO_2+Sb_2O_3)/CeO_2$ is preferably 3.0-20.0, $(Ag_2O+SnO_2+Sb_2O_3)/CeO_2$ is more preferably 5.0-12.5, and $(Ag_2O+SnO_2+Sb_2O_3)/CeO_2$ is further preferably 7.5-10.0;
9) $(Sb_2O_3+SnO_2+CeO_2)/Ag_2O$ is 0.1-10.0, $(Sb_2O_3+SnO_2+CeO_2)/Ag_2O$ is preferably 0.4-5.0, $(Sb_2O_3+SnO_2+CeO_2)/Ag_2O$ is more preferably 0.7-3.7, and $(Sb_2O_3+SnO_2+CeO_2)/Ag_2O$ is further preferably 1.5-3.2;
10) $SnO_2/(CeO_2+SnO_2)$ is 0-0.9, $SnO_2/(CeO_2+SnO_2)$ is preferably 0-0.6, and $SnO_2/(CeO_2+SnO_2)$ is more preferably 0-0.5;
11) $R_2O+Li_2O+Al_2O_3$ is 15-30%, $R_2O+Li_2O+Al_2O_3$ is preferably 17.5-29.5%, $R_2O+Li_2O+Al_2O_3$ is more preferably 18.5-26%, and $R_2O+Li_2O+Al_2O_3$ is further preferably 20-25%;
12) $(SiO_2+Al_2O_3)/(Li_2O+Na_2O+K_2O)$ is 3.0-7.5, $(SiO_2+Al_2O_3)/(Li_2O+Na_2O+K_2O)$ is preferably 3.7-6.5, $(SiO_2+Al_2O_3)/(Li_2O+Na_2O+K_2O)$ is more preferably 4.3-6.0, and $(SiO_2+Al_2O_3)/(Li_2O+Na_2O+K_2O)$ is further preferably 4.8-5.8;
13) $MO/ZrO_2$ is 2.5 or less, $MO/ZrO_2$ is preferably 1.5 or less, and $MO/ZrO_2$ is more preferably 0.5 or less; and
14) $Sb_2O_3+SnO_2$ is 0.05-1.2%, $Sb_2O_3+SnO_2$ is preferably 0.1-1%, $Sb_2O_3+SnO_2$ is more preferably 0.2-0.7%, and the $R_2O$ is one or both of $Na_2O$ and $K_2O$; and MO is one or more of MgO, CaO, SrO, BaO and ZnO.

**24.** The matrix glass according to any of claims 20-22, wherein components thereof are represented by weight percentage, in which: $SiO_2$ is 68-77%, $SiO_2$ is preferably 69.5-75.5%; and/or $R_2O$ is 3-10%, $R_2O$ is preferably 4-8%; and/or $Li_2O$ is 7-13%, $Li_2O$ is preferably 8.5-12%; and/or $Al_2O_3$ is 4-10%, $Al_2O_3$ is preferably 5-9%; and/or $ZrO_2$ is 2-8%, $ZrO_2$ is preferably 3-6.5%; and/or $CeO_2$ is 0.07-0.4%, $CeO_2$ is preferably 0.08-0.3%; and/or $Ag_2O$ is 0.1-0.6%, $Ag_2O$ is preferably 0.2-0.5%; and/or $Sb_2O_3$ is 0.01-0.7%, $Sb_2O_3$ is preferably 0.07-0.5%; and/or $SnO_2$ is 0-0.3%, $SnO_2$ is preferably 0-0.2%; and/or MO is 0-3%, and MO is preferably 0-1%, more preferably not contained; and/or $Ln_2O_3$ is 0-3%, and $Ln_2O_3$ is preferably 0-1%, more preferably not contained; and/or $Fe_2O_3$ is 0-0.5%, and $Fe_2O_3$ is preferably 0-0.2%, more preferably not contained; the $R_2O$ is one or both of $Na_2O$ and $K_2O$; the MO is one or more of MgO, CaO, SrO, BaO and ZnO; and the $Ln_2O_3$ is one or more of $La_2O_3$, $Gd_2O_3$ and $Y_2O_3$.

**25.** The matrix glass according to any of claims 20-22, wherein refractive index $n_d$ of the matrix glass is 1.51-1.55, preferably 1.52-1.54, more preferably 1.53-1.535, further preferably 1.53112-1.53284; and/or Young's modulus E is $7000\times10^7Pa$-$9500\times10^7Pa$, preferably $7500\times10^7Pa$-$9200\times10^7Pa$, more preferably $7836\times10^7Pa$-$9014\times10^7Pa$, further preferably $8005\times10^7Pa$-$8488\times10^7Pa$; and/or Knoop hardness $Hk_{0.1}$ is 450kgf/mm$^2$ or more, preferably 470-600kgf/mm$^2$, more preferably 480-582kgf/mm$^2$, further preferably 492-532 kgf/mm$^2$; and/or falling ball test height I is 200mm or more, preferably 300mm or more, more preferably 400mm or more; and/or the dielectric loss $\tan\delta$ is $11.0\times10^{-3}$ or less, preferably $7.0\times10^{-3}$-$10.5\times10^{-3}$, more preferably $7.2\times10^{-3}$-$9.8\times10^{-3}$, further preferably $7.4\times10^{-3}$-$9.2\times10^{-3}$; and/or the dielectric constant $\varepsilon_r$ is 5.5-8.5, preferably 6.0-8.0, more preferably 6.2-7.7, further preferably 6.3-7.0; and/or the Linear Expansion Coefficient $\alpha_{20°C-300°C}$ is $100\times10^{-7}/°C$ or less, preferably $65\times10^{-7}/°C$-$100\times10^{-7}/°C$, more preferably $71\times10^{-7}/°C$-$95\times10^{-7}/°C$, further preferably $75\times10^{-7}/°C$-$90\times10^{-7}/°C$.

**26.** A glass cover plate, comprising the microcrystalline glass product according to any of claims 1-10, and/or the microcrystalline glass according to any of claims 11-19, and/or the matrix glass according to any of claims 20-25.

27. A glass component, comprising the microcrystalline glass product according to any of claims 1-10, and/or the microcrystalline glass according to any of claims 11-19, and/or the matrix glass according to any of claims 20-25.

28. A device, comprising the microcrystalline glass product according to any of claims 1-10, and/or the microcrystalline glass according to any of claims 11-19, and/or the matrix glass according to any of claims 20-25, and/or the glass cover plate according to claim 26, and/or the glass component according to claim 27.

29. A manufacturing method for the microcrystalline glass product according to any of claims 1-10, wherein the method comprises the following steps: forming a matrix glass, forming the matrix glass into a microcrystalline glass through a crystallization process, and then forming the microcrystalline glass into a microcrystalline glass product through a chemical strengthening process.

30. The manufacturing method for the microcrystalline glass product according to claim 29, wherein the crystallization process comprises mask exposure treatment on the matrix glass, followed by crystallization heat treatment, the mask exposure treatment comprises exposing a specific position or region of the matrix glass to ultraviolet light, the ultraviolet light is preferably at a wavelength of 313nm, and exposure time is preferably 5-60 minutes.

31. The manufacturing method for the microcrystalline glass product according to claim 30, wherein the crystallization heat treatment is conducted in two stages, and the two-stage crystallization heat treatment comprises: performing nucleation process treatment under a first temperature, and then performing crystal growth process treatment under a second temperature that is higher than a nucleation process temperature, wherein the first temperature is preferably 490°C-520°C, treatment time under the first temperature is preferably 1-4 hours, the second temperature is preferably 540°C-620°C, and treatment time under the second temperature is preferably 1-8 hours.

32. The manufacturing method for the microcrystalline glass product according to claim 29, wherein the chemical strengthening process comprises: immersing the microcrystalline glass into a salt bath of molten Na salt, and/or K salt, and/or Na-K mixed salt at a temperature of 350°C-470°C for about 1-36 hours, wherein the temperature is preferably 380°C-460°C, and the time is preferably 2-24 hours.

33. A manufacturing method for the microcrystalline glass according to any of claims 11-19, wherein the method comprises the following steps: forming a matrix glass, and then forming the matrix glass into a microcrystalline glass through a crystallization process.

34. The manufacturing method for the microcrystalline glass according to claim 33, wherein the crystallization process comprises mask exposure treatment on the matrix glass, followed by crystallization heat treatment, the mask exposure treatment comprises exposing a specific position or region of the matrix glass to ultraviolet light, the ultraviolet light is preferably at a wavelength of 313nm, and exposure time is preferably 5-60 minutes.

35. The manufacturing method for the microcrystalline glass according to claim 34, wherein the crystallization heat treatment is conducted in two stages, and the two-stage crystallization heat treatment comprises: performing nucleation process treatment under a first temperature, and then performing crystal growth process treatment under a second temperature that is higher than a nucleation process temperature, wherein the first temperature is preferably 490°C-520°C, treatment time under the first temperature is preferably 1-4 hours, the second temperature is preferably 540°C-620°C, and treatment time under the second temperature is preferably 1-8 hours.

## INTERNATIONAL SEARCH REPORT

| International application No. |
|---|
| **PCT/CN2024/097994** |

**A. CLASSIFICATION OF SUBJECT MATTER**

C03C4/04(2006.01)i; C03C10/04(2006.01)i; C03C3/083(2006.01)i; C03B27/03(2006.01)n

According to International Patent Classification (IPC) or to both national classification and IPC

**B. FIELDS SEARCHED**

Minimum documentation searched (classification system followed by classification symbols)

IPC: C03B, C03C

Documentation searched other than minimum documentation to the extent that such documents are included in the fields searched

Electronic data base consulted during the international search (name of data base and, where practicable, search terms used)

ENTXT, EXTXTC, VEN, CNTXT, CNABS, ISI, CNKI: 玻璃, 微晶, 玻璃陶瓷, 晶化, 氧化银, 氧化铈, 氧化锆, 硅酸锂, 光敏, 曝光, 紫外光, 照射, glass, microcrystalline, glass ceramic, crystallized, silver oxide, Ag2O, CeO2, cerium oxide, zirconium oxide, ZrO2, lithium silicate, photo-sensitive, exposure, ultraviolet light, UV, irradiation

**C. DOCUMENTS CONSIDERED TO BE RELEVANT**

| Category* | Citation of document, with indication, where appropriate, of the relevant passages | Relevant to claim No. |
|---|---|---|
| X | CN 207891242 U (NANCHANG OFILM OPTICAL TECHNOLOGY CO., LTD.) 21 September 2018 (2018-09-21) <br> claims 1-10, and description, paragraphs 0023-0073 | 1-35 |
| X | CN 109896729 A (NANCHANG OFILM OPTICAL TECHNOLOGY CO., LTD.) 18 June 2019 (2019-06-18) <br> claims 1-10, and description, paragraphs 0039-0085 | 1-35 |
| X | CN 117480137 A (AGC INC.) 30 January 2024 (2024-01-30) <br> claims 1-18, and description, paragraphs 0076-0131 | 1-35 |
| X | US 2006171033 A1 (SCHOTT AG) 03 August 2006 (2006-08-03) <br> claims 1-60 | 1-35 |
| A | CN 111718120 A (UNIVERSITY OF ELECTRONIC SCIENCE AND TECHNOLOGY OF CHINA et al.) 29 September 2020 (2020-09-29) <br> entire document | 1-35 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **11 December 2024** | **01 January 2025** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/097994** |

### C. DOCUMENTS CONSIDERED TO BE RELEVANT

| Category* | Citation of document, with indication, where appropriate, of the relevant passages | Relevant to claim No. |
|---|---|---|
| A | CN 112839910 A (SCHOTT GLASS TECHNOLOGIES (SUZHOU) CO., LTD.) 25 May 2021 (2021-05-25) <br> entire document | 1-35 |
| A | CN 114873918 A (CDGM GLASS CO., LTD.) 09 August 2022 (2022-08-09) <br> entire document | 1-35 |
| A | CN 116406106 A (HUAWEI TECHNOLOGIES CO., LTD.) 07 July 2023 (2023-07-07) <br> entire document | 1-35 |
| A | CN 116750974 A (BEIHANG UNIVERSITY) 15 September 2023 (2023-09-15) <br> entire document | 1-35 |
| A | CN 117550810 A (HEBEI MEIKE MICROCRYSTALLINE MATERIAL CO., LTD.) 13 February 2024 (2024-02-13) <br> entire document | 1-30 |

Form PCT/ISA/210 (second sheet) (July 2022)

## INTERNATIONAL SEARCH REPORT
### Information on patent family members

International application No.

**PCT/CN2024/097994**

| Patent document cited in search report | | | Publication date (day/month/year) | Patent family member(s) | | | Publication date (day/month/year) |
|---|---|---|---|---|---|---|---|
| CN | 207891242 | U | 21 September 2018 | None | | | |
| CN | 109896729 | A | 18 June 2019 | None | | | |
| CN | 117480137 | A | 30 January 2024 | DE | 112022001963 | T5 | 15 February 2024 |
| | | | | JPWO | 2022255196 | A1 | 08 December 2022 |
| | | | | US | 2024101467 | A1 | 28 March 2024 |
| | | | | WO | 2022255196 | A1 | 08 December 2022 |
| | | | | TW | 202248000 | A | 16 December 2022 |
| US | 2006171033 | A1 | 03 August 2006 | DE | 102005003594 | A1 | 20 July 2006 |
| | | | | DE | 102005003594 | B4 | 18 February 2016 |
| | | | | US | 8062753 | B2 | 22 November 2011 |
| CN | 111718120 | A | 29 September 2020 | None | | | |
| CN | 112839910 | A | 25 May 2021 | None | | | |
| CN | 114873918 | A | 09 August 2022 | None | | | |
| CN | 116406106 | A | 07 July 2023 | None | | | |
| CN | 116750974 | A | 15 September 2023 | None | | | |
| CN | 117550810 | A | 13 February 2024 | None | | | |

Form PCT/ISA/210 (patent family annex) (July 2022)